(19) Europäisches Patentamt / European Patent Office / Office européen des brevets

(11) EP 2 905 084 B1

(12) # EUROPEAN PATENT SPECIFICATION

(45) Date of publication and mention of the grant of the patent: **30.08.2017 Bulletin 2017/35**

(21) Application number: **13844296.7**

(22) Date of filing: **30.09.2013**

(51) Int Cl.:
***B05D 1/36*** *(2006.01)*
***B05D 7/24*** *(2006.01)*
***C08G 18/80*** *(2006.01)*
***C09D 5/00*** *(2006.01)*
***C09D 133/14*** *(2006.01)*
***C09D 151/08*** *(2006.01)*
***C09D 167/06*** *(2006.01)*
***C09D 175/06*** *(2006.01)*
***C08G 18/63*** *(2006.01)*

(86) International application number: **PCT/JP2013/076586**

(87) International publication number: **WO 2014/054593 (10.04.2014 Gazette 2014/15)**

(54) **PROCESS FOR FORMING MULTILAYER COATING FILM**

VERFAHREN ZUR BILDUNG EINES MEHRSCHICHTIGEN BESCHICHTUNGSFILMS

PROCÉDÉ DE FORMATION D’UN FILM DE REVÊTEMENT MULTICOUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.10.2012 JP 2012219561**

(43) Date of publication of application: **12.08.2015 Bulletin 2015/33**

(73) Proprietor: **KANSAI PAINT CO., LTD.**
**Amagasaki-shi, Hyogo 661-8555 (JP)**

(72) Inventor: **ISHIKURA, Minoru**
**Hiratsuka-shi**
**Kanagawa 254-8562 (JP)**

(74) Representative: **Müller-Boré & Partner Patentanwälte PartG mbB**
**Friedenheimer Brücke 21**
**80639 München (DE)**

(56) References cited:
**EP-A1- 1 030 871**
**WO-A1-2012/137884**
**WO-A1-2013/151143**
**JP-A- 2001 521 956**
**JP-A- 2004 025 046**
**JP-A- 2004 043 524**
**JP-A- 2011 530 393**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 905 084 B1

**Description**

Technical Field

Cross Reference to Related Art

This application claims priority to Japanese Patent Application No. 2012-219561 filed on October 1, 2012, the disclosure of which is incorporated herein by reference in its entirety.

The present invention provides a method for forming a multilayer coating film that has excellent appearance and coating film performance, by successively applying aqueous coating compositions.

Background Art

As methods for forming coating films on automobile bodies, a 3-coat 2-bake process and a 2-coat 2-bake process have been widely used. The 3-coat 2-bake process comprises the following steps in order: after subjecting a substrate to electrodeposition coating and curing by heating, application of an intermediate coating composition → curing by heating → application of a base coating composition → preheating (preliminary heating → application of a clear coating composition → curing by heating. The 2-coat 2-bake process comprises the following steps in order: after subjecting a substrate to electrodeposition coating and curing by heating, application of an intermediate coating composition → curing by heating → application of a top coating composition → curing by heating.

Generally, the 3-coat 2-bake process is used for forming a coating film of a so-called metallic color by using a base coating composition comprising an effect pigment, whereas the 2-coat 2-bake process is used for forming a coating film of a so-called solid color, such as white or black, by using a top coating composition comprising a color pigment.

However, in recent years, for the purpose of saving energy, consideration has been given to omission of the heat-curing step that is performed after applying the intermediate coating composition, and research has been conducted on a 3-coat 1-bake process comprising the following steps in order: application of an intermediate coating composition → preheating (preliminary heating) → application of a base coating composition → preheating (preliminary heating) → application of a clear coating composition → curing by heating, and on a 2-coat 1-bake process comprising the following steps in order: application of an intermediate coating composition → preheating (preliminary heating) → application of a top coating composition → curing by heating. From the viewpoint of minimizing environmental pollution caused by volatilization of organic solvents, particular demand exists for a 3-coat 1-bake process or a 2-coat 1-bake process using aqueous coating compositions as the intermediate coating composition, base coating composition, and top coating composition.

However, in the 3-coat 1-bake process using an aqueous intermediate coating composition and an aqueous base coating composition, and in the 2-coat 1-bake process using an aqueous intermediate coating composition and an aqueous top coating composition, the resulting coating film may have insufficient water resistance due to the use of a water-soluble or water-dispersible resin in the coating composition, as well as insufficient smoothness and distinctness of image due to the formation of a mixed layer between the aqueous intermediate coating composition and the aqueous base coating composition, or between the aqueous intermediate coating composition and the aqueous top coating composition. These have been problems that require solutions.

In addition, a heat-curable coating composition is generally known to cause a phenomenon called as "popping" in the resulting cured coating film when the temperature is drastically increased in the heating and curing step. Such popping consists of foam-like coating defects on the coating film surface. The solvent remaining inside the coating film evaporates rapidly during heating and curing to form air bubbles in the coating film while the resin components in the coating film simultaneously solidify, thus causing the portions containing air bubbles to appear as foam-like defects. This popping is also known simply as "pinholes."

Popping occurs because the solvent in the coating film rapidly evaporates during heating and curing. Accordingly, popping is usually ameliorated by using an organic solvent with a relatively high boiling point as the solvent in the coating composition to slow the evaporation rate of the solvent. However, since the aqueous coating composition contains water as the main component of the solvent, and the amount of the organic solvent with a relatively high boiling point is limited, popping tends to occur more readily than with solvent-type coating compositions.

In particular, in the 3-coat 1-bake process using an aqueous intermediate coating composition and an aqueous base coating composition, and the 2-coat 1-bake process using an aqueous intermediate coating composition and an aqueous top coating composition, because the heating and curing step after application of the intermediate coating composition is omitted, and relatively thickly applied coating films are simultaneously cured by heating, popping is likely to occur, which has also been a problem that requires a solution.

For example, Patent Literature 1 discloses that in a coating film-forming method comprising successively forming on a base material, an intermediate coating film, a base coating film, and a clear coating film by a wet-on-wet process,

when an intermediate coating composition for forming the intermediate coating film and a base coating composition for forming the base coating film comprise an amide group-containing acrylic resin and a curing agent, and the curing agent contained in the intermediate coating composition comprises an aliphatic isocyanate active methylene blocked isocyanate, and the aliphatic isocyanate active methylene blocked isocyanate has an average functionality of more than 3, the amide group-containing acrylic resin exerts a viscosity-controlling effect, and bleeding or inversion at the interfaces between each of the coating layers can be controlled. Further, the use of an aliphatic isocyanate active methylene blocked isocyanate that has excellent low-temperature curability as the curing agent initiates curing of the intermediate coating film earlier than curing of the base coating film and the clear coating film, and also secures sufficient flowability, thus providing excellent substrate hiding power for hiding the surface roughness of an electrodeposition coating film, and thus providing a multilayer coating film with excellent finish appearance and excellent coating film properties, particularly excellent chipping resistance.

On the other hand, when a polyester resin having a low molecular weight is used as a resin for forming a coating film, the resulting coating composition generally easily flows, thus producing a coating film having excellent smoothness on a horizontal plane; conversely, sagging easily occurs and smoothness is easily decreased on a vertical plane. In particular, in a 3-coat 1-bake process in which three layers of uncured coating films are applied one on top of the other, when a polyester resin having a low molecular weight was used in the aqueous intermediate coating composition of the undermost layer, sagging occurred because of the weight of the upper uncured coating films, and consequently, the smoothness of the resulting coating film was often decreased. Furthermore, when the polyester resin having a low molecular weight was used as a resin for forming a coating film, the film performance, such as adhesion after water immersion and chipping resistance, of the resulting coating film was often reduced.

Patent Literature 2 discloses that in a method for forming a coating film according to a 3-coat 1-bake process wherein an aqueous intermediate coating composition, an aqueous base coating composition, and a clear coating composition are sequentially applied, and the resulting three coating film layers are simultaneously cured by heating, the aqueous intermediate coating composition that includes as resin components a specific hydroxy- or carboxy-containing polyester resin, a specific melamine resin, and a polycarbodiimide compound (C), can form a network structure having a high crosslinking density and relatively uniform crosslinking points, thus forming a coating film in which sagging hardly occurs and smoothness, adhesion after water immersion, and chipping resistance are excellent.

Citation List

Patent Literature

PTL 1: JP2002-153806A
PTL 2: WO2010/047352

Summary of Invention

Technical Problem

However, in the multilayer coating film-forming method disclosed in Patent Literature (PTL) 1, the use of aqueous coating compositions as the intermediate coating composition and base coating composition may result in reduced smoothness and distinctness of image of the resulting multilayer coating film due to the formation of a mixed layer between the layers of the intermediate and base coating compositions, or the resulting multilayer coating film may have insufficient water resistance. The resulting multilayer coating film also has occasional popping.

Although the method for forming a multilayer coating film of Patent Literature (PTL) 2 can increase the crosslinking density, deformation due to volume contraction during curing increases, sometimes causing problems regarding adhesion to the substrate, and finish appearance of the coating film. Further, the coating composition of Patent Literature 2 sometimes exhibits poor adhesion when used to form a multilayer coating film after being stored for a fixed period of time.

Accordingly, an object of the present invention is to provide a method for forming a multilayer coating film by successively applying aqueous coating compositions, the multilayer coating film having excellent smoothness, distinctness of image, popping resistance, water resistance, and adhesion; moreover, the multilayer coating film has excellent water resistance and adhesion, even when the coating compositions are applied after being stored for a fixed period of time. Another object of the present invention is to provide an article coated by the method for forming a multilayer coating film.

Solution to Problem

To attain the above objects, the present inventors conducted extensive research. As a result, they found that the above objects can be attained by using an aqueous coating composition comprising an acrylic modified polyester resin and a blocked polyisocyanate compound having a specific structure as an aqueous coating composition that is first applied and positioned as the under layer, when aqueous coating compositions are successively applied.

Thus, the method for forming a multilayer coating film of the present invention is as defined in Item 1:

Item 1. A method for forming a multilayer coating film comprising the following steps in this order:

(1) applying an aqueous first colored coating composition (X) to a substrate to form a first colored coating film thereon;
(2) applying an aqueous second colored coating composition (Y) to the uncured first colored coating film formed in step (1) to form a second colored coating film thereon;
(3) applying a clear coating composition (Z) to the uncured second colored coating film formed in step (2) to form a clear coating film thereon; and
(4) heating to simultaneously cure the uncured first colored coating film, uncured second colored coating film, and uncured clear coating film formed in steps (1) to (3),
the aqueous first colored coating composition (X) comprising an acrylic modified polyester resin (A) and a blocked polyisocyanate compound (B) having at least one blocked isocyanate group selected from the group consisting of:

a blocked isocyanate group represented by formula (I)

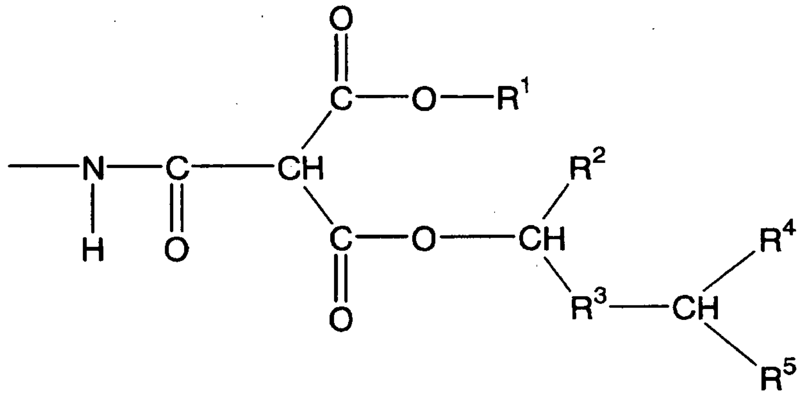

(I)

(wherein $R^1$, $R^2$, $R^4$, and $R^5$ independently represent a $C_{1-12}$ hydrocarbon group, and $R^3$ represents a $C_{1-12}$ linear or branched alkylene group);
a blocked isocyanate group represented by formula (II)

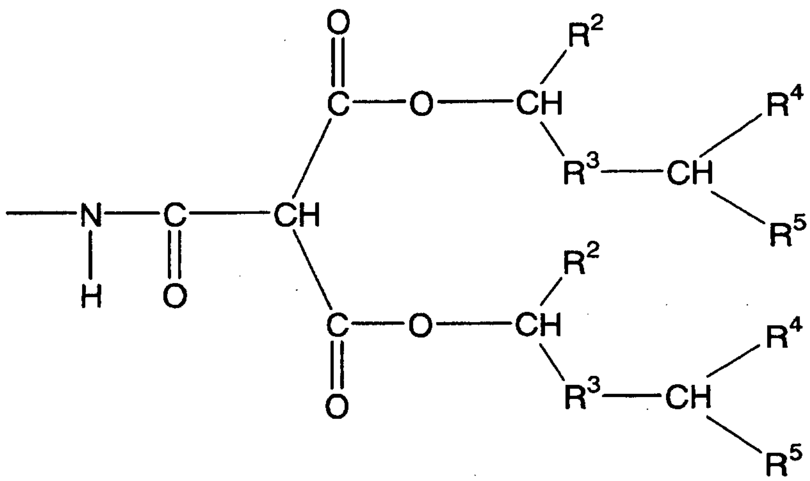

(II)

(wherein $R^2$, $R^3$, $R^4$, and $R^5$ are the same as above) ; and a blocked isocyanate group represented by formula (III)

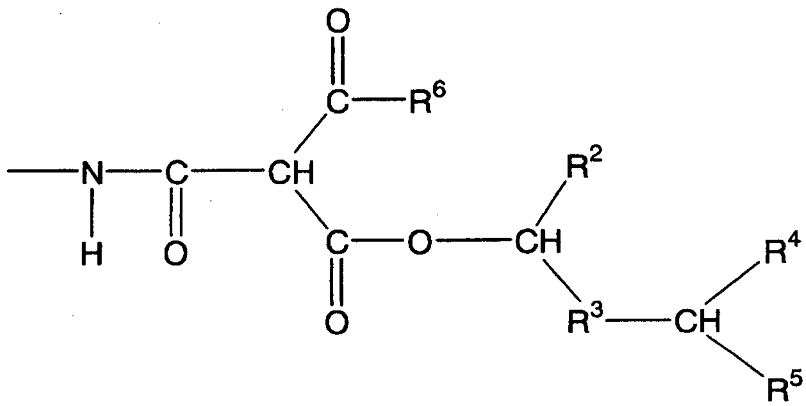

(III)

(wherein $R^2$, $R^3$, $R^4$, and $R^5$ are the same as above, and $R^6$ represents a $C_{1-12}$ hydrocarbon group). The present invention also provides the following items.

Item 2. The method for forming a multilayer coating film according to Item 1, wherein $R^1$ in formula (I) is an isopropyl group.

Item 3. The method for forming a multilayer coating film according to Item 1 or 2, wherein $R^6$ in formula (III) is an isopropyl group.

Item 4. The method for forming a multilayer coating film according to Item 1 or 2, wherein the blocked polyisocyanate compound (B) is obtained by reacting a blocked polyisocyanate compound (b3-1) having a blocked isocyanate group represented by formula (IV)

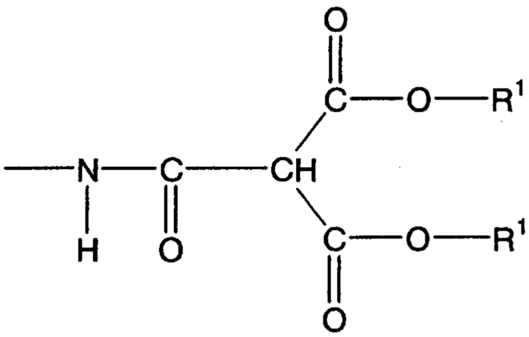

(IV)

(wherein $R^1$ is as defined above, and each $R^1$ may be the same or different) with a secondary alcohol (b4) represented by formula (VI)

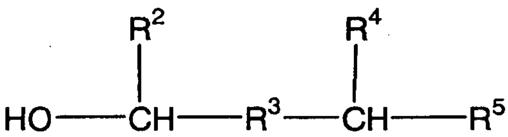

(VI)

(wherein $R^2$, $R^3$ , $R^4$, and $R^5$ are the same as above).

Item 5. The method for forming a multilayer coating film according to Item 1 or 3, wherein the blocked polyisocyanate compound (B) is obtained by reacting a blocked polyisocyanate compound (b3-2) having a blocked isocyanate group represented by formula (V)

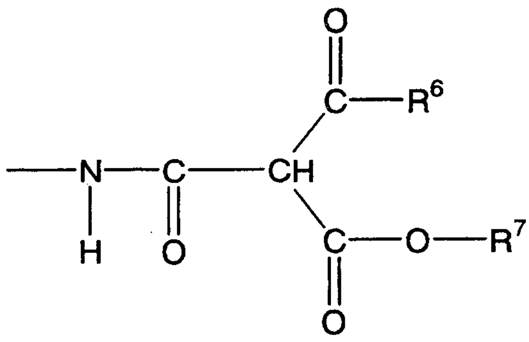

(V)

(wherein $R^6$ is the same as the above, and $R^7$ is a $C_{1-12}$ hydrocarbon group) with the secondary alcohol (b4).

Item 6. The method for forming a multilayer coating film according to any of Items 1 to 5, wherein the blocked polyisocyanate compound (B) is a blocked polyisocyanate compound (B') having a hydrophilic group.

Item 7. The method for forming a multilayer coating film according to any one of Items 1 to 6, wherein the aqueous first colored coating composition (X) further includes a hydroxy-containing acrylic resin (C).

Item 8. The method for forming a multilayer coating film according to any one of Items 1 to 7, wherein the proportions of the acrylic modified polyester resin (A), blocked polyisocyanate compound (B), and hydroxy-containing acrylic resin (C) are 10 to 60 parts by mass of the acrylic modified polyester resin (A), 5 to 40 parts by mass of the blocked polyisocyanate compound (B), and 0 to 50 parts by mass of the hydroxy-containing acrylic resin (C) based on 100 parts by mass of the total resin solids of the aqueous first colored coating composition (X).

Item 9. An article comprising a multilayer coating film formed by the method according to any one of Items 1 to 8.

## Advantageous Effects of Invention

By using as an aqueous first colored coating composition (X), an aqueous coating composition comprising an acrylic modified polyester resin (A) and a blocked polyisocyanate compound (B) with a specific structure, the method for forming the multilayer coating film of the present invention can form a multilayer coating film with excellent smoothness, distinctness of image, popping resistance, water resistance, and adhesion; moreover, the multilayer coating film has excellent water resistance and adhesion, even when the coating composition is applied after being stored for a fixed period of time.

## Description of Embodiments

The method for forming a multilayer coating film of the present invention is explained in detail below.

### Step (1)

According to the method for forming a multilayer coating film of the present invention (sometimes abbreviated as the "present method"), an aqueous first colored coating composition (X) comprising (A) an acrylic modified polyester resin (A), and a blocked polyisocyanate compound (B) having at least one blocked isocyanate group selected from the group consisting of:

a blocked isocyanate group represented by formula (I)

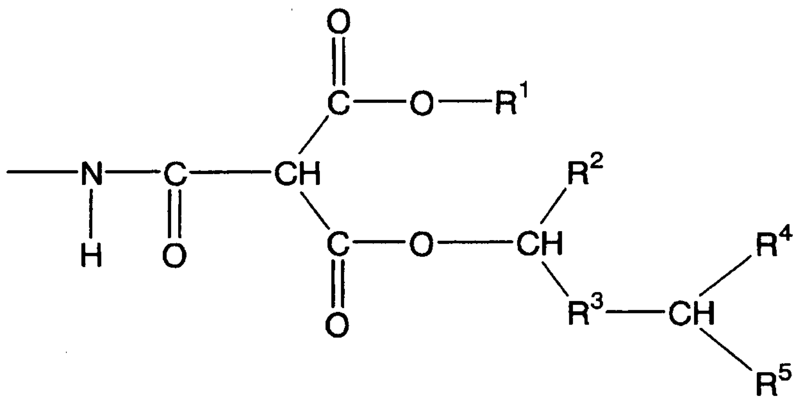

(I)

(wherein $R^1$, $R^2$, $R^4$, and $R^5$ independently represent a $C_{1-12}$ hydrocarbon group, and $R^3$ represents a $C_{1-12}$ linear or branched alkylene group);
a blocked isocyanate group represented by formula (II)

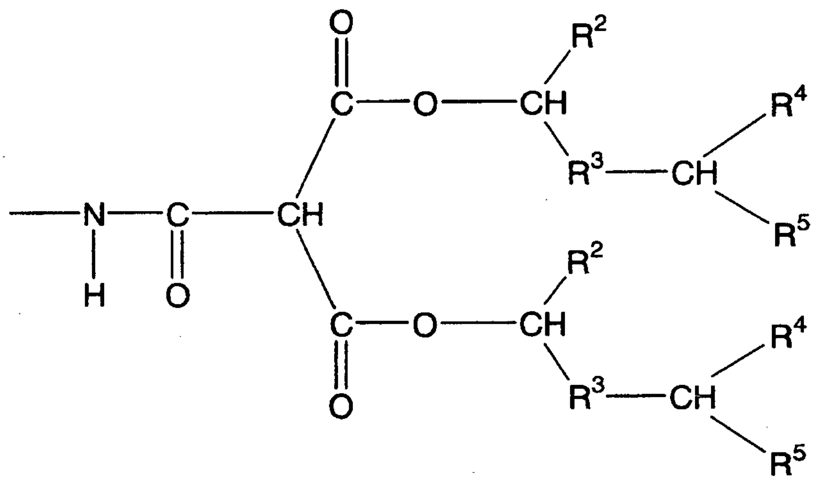

(II)

(wherein $R^2$, $R^3$, $R^4$, and $R^5$ are the same as above) ; and
a blocked isocyanate group represented by formula (III)

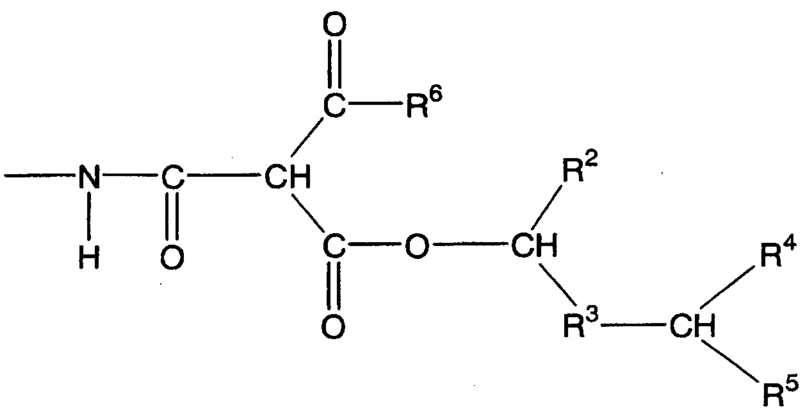

(III)

(wherein $R^2$, $R^3$, $R^4$, and $R^5$ are the same as above, and $R^6$ represents a $C_{1-12}$ hydrocarbon group) is applied to.a substrate.

Substrate

The substrate used in the method of the present invention is not particularly limited. Examples of the substrate include exterior panel parts of automotive bodies such as passenger cars, tracks, motorcycles, and buses; automotive components such as bumpers; exterior panel parts of household electric appliances such as cellular phones and audiovisual apparatus; and the like. Among these, the exterior panel parts of automotive bodies and automotive components are preferable.

The materials for such substrates are not particularly limited. Examples thereof include metallic materials such as iron, aluminium, brass, copper, tin plate, stainless steel, galvanized steel, steels plated with zinc alloy (Zn-Al, Zn-Ni, Zn-Fe, etc.); plastic materials such as polyethylene resins, polypropylene resins, acrylonitrile-butadiene-styrene (ABS) resins, polyamide resins, acrylic resins, vinylidene chloride resins, polycarbonate resins, polyurethane resins, epoxy resins, and like resins, and various types of FRP; inorganic materials such as glass, cement, and concrete; wood; textile materials such as paper and cloth; and the like. Among these, metallic materials and plastic materials are preferable.

The substrate may be a metal material as mentioned above or a metal body formed therefrom, such as a vehicle body, which may be subjected to a surface treatment, such as phosphate treatment, chromate treatment, or composite oxide treatment, and which may be further coated thereon.

Examples of the substrate having a coating film formed thereon include base materials whose surface is optionally treated and which have an undercoating film formed thereon. In particular, vehicle bodies having an undercoating film formed thereon using an electrodeposition coating composition are preferable, and those having an undercoating film formed thereon using a cationic electrodeposition coating composition are particularly preferable.

The substrate may be a plastic material as mentioned above or a plastic member formed therefrom, such as an automotive component, which may have been surface-treated or coated with a primer, etc., as required. The substrate may be a combination of the plastic and metallic materials mentioned above.

Acrylic modified polyester resin (A)

As the acrylic modified polyester resin, acrylic modified polyester resins obtained by any known method can be used. Examples of known methods include a method of polymerizing a mixture of radical polymerizable unsaturated group-containing polyester resin and a polymerizable unsaturated monomer, and a method of using a resin ester reaction between polyester resin and acryl resin.

The method of polymerizing a mixture of radical polymerizable unsaturated group-containing polyester resin and a polymerizable unsaturated monomer to obtain an acryl modified polyester resin (A) is a method in which a polymerizable unsaturated monomer is polymerized using a radical polymerizable unsaturated group in the polyester resin as a graft point to modify the polyester resin with acryl. Although the method of obtaining the radical polymerizable unsaturated group-containing polyester resin is not particularly limited, it is possible to react an acid anhydride-containing unsaturated monomer with a terminal hydroxy group after the production of polyester resin by a known method so that the terminal of the polyester resin has a graft point; it is also possible to perform an esterification reaction or transesterification reaction of an acid component containing a polybasic acid having a polymerizable unsaturated group with an alcohol component, thus producing a radical polymerizable unsaturated group-containing polyester resin. In view of smoothness, distinctness of image, adhesion, and water resistance of the resulting multilayer coating film, the latter method, i.e., the method of an esterification reaction or transesterification reaction of an acid component containing a polybasic acid having a polymerizable unsaturated group with an alcohol component is preferable. In view of smoothness, distinctness of image, adhesion, and water resistance of the resulting multilayer coating film, it is particularly preferable to use an acid component containing an acid anhydride group-containing unsaturated monomer as a polybasic acid containing a polymerizable unsaturated group.

An unsaturated monomer as used herein refers to a monomer having one or more (e.g., one to four, or one) polymerizable unsaturated groups. The polymerizable unsaturated group refers to an unsaturated group that can undergo radical polymerization. Examples of the polymerizable unsaturated group include monovalent radicals such as vinyl, (meth)acryloyl, (meth)acrylamide, vinyl ether, and allyl; and the divalent radicals shown below:

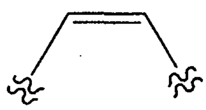 , 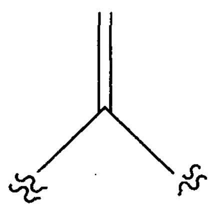 , 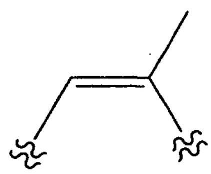

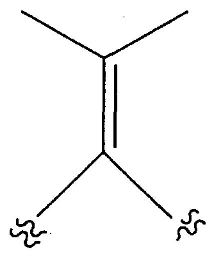 , 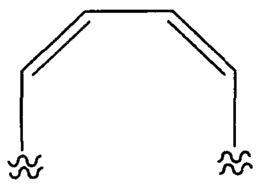 , 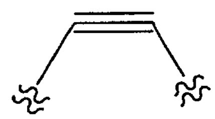

However, the double bond constituting an aromatic ring is not included in the polymerizable unsaturated group.

Herein, examples of the polybasic acid having a polymerizable unsaturated group include compounds having two or more (preferably two) acids per molecule, and one radical polymerizable unsaturated group. Examples of the polybasic acid having a polymerizable unsaturated group include unsaturated dicarboxylic acids such as maleic acid, itaconic acid, fumaric acid, citraconic acid, mesaconic acid, tetrahydrophthalic acid, 2-pentenedioic acid, methylenesuccinic acid, allylmalonic acid, isopropylidene succinic acid, 2,4-hexadienedioic acid, acetylene dicarboxylic acid, 4-cyclohexene-1,2-dicarboxylic acid, and anhydrides of these acids.

The acid anhydride group-containing unsaturated monomer is a compound having one acid anhydride group and one radical polymerizable unsaturated group per molecule. Specific examples of the unsaturated dicarboxylic acid anhydride include maleic anhydride, itaconic anhydride, citraconic anhydride, tetrahydrophthalic anhydride, 2-pentenedioic anhydride, methylene succinic anhydride, allylmoronic acid anhydride, isopropylidene succinic anhydride, 2,4-hexadienoic diacid anhydride, acetylene dicarboxylic anhydride, 4-cyclohexene-1,2-dicarboxylic anhydride, and the like. In view of smoothness, distinctness of image, adhesion, and water resistance, maleic anhydride is preferable.

Examples of the acid components other than the acid anhydride-containing unsaturated monomers include aliphatic polybasic acids, alicyclic polybasic acids, and aromatic polybasic acids.

Generally, aliphatic polybasic acids include aliphatic compounds having at least two carboxy groups per molecule; anhydrides of such aliphatic compounds; and esters of such aliphatic compounds. Examples of aliphatic polybasic acids include succinic acid, glutaric acid, adipic acid, pimelic acid, suberic acid, azelaic acid, sebacic acid, undecanedioic acid, dodecanedioic acid, brassylic acid, octadecanedioic acid, citric acid, butanetetracarboxylic acid, and like aliphatic polycarboxylic acids; acid anhydrides of such aliphatic polycarboxylic acids; esters of such aliphatic polycarboxylic acids with lower alkyls having about 1 to 4 carbon atoms; and the like. Such aliphatic polybasic acids can be used singly, or in a combination of two or more.

In view of smoothness of the resulting coating film, it is particularly preferable to use adipic acid and/or adipic anhydride as the aliphatic polybasic acid.

Generally, alicyclic polybasic acids include compounds having at least one alicyclic structure and at least two carboxy groups per molecule; acid anhydrides of such compounds; and esters of such compounds. The alicyclic structure is typically a 4-6 membered ring structure. Examples of alicyclic polybasic acids include 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid, 1,3,5-cyclohexanetricarboxylic acid, and like alicyclic polycarboxylic acids; anhydrides of such alicyclic polycarboxylic acids; esters of such alicyclic polycarboxylic acids with lower alkyls having about 1 to 4 carbon atoms; and the like. Such alicyclic polybasic acids can be used singly, or in a combination of two or more.

In view of smoothness of the resulting coating film, preferable alicyclic polybasic acids include 1,2-cyclohexanedicarboxylic acid, 1,2-cyclohexanedicarboxylic acid anhydride, 1,3-cyclohexanedicarboxylic acid, 1,4-cyclohexanedicarboxylic acid, and 4-cyclohexene-1,2-dicarboxylic acid. It is particularly preferable to use 1,2-cyclohexanedicarboxylic acid and/or 1,2-cyclohexanedicarboxylic acid anhydride.

Generally, aromatic polybasic acids include aromatic compounds having at least two carboxy groups per molecule; and esters of such aromatic compounds. Examples of aromatic polybasic acids include phthalic acid, isophthalic acid, terephthalic acid, naphthalenedicarboxylic acid, 4,4'-biphenyldicarboxylic acid, trimellitic acid, pyromellitic acid, and like aromatic polycarboxylic acids; esters of such aromatic polycarboxylic acids with lower alkyls having about 1 to 4 carbon atoms; and the like. Such aromatic polybasic acids can be used singly, or in a combination of two or more.

Preferable aromatic polybasic acids include phthalic acid, isophthalic acid, and trimellitic acid.

Acid components other than the aliphatic polybasic acids, alicyclic polybasic acids, and aromatic polybasic acids can also be used. Such other acid components are not particularly limited, and include, for example, coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, safflower oil fatty acid, and like fatty acids; lauric acid, myristic acid, palmitic acid, stearic acid, oleic acid, linoleic acid, linolenic acid, benzoic acid, *p-tert*-butyl benzoic acid, cyclohexanoic acid, 10-phenyloctadecanoic acid, and like monocarboxylic acids; lactic acid, 3-hydroxybutanoic acid, 3-hydroxy-4-ethoxybenzoic acid, and like hydroxycarboxylic acids; and the like. Such acid components can be used singly, or in a combination of two or more.

Polyhydric alcohols having at least two hydroxy groups per molecule can be preferably used as the alcohol component. Examples of such polyhydric alcohols include dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxy pivalic acid neopentyl glycol ester, hydrogenated bisphenol A, hydrogenated bisphenol F, and dimethylolpropionic acid; polylactone diols obtained by adding lactone compounds, such as ε-caprolactone, to such dihydric alcohols; ester diol compounds such as bis(hydroxyethyl) terephthalate; polyether diol compounds such as alkylene oxide adducts of bisphenol A, polyethylene glycols, polypropylene glycols, and polybutylene glycols; trihydric or higher polyhydric alcohols such as glycerol, trimethylolethane, trimethylolpropane, diglycerol, triglycerol, 1,2,6-hexanetriol, pentaerythritol, dipentaerythritol, tris(2-hydroxyethyl)isocyanuric acid, sorbitol, and mannitol; polylactone polyol compounds obtained by adding lactone compounds, such as ε-caprolactone, to such trihydric or higher polyhydric alcohols; glycerin fatty acid esters; and the like.

Alcohol components other than polyhydric alcohols can also be used. Such other alcohol components are not particularly limited and include, for example, monohydric alcohols such as methanol, ethanol, propyl alcohol, butyl alcohol, stearyl alcohol, and 2-phenoxyethanol; alcohol compounds obtained by reacting monoepoxy compounds with acids, such as propylene oxide, butylene oxide, and "Cardura E10" (trade name, produced by Hexion Specialty Chemicals; glycidyl ester of a synthetic highly branched saturated fatty acid); and the like.

As another method for obtaining a radical polymerizable unsaturated group-containing polyester resin, a method in which an unsaturated fatty acid, such as oleic acid and myristic acid, is used as one of the acid components can be used. Such a method uses a radical polymerizable unsaturated group of unsaturated fatty acid as a graft point.

In view of excellent smoothness and water resistance of the resulting coating film, the acrylic modified polyester resin (A) is preferably such that the amount of the alicyclic polybasic acid in the acid components, which are the starting material for the polyester portion, is 20 to 100 mol%, more preferably 25 to 95 mol%, and even more preferably 30 to 90 mol% based on the total amount of the acid components. In particular, in view of smoothness of the resulting coating film, the alicyclic polybasic acid is preferably 1,2-cyclohexanedicarboxylic acid and/or 1,2-cyclohexanedicarboxylic acid anhydride.

The method for producing the radical polymerizable unsaturated group-containing polyester resin is not particularly limited, and may be performed by any usual method. For example, the acid component and the alcohol component can be heated in a nitrogen stream at 150 to 250°C for 5 to 10 hours to carry out an esterification reaction or transesterification reaction of the acid component with the alcohol component, thus providing a radical polymerizable unsaturated group-containing polyester resin.

For the esterification reaction or transesterification reaction, the acid component and the alcohol component may be added to a reaction vessel at one time, or one or both of the components may be added in several portions or successively. Alternatively, a radical polymerizable unsaturated group-containing polyester resin may be first synthesized and then reacted for half-esterification to obtain a radical polymerizable unsaturated group-, carboxy-, and hydroxy-containing polyester resin. Further alternatively, a radical polymerizable unsaturated group- and carboxy-containing polyester resin may first be synthesized, and an alcohol component as mentioned above may be added to obtain a radical polymerizable unsaturated group-, carboxy-, and hydroxy-containing polyester resin.

As a catalyst for promoting the esterification or transesterification reaction, known catalysts are usable. Examples thereof include dibutyltin oxide, antimony trioxide, zinc acetate, manganese acetate, cobalt acetate, calcium acetate, lead acetate, tetrabutyl titanate, tetraisopropyl titanate, and the like.

The radical polymerizable unsaturated group-containing polyester resin can be modified with a fatty acid, an oil, a monoepoxy compound, a polyisocyanate compound, or the like, during or after the preparation of the resin.

Examples of the fatty acid include coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, and safflower oil fatty acid. Examples of the oil include fatty acid oils of these fatty acids. Preferable examples of the monoepoxy compound include "Cardura E10" (trade name, produced by Hexion Specialty Chemicals; glycidyl ester of a synthetic highly branched saturated fatty acid).

Examples of the polyisocyanate compound include aliphatic diisocyanate compounds such as lysine diisocyanate, hexamethylene diisocyanate, and trimethylhexane diisocyanate; alicyclic diisocyanate compounds such as hydrogenated xylylene diisocyanate, isophorone diisocyanate, methylcyclohexane-2,4-diisocyanate, methylcyclohexane-2,6-diisocyanate, 4,4'-methylene bis(cyclohexylisocyanate), and 1,3-(isocyanatomethyl)cyclohexane; aromatic diisocyanate compounds such as tolylene diisocyanate, xylylene diisocyanate, and diphenylmethane diisocyanate; organic polyisocyanates such as lysine triisocyanate and like tri- or higher polyisocyanates; adducts of such organic polyisocyanates with polyhydric alcohols, low-molecular-weight polyester resins, water, etc.; cyclopolymers (e.g., isocyanurate) and biuret adducts of such organic polyisocyanates; and the like. Such polyisocyanate compounds can be used singly, or in a combination of two or more.

Examples of the polymerizable unsaturated monomers polymerized by mixing with the thus-obtained radical polymerizable unsaturated group-containing polyester resin include the following monomers (i) to (xx). These polymerizable unsaturated monomers can be used singly, or in a combination of two or more.

(i) Alkyl or cycloalkyl (meth)acrylates, such as methyl (meth)acrylate, ethyl (meth)aerylate, *n*-propyl (meth)acrylate, isopropyl (meth)acrylate, *n*-butyl (meth)acrylate, isobutyl-butyl (meth)acrylate, *tert*-butyl (meth)acrylate, *n*-hexyl (meth)acrylate, *n*-octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, *t*-butylcyclohexyl (meth)acrylate, cyclododecyl (meth)acrylate, tricyclodecanyl (meth)acrylate, and like esterified products of (meth) acrylic acid with a $C_{1-18}$ alcohol or $C_{3-12}$ cycloalcohol;
(ii) isobornyl-containing polymerizable unsaturated monomers, such as isobornyl (meth)acrylate;
(iii) adamantyl-containing polymerizable unsaturated monomers, such as adamantyl (meth)acrylate;
(iv) tricyclodecenyl-containing polymerizable unsaturated monomers, such as tricyclodecenyl (meth)acrylate;
(v) aromatic ring-containing polymerizable unsaturated monomers, such as benzyl (meth)acrylate, styrene, $\alpha$-methylstyrene, and vinyltoluene;
(vi) alkoxysilyl-containing polymerizable unsaturated monomers, such as vinyltrimethoxysilane, vinyltriethoxysilane, vinyltris(2-methoxyethoxy) silane, $\gamma$-(meth)acryloyloxypropyltrimethoxysilane, and $\gamma$-(meth)acryloyloxypropyltriethoxysilane;
(vii) fluorinated alkyl-containing polymerizable unsaturated monomers, such as perfluorobutylethyl (meth)acrylate, perfluorooctylethyl (meth)acrylate, and like perfluoroalkyl (meth)acrylates; and fluoroolefins;
(viii) polymerizable unsaturated monomers having a photopolymerizable functional group, such as maleimide;
(ix) vinyl compounds, such as *N*-vinylpyrrolidone, ethylene, butadiene, chloroprene, vinyl propionate, and vinyl acetate;
(x) carboxy-containing polymerizable unsaturated monomers, such as (meth)acrylic acid, maleic acid, crotonic acid, and $\beta$-carboxyethyl acrylate;
(xi) hydroxy-containing polymerizable unsaturated monomers, such as monoesterified products of (meth) acrylic acid with a dihydric alcohol having 2 to 8 carbon atoms, such as 2-hydroxyethyl(meth)acrylate, 2-hydroxypropyl(meth)acrylate, 3-hydroxypropyl(meth)acrylate, and 4-hydroxybutyl(meth)acrylate; $\varepsilon$-caprolactone-modified compounds of the monoesterified products of (meth)acrylic acid with dihydric alcohols having 2 to 8 carbon atoms; *N*-hydroxymethyl(meth)acrylamide; allyl alcohol; and (meth)acrylates having hydroxy-terminated polyoxyethylene chains;
(xii) nitrogen-containing polymerizable unsaturated monomers, such as (meth)acrylonitrile, (meth)acrylamide, *N,N*-dimethylaminoethyl (meth)acrylate, *N,N*-diethylaminoethyl (meth)acrylate, *N,N*-dimethylaminopropyl (meth)acrylamide, methylenebis(meth)acrylamide, ethylenebis(meth)acrylamide, and addition products of glycidyl (meth)acrylate with amines;
(xiii) polymerizable unsaturated monomers having at least two polymerizable unsaturated groups per molecule, such as ethylene glycol dimethacrylate, allyl (meth)acrylate and 1,6-hexanediol di(meth)acrylate;
(xiv) epoxy-containing polymerizable unsaturated monomers, such as glycidyl (meth)acrylate, $\beta$-methylglycidyl (meth)acrylate, 3,4-epoxycyclohexylmethyl (meth) acrylate, 3,4-epoxycyclohexylethyl (meth)acrylate, 3,4-epoxycyclohexylpropyl (meth)acrylate, and allyl glycidyl ether;
(xv) (meth)acrylates having alkoxy-terminated polyoxyethylene chains;
(xvi) sulfonic acid group-containing polymerizable unsaturated monomers, such as 2-acrylamido-2-methylpropane sulfonic acid, 2-sulfoethyl (meth)acrylate, allylsulfonic acid, and 4-styrenesulfonic acid; and sodium salts or ammonium salts of these sulfonic acids;
(xvii) phosphoric acid group-containing polymerizable unsaturated monomers, such as acid phosphooxyethyl (meth)acrylate, acid phosphooxypropyl (meth)acrylate, acid phosphooxypoly(oxyethylene)glycol (meth)acrylate, and acid phosphooxypoly(oxypropylene)glycol (meth)acrylate;
(xviii) UV-absorbing functional group-containing polymerizable unsaturated monomers, such as 2-hydroxy-4-(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy)benzophenone, 2,2'-dihydroxy-4-(3-acryloyloxy-2-hydroxypropoxy)benzophenone, and 2-(2'-hydroxy-5'-methacryloyloxyethylphenyl)-2H-benzotriazole;
(xix) UV-stable polymerizable unsaturated monomers, such as 4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)aeryloylamino-2,2,6,6-tetramethylpiperidine, 4-crotonoyloxy-2,2,6,6-tetramethylpiperidine, 4-crotonoylamino-2,2,6,6-tetramethylpiperidine, and 1-crotonoyl-4-crotonoyloxy-2,2,6,6-tetramethylpiperidine; and

(xx) carbonyl-containing polymerizable unsaturated monomers, such as acrolein, diacetonacrylamide, diacetonmethacrylamide, acetoacetoxyethyl methacrylate, formylstyrol, and $C_{4-7}$ vinyl alkyl ketones (e.g., vinyl methyl ketone, vinyl ethyl ketone, and vinyl butyl ketone).

These monomers can be used singly, or in a combination of two or more. In the present invention, a monomer corresponding to the (xviii) polymerizable unsaturated monomer having a UV-absorbing functional group should be defined separately from the (xi) hydroxy-containing polymerizable unsaturated monomer, and is excluded from hydroxy-containing polymerizable unsaturated monomers.

In the present specification, the term "(meth)acrylate" means "acrylate or methacrylate." The term "(meth)acrylic acid" means "acrylic acid or methacrylic acid." The term "(meth)acryloyl" means "acryloyl or methacryloyl." The term "(meth)acrylamide" means "acrylamide or methacrylamide."

As the polymerizable unsaturated monomer, the use of at least one of the (x) carboxy-containing polymerizable unsaturated monomer or (v) aromatic ring-containing polymerizable unsaturated monomer (e.g., (x) carboxy-containing polymerizable unsaturated monomer) is preferable, and more preferable is the use of both of the (x) carboxy-containing polymerizable unsaturated monomer and (v) the aromatic ring-containing polymerizable unsaturated monomer, in view of ease of grafting with the polyester resin, and the stability of the aqueous dispersion of the acrylic modified polyester resin (A).

In this case, the proportions of (x) carboxy-containing polymerizable unsaturated monomer and (v) aromatic ring-containing polymerizable unsaturated monomer are preferably as follows, based on the total mass of the polymerizable unsaturated monomers.

The proportion of the (x) carboxy-containing polymerizable unsaturated monomer is 5 to 50 mass%, preferably 10 to 45 mass%, and more preferably 15 to 40 mass%.

The proportion of the (v) aromatic ring-containing polymerizable unsaturated monomer is 10 to 60 mass%, preferably 15 to 55 mass%, and more preferably 20 to 50 mass%.

It is also preferable to additionally use (i) an alkyl or cycloalkyl (meta)acrylate. When an alkyl or cycloalkyl (meth)acrylate is used, the proportion thereof is 5 to 60 mass%, preferably 10 to 55 mass%, and more preferably 15 to 50 mass% based on the total mass of the polymerizable unsaturated monomers.

The acrylic modified polyester resin can be obtained, for example, by copolymerizing the radical polymerizable unsaturated group-containing polyester resin and the polymerizable unsaturated monomer according to a known method.

Specifically, the acrylic modified polyester resin can be obtained, for example, by adding the radical polymerizable unsaturated group-containing polyester resin, the polymerizable unsaturated monomer, a radical initiator, and optionally a chain transfer agent to the reaction vessel, and heating the mixture at 90 to 160°C for 1 to 5 hours. When the generation of heat is so large that the temperature is difficult to control, the radical polymerizable unsaturated group-containing polyester resin may be added in advance to the reaction vessel, and other starting materials may be added slowly over time.

As the polymerization initiator, an organic peroxide-based polymerization initiator, an azo-based polymerization initiator, etc., can be used. Examples of the organic peroxide-based polymerization initiator include benzoyl peroxide, *t*-butylperoxy-2-ethylhexanoate, di-*t*-butyl peroxide, *t*-butyl peroxy benzoate, *t*-amylperoxy-2-ethylhexanoate, and the like. Examples of the azo-based polymerization initiator include azobis isobutyronitrile, azobis dimethylvaleronitrile, and the like. Examples of the chain transfer agent include $\alpha$-methylstyrene dimer, mercaptans, and the like.

The amount of the polymerizable unsaturated monomer to be added is preferably 5 to 80 parts by weight, more preferably 10 to 70 parts by weight, and even more preferably 10 to 50 parts by weight based on 100 parts by weight of the total of the radical polymerizable unsaturated group-containing polyester resin and the polymerizable unsaturated monomer, in view of production stability of graft polymerization.

The method of obtaining the acrylic modified polyester resin (A) by an esterification reaction of resins, i.e., polyester resin and acryl resin is a method in which part of the polyester is grafted to the acryl resin by a transesterification reaction.

In view of smoothness, distinctness of image, water resistance, and adhesion of the resulting coating film, the acrylic modified polyester resin (A) preferably has a hydroxy value of 40 to 200 mg KOH/g, more preferably 50 to 180 mg KOH/g, and even more preferably 60 to 150 mg KOH/g.

In view of smoothness, distinctness of image, water resistance, and adhesion of the resulting coating film, when the acrylic modified polyester resin (A) further includes a carboxy group, its acid value is preferably 55 mg KOH/g or less, more preferably 10 to 50 mg KOH/g, and even more preferably 15 to 40 mg KOH/g.

In view of smoothness, distinctness of image, water resistance, and adhesion of the resulting coating film, the number average molecular weight of the acrylic modified polyester resin (A) is preferably 1,000 to 10,000, more preferably 1,200 to 7,000, and even more preferably 1,500 to 5,000.

In this specification, the number average molecular weight and the weight average molecular weight are determined by converting the retention time (retention volume) measured by gel permeation chromatography (GPC) into polystyrene molecular weight, based on the retention time (retention volume) of a standard polystyrene having a known molecular weight measured under the same conditions. More specifically, for example, the number average molecular weight and the weight average molecular weight can be measured by using an "HLC-8120GPC" (produced by Tosoh Corporation) as a gel permeation chromatography apparatus; four columns, i.e., a "TSKgel G4000HXL" column, two "TSKgel G3000HXL" columns, and a "TSKgel G2000HXL" column (produced by Tosoh Corporation); and a differential refractometer detector as a detector; under the conditions of mobile phase: tetrahydrofuran, measurement temperature: 40°C, and flow rate: 1 mL/min.

The acrylic modified polyester resin synthesized as above can be neutralized and water-dispersed to obtain an aqueous resin dispersion. As a neutralizer used for neutralization, amines and ammonia are preferably used. Typical examples of the amines include triethylamine, triethanolamine, dimethylethanolamine, diethylethanolamine, morpholine, and the like. Among these, triethylamine and dimethylethanolamine are particularly preferable. Although the neutralization degree of the acrylic modified polyester resin is not particularly limited, it is desirably in the range of 0.3 to 1.0 equivalent relative to the carboxyl group in the resin.

The acrylic modified polyester resin (A) is preferably an aqueous dispersion of the acrylic modified polyester resin, in view of storage stability, etc., of the aqueous first colored coating composition (X).

The aqueous medium in which an acrylic modified polyester resin is dispersed may be water alone, or a mixture of water and an organic solvent. As the organic solvent, known organic solvents can be used as long as the organic solvent does not impair the stability of the acrylic modified polyester resin in the aqueous medium.

Preferable examples of the organic solvent include alcohol-based solvents, ether-based solvents, and the like. Specific examples include alcohol-based solvents such as n-butanol; ether-based solvents such as ethylene glycol monobutyl ether, ethylene glycol monoisopropyl ether, ethylene glycol monomethyl ether, propylene glycol monomethyl ether, diethylene glycol monoethyl ether; and the like. As the organic solvent, an unsaturated organic solvent that does not mix with water, which is not listed above, can be used as long as it does not impair the stability of the acrylic modified polyester resin in the aqueous medium. Examples of such an organic solvent include aromatic hydrocarbon-based solvents such as toluene and xylene, ester-based solvents such as ethyl acetate and butyl acetate, ketone-based solvents such as methyl ethyl ketone and cyclohexanone; and the like. The amount of the organic solvent in the aqueous resin dispersion of the present invention is desirably 50% by weight or less in the aqueous medium in view of environmental protection.

The acrylic modified polyester resin is neutralized and dispersed in the aqueous medium according to a known method. For example, known methods include a method in which the acrylic modified polyester resin is gradually added to the aqueous medium containing a neutralizer while stirring, and a method in which the acrylic modified polyester resin is neutralized with a neutralizer, after which the aqueous medium is added to the resulting neutralizing product while stirring, or the resulting neutralizing product is added to the aqueous medium while stirring.

<u>Blocked polyisocyanate compound (B)</u>

The blocked polyisocyanate compound (B) is a blocked polyisocyanate compound having at least one blocked isocyanate group selected from the group consisting of a blocked isocyanate group represented by formula (I)

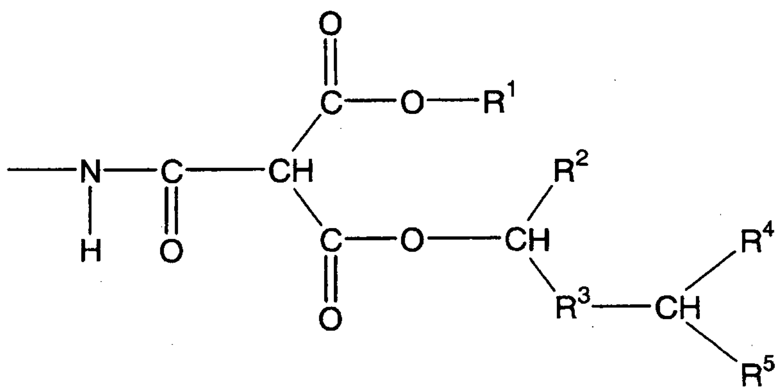

(I)

(wherein $R^1$, $R^2$, $R^4$, and $R^5$ independently represent a $C_{1-12}$ hydrocarbon group, and $R^3$ is a $C_{1-12}$ linear or branched alkylene group), a blocked isocyanate group represented by formula (II)

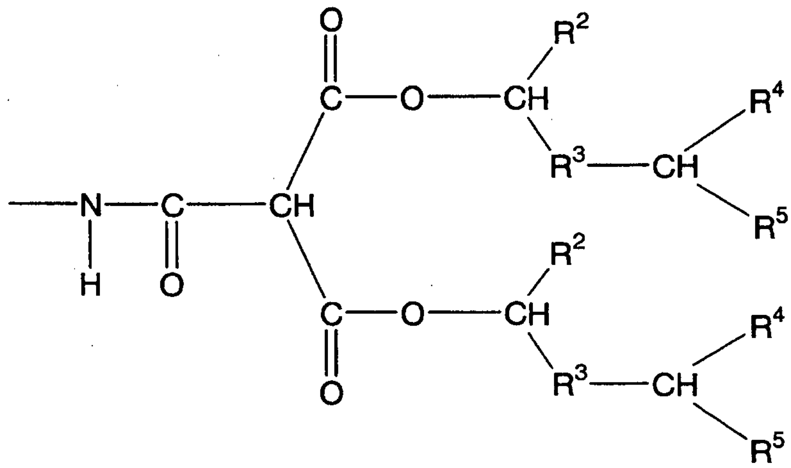

(II)

(wherein $R^2$, $R^3$, $R^4$, and $R^5$ are the same as above), and a blocked isocyanate group represented by formula (III)

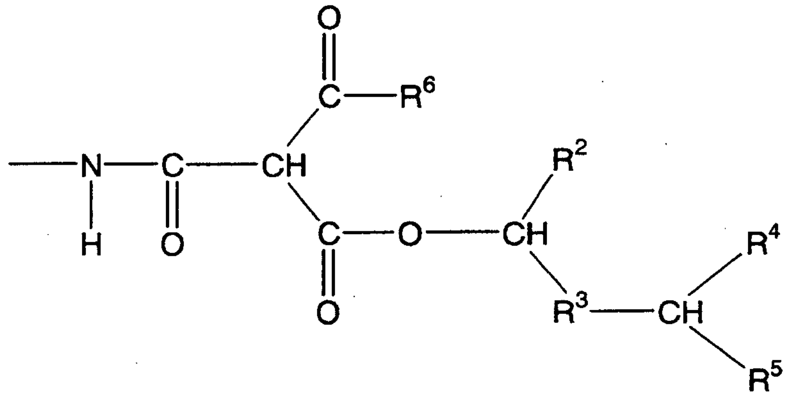

(III)

(wherein $R^2$, $R^3$, $R^4$, and $R^5$ are the same as above, and $R^6$ is a $C_{1-12}$ hydrocarbon group).

Examples of $C_{1-12}$ hydrocarbon groups represented by $R^1$, $R^2$, $R^4$, $R^5$, and $R^6$ in formulae (I) to (III) include linear or branched alkyl groups, such as methyl, ethyl, *n*-propyl, isopropyl, *n*-butyl, isobutyl, *sec*-butyl, *t*-butyl, *n*-pentyl, *n*-hexyl, 2-ethylhexyl, *n*-heptyl, *n*-octylnonyl, *n*-decyl, *n*-undecyl, and *n*-dodecyl; aryl groups such as phenyl and benzyl; and the like.

Specific examples of $R^1$ include methyl, ethyl, propyl, isopropyl, *n*-butyl, isobutyl, *sec*-butyl, *t*-butyl, *n*-pentyl, *n*-hexyl, 2-ethylhexyl, phenyl, and benzyl. Among these, alkyl groups having 1 to 3 carbon atoms, such as methyl, ethyl, and isopropyl, are preferable, and ethyl and isopropyl are particularly preferable.

$R^2$, $R^4$, and $R^5$ are each preferably an alkyl group having 1 to 3 carbon atoms, such as methyl, ethyl, and isopropyl, and more preferably methyl.

Specific examples of $R^3$ include $C_{1-12}$ linear or branched alkylene groups, which are represented by $-C_pH_{2p}-$ (wherein p is an integer of 1 to 12). $R^3$ is particularly preferably an alkylene group having 1 to 3 carbon atoms (methylene, ethylene, propylene, or trimethylene).

Specific examples of $R^6$ include $C_{1-3}$ alkyl groups such as methyl, ethyl, and isopropyl. $R^6$ is particularly preferably isopropyl.

In the blocked polyisocyanate compound (B) in the present invention, the block isocyanate group is preferably at least one of the block isocyanate group represented by formula (1) or the block isocyanate group represented by formula (II).

The above blocked polyisocyanate compound (B) can be obtained, for example, by reacting isocyanate groups of the polyisocyanate compound (b1) having at least two isocyanate groups per molecule with an active methylene compound (b2) to obtain a blocked polyisocyanate compound (b3), and then reacting the obtained blocked polyisocyanate compound (b3) with a secondary alcohol (b4).

Polyisocyanate compound (b1)

The polyisocyanate compound (bl) is a compound having at least two isocyanate groups per molecule. Examples

of such compounds include aliphatic polyisocyanates, alicyclic polyisocyanates, aromatic-aliphatic polyisocyanates, aromatic polyisocyanates, derivatives of such polyisocyanates, and the like.

Examples of the aliphatic polyisocyanates include aliphatic diisocyanates, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimeric acid diisocyanate, and methyl 2,6-diisocyanatohexanoate (common name: lysine diisocyanate); aliphatic triisocyanates such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane; and the like.

Examples of the alicyclic polyisocyanates include alicyclic diisocyanates such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or mixtures thereof, and methylenebis(4,1-cyclohexanediyl)diisocyanate (common name: hydrogenated MDI), and norbornane diisocyanate; alicyclic triisocyanates such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethy-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)heptane, and 6-(2-isocyanatoethyl)-2-isocyanatomethyl-2-(3-isocyanatopropyl)-bicyclo(2.2.1)heptane; and the like.

Examples of the aromatic-aliphatic polyisocyanates include aromatic-aliphatic diisocyanates such as methylenebis(4,1-phenylene)diisocyanate (common name: MDI), 1,3- or 1,4-xylylene diisocyanate or mixtures thereof, ω,ω'-diisocyanato-1,4-diethylbenzene, and 1,3- or 1,4-bis(1-isocyanato-1-methylethyl)benzene (common name: tetramethylxylylene diisocyanate) or mixtures thereof; aromatic-aliphatic triisocyanates such as 1,3,5-triisocyanatomethylbenzene; and the like.

Examples of the aromatic polyisocyanates include aromatic diisocyanates such as *m*-phenylene diisocyanate, *p*-phenylene diisocyanate, 4,4'-diphenyldiisocyanate, 1,5-naphthalene diisocyanate, 2,4-tolylene diisocyanate (common name: 2,4-TDI), or 2,6-tolylene diisocyanate (common name: 2,6-TDI) or mixtures thereof, 4,4'-toluidine diisocyanate, and 4,4'-diphenylether diisocyanate; aromatic triisocyanates such as triphenylmethane-4,4',4"-triisocyanate, 1,3,5-triisocyanatobenzene, and 2,4,6-triisocyanatotoluene; aromatic tetraisocyanates such as 4,4'-diphenylmethane-2,2',5,5'-tetraisocyanate; and the like.

Examples of the polyisocyanate derivative include dimers, trimers, biuret adducts, allophanates, urethodiones, urethoimines, isocyanurates, oxadiazinetriones, polymethylene polyphenyl polyisocyanates (crude MDI, polymeric MDI), crude TDI, and like derivatives of the above-mentioned polyisocyanate compounds. Preferable examples include cyclopolymers (e.g., isocyanurates) of the polyisocyanates, and the like.

Such polyisocyanates and derivatives thereof can be used singly, or in a combination of two or more. Among these polyisocyanates, aliphatic diisocyanates, alicyclic diisocyanates, and derivatives of these diisocyanates are preferable as the polyisocyanate compound (b1) because yellowing is less likely to occur during heating of the obtained blocked polyisocyanate compound (B). From the viewpoint of improving flexibility of the resulting coating film, aliphatic diisocyanates and derivatives thereof are more preferable.

It is also possible to use, as the polyisocyanate compound (b1), a prepolymer formed by reacting the polyisocyanate or a derivative thereof with a compound reactive to the polyisocyanate under conditions such that the isocyanate groups are present in excess. Examples of the compound reactive to the polyisocyanate includes compounds that have active hydrogen groups such as hydroxy or amino, and specific examples thereof include polyhydric alcohols, low-molecular-weight polyester resins, amine, water, and the like.

As the polyisocyanate compound (b1), a polymer of an isocyanate-containing polymerizable unsaturated monomer, or a copolymer of the isocyanate-containing polymerizable unsaturated monomer and a polymerizable unsaturated monomer other than the isocyanate-containing polymerizable unsaturated monomer may be used.

In view of reactivity of the obtained blocked polyisocyanate compound (B) and compatibility of the blocked polyisocyanate compound (B) with other coating composition components, the polyisocyanate compound (b1) preferably has a number average molecular weight of 300 to 20,000, more preferably 400 to 8,000, and even more preferably 500 to 2,000.

In view of reactivity of the obtained blocked polyisocyanate compound (B) and compatibility of the blocked polyisocyanate compound (B) with other coating composition components, the polyisocyanate compound (b1) preferably has an average isocyanate functionality per molecule of 2 to 100. In terms of enhancing the reactivity of the obtained blocked polyisocyanate compound (B), the lower limit of the average isocyanate functionality per molecule is preferably 3. In view of preventing gelation during the production of the blocked polyisocyanate compound (B), the upper limit of

the average isocyanate functionality per molecule is preferably 20.

Active methylene compound (b2)

Examples of the active methylene compound (b2) that blocks isocyanate groups of the polyisocyanate compound (b1) include malonic acid diesters such as dimethyl malonate, diethyl malonate, di-*n*-propyl malonate, diisopropyl malonate, di-*n*-butyl malonate, diisobutyl malonate, di-*sec*-butyl malonate, di-*t*-butyl malonate, di-n-pentyl malonate, di-n-hexyl malonate, di(2-ethylhexyl) malonate, methyl isopropyl malonate, ethyl isopropyl malonate, methyl *n*-butyl malonate, ethyl *n*-butyl malonate, methyl isobutyl malonate, ethyl isobutyl malonate, methyl *sec*-butyl malonate, ethyl *sec*-butyl malonate, diphenyl malonate, and dibenzyl malonate; acetoacetates such as methyl acetoacetate, ethyl acetoacetate, *n*-propyl acetoacetate, isopropyl acetoacetate, n-butyl acetoacetate, isobutyl acetoacetate, *sec*-butyl acetoacetate, *t*-butyl acetoacetate, *n*-pentyl acetoacetate, *n*-hexyl acetoacetate, 2-ethylhexyl acetoacetate, phenyl acetoacetate, and benzyl acetoacetate; isobutyryl acetates such as isobutyryl methyl acetate, isobutyryl ethyl acetate, isobutyryl n-propyl acetate, isobutyryl isopropyl acetate, isobutyryl n-butyl acetate, isobutyl isobutyryl acetate, isobutyryl *sec*-butyl acetate, isobutyryl *t*-butyl acetate, isobutyryl *n*-pentyl acetate, isobutyryl *n*-hexyl acetate, isobutyryl 2-ethylhexyl acetate, isobutyryl phenyl acetate, and isobutyryl benzyl acetate; and the like. These can be used singly, or in a combination of two or more.

In view of smoothness and distinctness of image of the resulting multilayer coating film, the active methylene compound (b2) is preferably at least one compound selected from the group consisting of dimethyl malonate, diethyl malonate, diisopropyl malonate, methyl acetoacetate, ethyl acetoacetate, isobutyryl methyl acetate, and isobutyryl ethyl acetate, and more preferably at least one compound selected from the group consisting of diisopropyl malonate, isobutyryl methyl acetate, and isobutyryl ethyl acetate. In view of smoothness and distinctness of image of the resulting multilayer coating film as well as reactivity of the obtained blocked polyisocyanate compound (B) and storage stability of the aqueous first colored coating composition (X), diisopropyl malonate is particularly preferable.

If necessary, a reaction catalyst may be used for the blocking reaction of isocyanate groups with the active methylene compound (b2). As the reaction catalyst, for example, basic compounds such as metal hydroxides, metal alkoxides, metal carboxylates, metal acetylacetonates, hydroxides of onium salts, onium carboxylates, metal salts of active methylene compounds, onium salts of active methylene compounds, aminosilanes, amines, and phosphines can be preferably used. Among these, ammonium salts, phosphonium salts, and sulfonium salts are preferable as onium salts. It is usually preferable that the amount of reaction catalyst is in the range of 10 to 10,000 ppm, and more preferably 20 to 5,000 ppm based on the total solid mass of the polyisocyanate compound (b1) and the active methylene compound (b2).

The blocking reaction of the isocyanate groups by the active methylene compound (b2) can be carried out at 0 to 150°C. In the reaction, a solvent may be used. In this case, the solvent is preferably a non-protic solvent. Esters, ethers, *N*-alkylamides, ketones, and the like, are particularly preferable. When the reaction has progressed as desired, the reaction may be terminated by adding an acid component to neutralize the basic compound as a catalyst.

The amount of the active methylene compound (b2) to be used in the blocking reaction of the isocyanate groups by the active methylene compound (b2) is not particularly limited, but is preferably from 0.1 to 3 moles, more preferably 0.2 to 2 moles, per mole of the isocyanate groups in the polyisocyanate compound (b1). The active methylene compound that has not reacted with the isocyanate groups in the polyisocyanate compound (b1) can be removed after the blocking reaction.

Other blocking agents such as alcohol, phenol, oxime, amine, acid amides, imidazole, pyridine, or mercaptan blocking agents may also be used in combination with the active methylene compound (b2).

Some of the isocyanate groups in the polyisocyanate compound (b1) may be reacted with an active hydrogen-containing compound. The reaction of some of the isocyanate groups in the polyisocyanate compound (b1) with an active hydrogen-containing compound can enhance storage stability of the obtained blocked polyisocyanate compound (B), adjustment of compatibility of the blocked polyisocyanate compound (B) with other coating composition components, and flexibility of the resulting coating film.

When some of the isocyanate groups in the polyisocyanate compound (b1) are reacted with an active hydrogen-containing compound as mentioned above, the order of the reactions of the polyisocyanate compound (b1), active methylene compound (b2), and active hydrogen-containing compound is not particularly limited. For example, the following methods can be used. After some of the isocyanate groups in the polyisocyanate compound (b1) are blocked with an active methylene compound (b2), the residual isocyanate groups are reacted with an active hydrogen-containing compound. Alternatively, after some of the isocyanate groups in the polyisocyanate compound (b1) are reacted with an active hydrogen-containing compound, the residual isocyanate groups are blocked with an active methylene compound (b2). Further alternatively, isocyanate groups in the polyisocyanate compound (b1) are reacted simultaneously with an active methylene compound (b2) and an active hydrogen-containing compound.

Examples of the active hydrogen-containing compound include hydroxy-containing compounds and amino-group containing compounds.

Examples of hydroxy-containing compounds include propanol, butanol, pentanol, hexanol, heptanol, 2-ethyl-1-hexanol, octanol, nonanol, decanol, tridecanol, stearyl alcohol, ethylene glycol, propylene glycol, polyethylene glycol, polypropylene glycol, polyethylene glycol (propylene glycol), polyethylene glycol monoalkyl ether, polypropylene glycol monoalkyl ether, polyethylene glycol (propylene glycol) monoalkyl ether, trimethylolpropane, and the like. These compounds can be used singly, or in a combination of two or more. In this specification, "polyethylene glycol (propylene glycol)" refers to a copolymer of ethylene glycol and propylene glycol, and includes any of blocked copolymers and random copolymers.

In view of suppressing viscosity increase of the blocked polyisocyanate compound (B), the hydroxy-containing compound is preferably a monovalent alcohol. Examples of the monovalent alcohol include propanol, butanol, pentanol, hexanol, heptanol, 2-ethyl-1-hexanol, octanol, nonanol, decanol, tridecanol, stearyl alcohol, polyethylene glycol monoalkyl ether, polypropylene glycol monoalkyl ether, polyethylene glycol(propylene glycol) monoalkyl ether, and the like. These can be used singly, or in a combination of two or more.

Examples of the amino group-containing compounds include butylamine, octylamine, stearylamine, dibutylamine, dioctylamine, dicyclohexylamine, di-lauryl amine, $\alpha$-(aminoalkyl)-$\omega$-alkoxy polyoxyethylene (oxypropylene), hexamethylenediamine, diethylenetriamine, polyoxypropylene-$\alpha$,$\omega$-diamine (examples of commercially available products include "Jeffamine D-400," produced by Huntsman Corporation), and the like. These can be used singly, or in a combination of two or more.

In view of high viscosity of the obtained blocked polyisocyanate compound (B), the amino group-containing compound is particularly preferably a monovalent amine. Examples of the monovalent amine include butylamine, octylamine, stearylamine, dibutylamine, dioctylamine, dicyclohexylamine, dilauryl amine, $\alpha$-(aminoalkyl)-$\omega$-alkoxy polyoxyethylene(oxypropylene), and the like. These can be used singly, or in a combination of two or more.

In view of storage stability and curability of the aqueous first colored coating composition (X) and smoothness, distinctness of image, water resistance, and popping resistance of the resulting multilayer coating film, the reaction ratio of the active hydrogen-containing compound to the polyisocyanate compound (b1) in the reaction of some of the isocyanate groups in the polyisocyanate compound (b1) with the active hydrogen-containing compound is preferably such that the number of moles of the active hydrogen in the active hydrogen-containing compound is 0.03 to 0.6 mole per mole of the isocyanate groups in the polyisocyanate compound (b1). In view of curability of the aqueous first colored coating composition (X) and water resistance of the resulting multilayer coating film, the upper limit is preferably 0.4, and more preferably 0.3. In view of storage stability of the aqueous first colored coating composition (X), and smoothness, distinctness of image, and popping resistance of the resulting multilayer coating film, the lower limit is preferably 0.04, and more preferably 0.05.

In view of storage stability and curability of the aqueous first colored coating composition (X), and smoothness, distinctness of image, and popping resistance of the resulting multilayer coating film, the blocked polyisocyanate compound (B) is preferably a blocked polyisocyanate compound (B') having a hydrophilic group.

The blocked polyisocyanate compound (B') having a hydrophilic group can be obtained, for example, by using an active hydrogen-containing compound having a hydrophilic group as the active hydrogen-containing compound.

As the active hydrogen-containing compound having a hydrophilic group, an active hydrogen-containing compound having a nonionic hydrophilic group, an active hydrogen-containing compound having an anionic hydrophilic group, an active hydrogen containing compound having a cationic hydrophilic group, or the like can be used. These compounds can be used singly, or in a combination of two or more. Among these, active hydrogen-containing compounds having a nonionic hydrophilic group are preferable because the reaction of blocking isocyanate groups in the polyisocyanate compound (b1) by the active methylene compound (b2) is less likely to be inhibited.

As the active hydrogen-containing compound having a nonionic hydrophilic group, for example, an active hydrogen-containing compound having a polyoxyalkylene group can be preferably used. Examples of the polyoxyalkylene group include polyoxyethylene, polyoxypropylene, polyoxyethylene (oxypropylene), and the like. These can be used singly, or in a combination of two or more. In view of storage stability of the aqueous first colored coating composition (X), an active hydrogen-containing compound having a polyoxyethylene group is particularly preferable.

In view of storage stability of the aqueous first colored coating composition (X), and water resistance, etc., of the resulting multilayer coating film, the active hydrogen-containing compound having a polyoxyethylene group preferably contains at least 3, preferably 5 to 100, and more preferably 8 to 45 continuous oxyethylene groups.

The active hydrogen-containing compound having a polyoxyethylene group may contain an oxyalkylene group other than the continuous oxyethylene groups. Examples of oxyalkylene groups other than the oxyethylene groups include oxypropylene, oxybutylene, oxystyrene, and the like. In view of storage stability of the aqueous first colored coating composition (X), the molar ratio of the oxyethylene group in oxyalkylene groups of the active hydrogen-containing compound having a polyoxyethylene group is preferably 20 to 100 mol%, and more preferably 50 to 100 mol%. When the molar ratio of the oxyethylene group in oxyalkylene groups is less than 20 mol%, sufficient hydrophilicity may not be imparted, thus resulting in reduced storage stability of the aqueous first colored coating composition (X).

In view of storage stability of the aqueous first colored coating composition (X) and water resistance of the resulting multilayer coating film, the active hydrogen-containing compound having a nonionic hydrophilic group preferably has a number average molecular weight of 200 to 2,000. The lower limit of the number average molecular weight is preferably 300, and more preferably 400, in view of storage stability of the aqueous first colored coating composition (X). The upper limit of the number average molecular weight is preferably 1,500, and more preferably 1,200, in view of water resistance of the resulting multilayer coating film.

Examples of the active hydrogen-containing compound having a nonionic hydrophilic group include polyethylene glycol monoalkyl ethers (alternate name: ω-alkoxypolyoxyethylenes), such as polyethylene glycol monomethyl ether and polyethylene glycol monoethyl ether; polypropyleneglycol monoalkyl ethers (alternate name: ω-alkoxypolyoxypropylenes), such as polypropyleneglycol monomethyl ether and polypropyleneglycol monoethyl ether; ω-alkoxypolyoxyethylene(oxypropylene), such as ω-methoxypolyoxyethylene(oxypropylene) and ω-ethoxypolyoxyethylene(oxypropylene); polyethylene glycol (propylene glycol)monoalkyl ethers, such as polyethylene glycol (propylene glycol)monomethyl ether and polyethylene glycol (propylene glycol)monoethyl ether; and polyethylene glycol, polypropylene glycol, polyethylene glycol (propylene glycol), α-(aminoalkyl)-ω-alkoxypolyoxyethylene, α-(aminoalkyl)-ω-alkoxypolyoxypropylene, α-(aminoalkyl)-ω-alkoxypolyoxyethylene(oxypropylene); and the like. These can be used singly, or in a combination of two or more. Among these, polyethylene glycol monomethyl ether, polyethylene glycol monoethyl ether, and polyethylene glycol are preferable. Polyethylene glycol monomethyl ether is more preferable.

Examples of commercial available products of the polyethylene glycol monomethyl ether include "Uniox M-400," "Uniox M-550," "Uniox M-1000," and "Uniox M-2000," all produced by NOF Corporation. Examples of commercially available products of the polyethylene glycol include "PEG #200," "PEG #300," "PEG #400," "PEG #600," "PEG #1000," "PEG #1500," "PEG #1540," and "PEG #2000," all produced by NOF Corporation.

As the active hydrogen-containing compound having an anionic hydrophilic group, for example, an active hydrogen-containing compound having a carboxy group, an active hydrogen-containing compound having a sulfonic acid group, an active hydrogen-containing compound having a phosphoric acid group, and their neutralized salts can be used. These can be used singly, or in a combination of two or more. Among these, active hydrogen-containing compounds having carboxy groups are preferable in view of compatibility of the resulting blocked polyisocyanate compound (B) with other coating composition components.

Some or all of the acid groups in the active hydrogen-containing compound having an anionic hydrophilic group are preferably neutralized with a basic compound, because the reaction of blocking isocyanate groups in the polyisocyanate compound (b1) with the active methylene compound (b2) described above is less likely to be inhibited.

The acid group in the active hydrogen-containing compound having an anionic group may be neutralized before or after the reaction of the active hydrogen-containing compound having an anionic group with the polyisocyanate compound (b1).

Examples of the basic compound include hydroxides of alkali metals or alkaline earth metals, such as sodium hydroxide, potassium hydroxide, lithium hydroxide, calcium hydroxide, and barium hydroxide; metal alkoxides; ammonia; primary monoamines such as ethylamine, propylamine, butylamine, benzylamine, monoethanolamine, 2,2-dimethyl-3-amino-1-propanol, 2-aminopropanol, 2-amino-2-methyl-1-propanol, and 3-aminopropanol; secondary monoamines, such as diethylamine, diethanolamine, di-*n*-propanolamine, diisopropanolamine, *N*-methylethanolamine, and *N*-ethylethanolamine; tertiary monoamines, such as dimethylethanolamine, trimethylamine, triethylamine, triisopropylamine, methyldiethanolamine, and 2-(dimethylamino)ethanol; polyamines such as diethylenetriamine, hydroxyethylaminoethylamine, ethylaminoethylamine, and methylaminopropylamine; and the like. These can be used singly, or in a combination of two or more. The amount of the basic compound is typically in the range of 0.1 to 1.5 equivalents, and preferably 0.2 to 1.2 equivalents, relative to the anionic group in the active hydrogen-containing compound having an anionic group.

Examples of the active hydrogen-containing compound having a carboxy group include monohydroxycarboxylic acids such as glycolic acid, lactic acid, hydroxypivalic acid, malic acid, and citric acid; dihydroxycarboxylic acids such as 2,2-dimethylolacetic acid, 2,2-dimethylollactic acid, 2,2-dimethylolpropionic acid, 2,2-dimethylolbutanoic acid, dimethylolheptanoic acid, dimethylolnonanoic acid, 2,2-dimethylolbutyric acid, and 2,2-dimethylolvaleric acid; glycine; 1-carboxy-1,5-pentylenediamine; dihydroxybenzoic acid; 3,5-diaminobenzoic acid; lysine; arginine; and the like.

Examples of the active hydrogen-containing compound having a sulfonic acid group include 2-amino-1-ethanesulfonic acid, *N,N*-bis(2-hydroxyethyl)-2-aminoethanesulfonic acid, 1,3-phenylenediamine-4,6-disulfonic acid, diaminobutanesulfonic acid, 3,6-diamino-2-toluenesulfonic acid, 2,4-diamino-5-toluenesulfonic acid, 2-(cyclohexylamino)-ethanesulfonic acid, and 3-(cyclohexylamino)-propanesulfonic acid.

Examples of the active hydrogen-containing compound having a phosphoric acid group include 2,3-dihydroxypropyl phenyl phosphate, hydroxyalkylphosphonic acids, and aminoalkylphosphonic acids.

When some of the isocyanate groups of the polyisocyanate compound (b1) are to be reacted with the active hydrogen-containing compound having a hydrophilic group, the reaction ratio of the active hydrogen-containing compound having a hydrophilic group to the polyisocyanate compound (b1) is 0.03 to 0.6 mole of the active hydrogen in the active hydrogen-containing compound per mole of the isocyanate groups in the polyisocyanate compound (b1), in view

of storage stability and curability of the aqueous first colored coating composition (X) and smoothness, distinctness of image, water resistance, and popping resistance of the resulting multilayer coating film. The upper limit of the ratio is preferably 0.4, and more preferably 0.3, in view of curability of the aqueous first colored coating composition (X) and water resistance of the resulting multilayer coating film. The lower limit of the ratio is preferably 0.04, and more preferably 0.05, in view of storage stability of the aqueous first colored coating composition (X), and smoothness, distinctness of image, and popping resistance of the resulting multilayer coating film.

The blocked polyisocyanate compound (B) may also be added as a mixture with a surfactant to impart water dispersibility. In this case, the surfactant is preferably a nonionic surfactant and/or anionic surfactant, in view of stability of the coating composition.

Blocked polyisocyanate compound (b3)

The blocked polyisocyanate compound (b3) is a compound obtained by reacting a polyisocyanate compound (b1) having at least two isocyanate groups per molecule with an active methylene compound (b2), so that some or all of the isocyanate groups in the polyisocyanate compound (b1) are blocked with the active methylene compound (b2).

It is particularly preferable that the blocked polyisocyanate compound (b3) is at least one blocked isocyanate compound selected from the blocked polyisocyanate compound (b3-1) having a blocked isocyanate group represented by formula (IV)

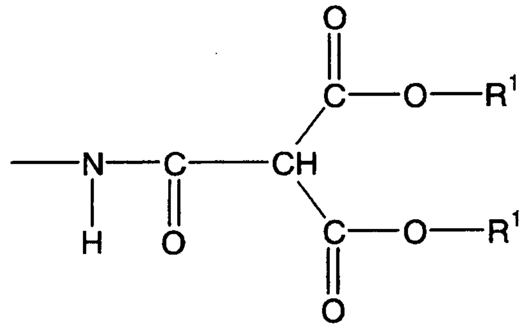

(IV)

(wherein each $R^1$ independently represents a $C_{1-12}$ hydrocarbon group, and may be the same or different), and the blocked polyisocyanate compound (b3-2) having a blocked isocyanate group represented by formula (V)

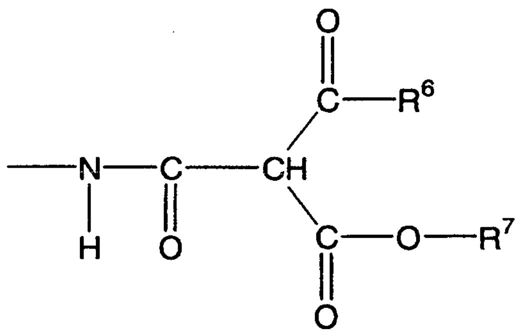

(V)

(wherein $R^6$ and $R^7$ independently represent a $C_{1-12}$ hydrocarbon group).

Blocked polyisocyanate compound (b3-1)

The blocked polyisocyanate compound (b3-1) is a blocked polyisocyanate compound having a blocked isocyanate group represented by formula (IV).

The blocked polyisocyanate compound (b3-1) is preferably one wherein $R^1$ is a $C_{1-3}$ alkyl group because an active methylene compound that can be relatively easily produced can be used as the active methylene compound (b2), which is one of the starting materials for the blocked polyisocyanate compound. In view of improving compatibility of the resulting blocked polyisocyanate compound (B) with other coating composition components, $R^1$ is more preferably an alkyl group having 2 or 3 carbon atoms. In view of storage stability of the aqueous first colored coating composition (X), and smoothness and distinctness of image of the resulting multilayer coating film, $R^1$ is more preferably an isopropyl group.

The blocked polyisocyanate compound (b3-1) may be obtained, for example, by reacting the polyisocyanate compound (b1) and a dialkyl malonate having a $C_{1-12}$ hydrocarbon group.

Examples of the dialkyl malonates include dimethyl malonate, diethyl malonate, di-*n*-propyl malonate, diisopropyl malonate, di-*n*-butyl malonate, di-isobutyl malonate, di-*sec*-butyl malonate, di-*tert*-butyl malonate, di-*n*-pentyl malonate, di-*n*-hexyl malonate, and di(2-ethylhexyl) malonate. These can be used singly, or in a combination of two or more. Among these, dimethyl malonate, diethyl malonate, di-*n*-propyl malonate, di-isopropyl malonate, di-*n*-butyl malonate, di-isobutyl malonate, di-*sec*-butyl malonate, and di-*tert*-butyl malonate are preferable; diethyl malonate, di-n-propyl malonate, and di-isopropyl malonate are more preferable; and di-isopropyl malonate is even more preferable.

Blocked polyisocyanate compound (b3-2)

The blocked polyisocyanate compound (b3-2) is a blocked polyisocyanate compound having a blocked isocyanate group represented by formula (V).

The blocked polyisocyanate compound (b3-2) is preferably one wherein $R^6$ and $R^7$ are $C_{1-3}$ alkyl groups, in view of usability of an active methylene compound that can be relatively easily produced, as the active methylene compound (b2) that is one of the starting materials for the blocked polyisocyanate compound. In view of enhancing compatibility of the resulting blocked polyisocyanate compound (B) with other coating composition components, $R^6$ and $R^7$ are more preferably alkyl groups having 2 or 3 carbon atoms. In view of storage stability of the aqueous first colored coating composition (X), and smoothness and distinctness of image of the multilayer coating film, $R^6$ and $R^7$ are more preferably isopropyl groups.

The blocked polyisocyanate compound (b3-2) can be obtained, for example, by reacting a polyisocyanate compound (b1) with an acetoacetic acid ester having a $C_{1-12}$ hydrocarbon group or with an isobutyrylacetic acid ester having a $C_{1-12}$ hydrocarbon group. The active methylene compound (b3-2) is preferably obtained by reacting the polyisocyanate compound (b1) with an isobutyrylacetic acid ester having a $C_{1-12}$ hydrocarbon group.

Examples of the isobutyrylacetic acid esters include methyl isobutyrylacetate, ethyl isobutyrylacetate, *n*-propyl isobutyrylacetate, isopropyl isobutyrylacetate, *n*-butyl isobutyrylacetate, isobutyl isobutyrylacetate, *sec*-butyl isobutyrylacetate, *tert*-butyl isobutyrylacetate, *n*-pentyl isobutyrylacetate, *n*-hexyl isobutyrylacetate, 2-ethylhexyl isobutyrylacetate, phenyl isobutyrylacetate, benzyl isobutyrylacetate, and the like. These can be used singly, or in a combination of two or more. Among these, methyl isobutyrylacetate, ethyl isobutyrylacetate, and isopropyl isobutyrylacetate are preferable.

Examples of the acetoacetic acid esters include methyl acetoacetate, ethyl acetoacetate, *n*-propyl acetoacetate, isopropyl acetoacetate, *n*-butyl acetoacetate, isobutyl acetoacetate, *sec*-butyl acetoacetate, *tert*-butyl acetoacetate, n-pentyl acetoacetate, *n*-hexyl acetoacetate, 2-ethylhexyl acetoacetate, phenyl acetoacetate, benzyl acetoacetate, and the like. These can be used singly, or in a combination of two or more. Among these, methyl acetoacetate, ethyl acetoacetate, and isopropyl acetoacetate are preferable.

The blocked polyisocyanate compound (b3) may be a compound obtained by reacting a polyisocyanate compound (b1) having at least 2 isocyanate groups per molecule with an active methylene compound (b2) and an active hydrogen-containing compound as mentioned above. Specifically, for example, when an active hydrogen-containing having a polyoxyalkylene group as mentioned above is used as the active hydrogen-containing compound, a blocked polyisocyanate compound in which some of the isocyanate groups in the polyisocyanate compound (b1) are blocked with the active methylene compound (b2), and some or all of the other isocyanate groups are reacted with the active hydrogen-containing compound having a polyoxyalkylene group can be produced.

In the present invention, the blocked polyisocyanate compound (B) can be obtained, for example, by reacting the blocked polyisocyanate compound (b3) with a secondary alcohol (b4) represented by formula (VI)

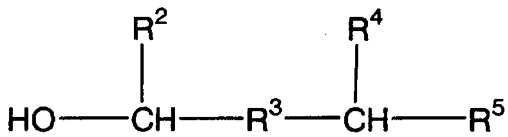

(VI)

(wherein $R^2$, $R^4$, and $R^5$ independently represent a $C_{1-12}$ hydrocarbon group, and $R^3$ is a $C_{1-12}$ linear or branched alkylene group).

Secondary alcohol (b4)

The secondary alcohol (b4) is a compound represented by formula (VI). A compound wherein $R^2$ is methyl is particularly preferable in view of enhancing the reactivity of the blocked polyisocyanate compound (b3) with the secondary alcohol (b4). If each of $R^3$, $R^4$, and $R^5$ contains many carbon atoms, the resulting blocked polyisocyanate compound

(B) may have low polarity, which results in reduced compatibility with other coating composition components. Therefore, $R^3$ is preferably $C_{1-3}$ alkylene, and $R^4$ and $R^5$ are each preferably methyl.

Examples of the secondary alcohol (b4) include 4-methyl-2-pentanol, 5-methyl-2-hexanol, 6-methyl-2-heptanol, and 7-methyl-2-octanol. These can be used singly, or in a combination of two or more. Among these, 4-methyl-2-pentanol having a relatively low boiling point is preferable because the unreacted secondary alcohol (b4) can be relatively easily removed at the time of partial or complete removal of the unreacted secondary alcohol (b4) by distillation after reacting the blocked polyisocyanate compound (b3) with the secondary alcohol (b4).

Specifically, the blocked polyisocyanate compound (B) can be obtained, for example, by reacting the secondary alcohol (b4) and the blocked polyisocyanate compound (b3-1) having a blocked isocyanate group represented by formula (IV)

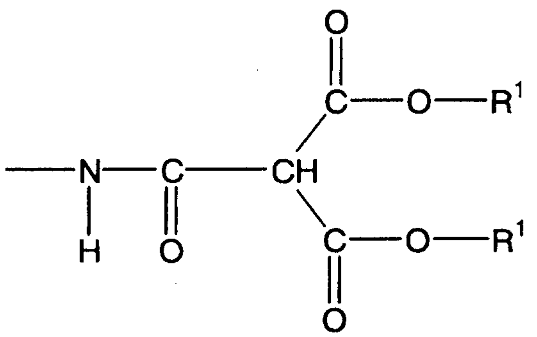

(IV)

(wherein each $R^1$ independently represents $C_{1-12}$ hydrocarbon group, and may be the same or different), which is described in the explanation of the blocked polyisocyanate compound (b3).

In this case, at least one of the $R^1$s in the blocked isocyanate groups in the blocked polyisocyanate compound (b3-1) is replaced with a group represented by formula (VII)

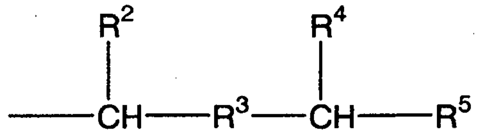

(VII)

(wherein $R^2$, $R^4$, and $R^5$ independently represent a $C_{1-12}$ hydrocarbon group, and $R^3$ is a linear or branched alkylene group).

In this case, the obtained blocked polyisocyanate compound (B) has a blocked isocyanate group represented by formula (I)

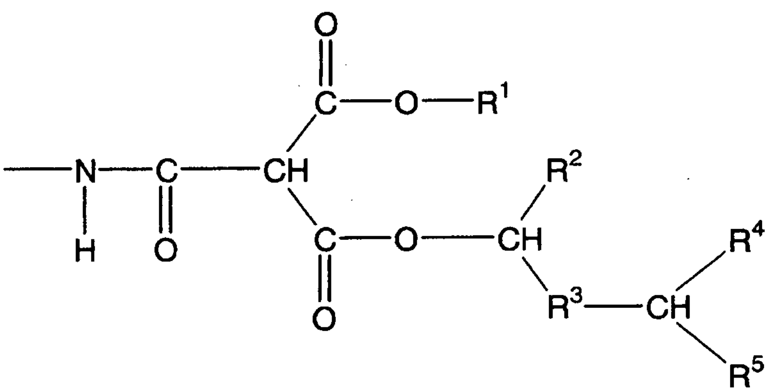

(I)

(wherein $R^1$, $R^2$, $R^4$, and $R^5$ independently represent a $C_{1-12}$ hydrocarbon group, and $R^3$ is a $C_{1-12}$ linear or branched alkylene group), or a blocked isocyanate group represented by formula (II)

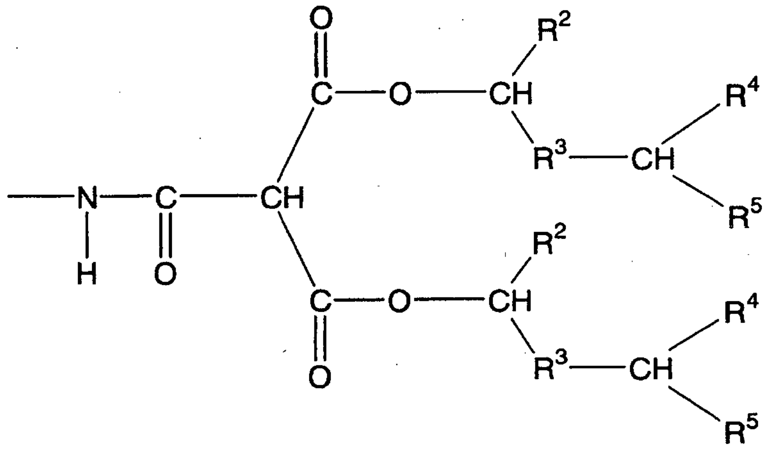

(II)

(wherein $R^2$, $R^3$, $R^4$, and $R^5$ are the same as above) .

The reaction of the blocked polyisocyanate compound (b3-1) with the second alcohol (b4) is not particularly limited as long as the reaction method is capable of replacing, for example, at least one of the $R^1$s in the blocked isocyanate groups in the blocked polyisocyanate compound (b3-1) with a group represented by formula (VII). It is particularly preferable to use a method of obtaining a blocked polyisocyanate compound (B) having a blocked isocyanate group represented by formula (I) or (II) by distilling off part or all of the alcohol derived from at least one of the $R^1$s in the blocked polyisocyanate compound (b3-1) from the system by heating, vacuuming, etc., and promoting the reaction.

Specifically, as the production method, it is suitable to remove part or all of the alcohol at a temperature of 20 to 150°C, preferably 75 to 95°C, over a period of 5 minutes to 20 hours, preferably 10 minutes to 10 hours, and, if necessary, under reduced pressure. An excessively low temperature is not preferable because the exchange reaction of the alkoxy group in the blocked polyisocyanate compound (b3-1) may progress slowly, and result in reduced production efficiency. An excessively high temperature is also not preferable because severe decomposition/deterioration of the obtained blocked polyisocyanate compound (B) may occur, and result in reduced curability.

The blocked polyisocyanate compound (B) can be obtained by reacting the secondary alcohol (b4) and a blocked polyisocyanate compound (b3-2) having a blocked isocyanate group represented by formula (V)

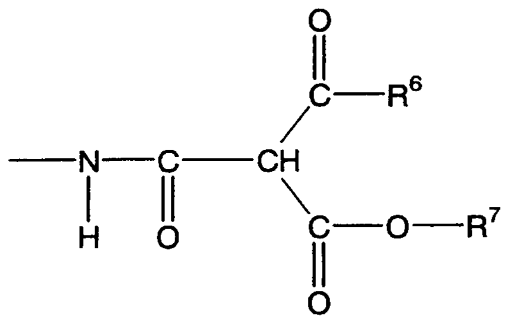

(V)

(wherein $R^6$ and $R^7$ independently represent $C_{1-12}$ hydrocarbon group), which is described above in the explanation of the blocked polyisocyanate compound (b3).

In this case, $R^7$ in the blocked isocyanate group in the blocked polyisocyanate compound (b3-2) is replaced by a group represented by formula (VII)

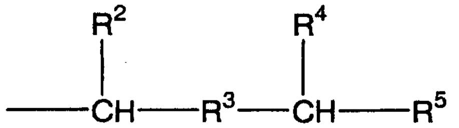

(VII)

(wherein $R^2$, $R^4$, and $R^5$ independently represent a $C_{1-12}$ hydrocarbon group, and $R^3$ represents a $C_{1-12}$ linear or branched alkylene group).

In this case, the resulting blocked polyisocyanate compound (B) has a blocked isocyanate group represented

by formula (III)

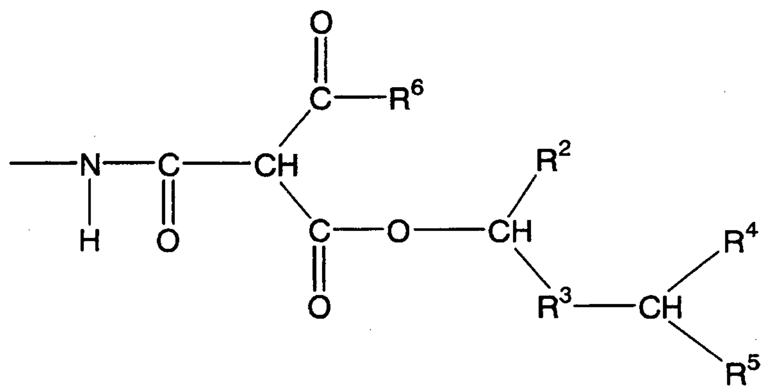

(III)

(wherein $R^2$, $R^3$, $R^4$, and $R^5$ are the same as above, and $R^6$ represents a $C_{1-12}$ hydrocarbon group).

The reaction of the blocked polyisocyanate compound (b3-2) with the secondary alcohol (b4) is not particularly limited, as long as the reaction method is capable of replacing, for example, $R^7$ in the blocked isocyanate group in the blocked polyisocyanate compound (b3-2) with a group represented by formula (VII). It is particularly preferable to use a method of obtaining a blocked polyisocyanate compound (B) having a blocked isocyanate group represented by formula (III) by distilling off part or all of the alcohol derived from $R^7$ in the blocked polyisocyanate compound (b3-2) from the system by heating, vacuuming, etc., and promoting the reaction.

Specifically, as the production method, it is suitable to remove part or all of the alcohol at a temperature of 20 to 150°C, preferably 75 to 95°C, over a period of 5 minutes to 20 hours, preferably 10 minutes to 10 hours, and, if necessary, under reduced pressure. An excessively low temperature is not preferable because the exchange reaction of the alkoxy group in the blocked polyisocyanate compound (b3-2) may progress slowly and result in reduced production efficiency. An excessively high temperature is also not preferable because severe decomposition/deterioration of the obtained blocked polyisocyanate compound (B) may occur, and result in reduced curability.

In view of reactivity of the obtained blocked polyisocyanate compound (B) and production efficiency, the proportion of the secondary alcohol (b4) to the blocked polyisocyanate compound (b3) in the production of the blocked polyisocyanate compound (B) is preferably such that the amount of the secondary alcohol (b4) is in the range of 5 to 500 parts by mass, and more preferably 10 to 200 parts by mass based on 100 parts by mass of the solids content of the blocked polyisocyanate compound (b3). When the amount of the secondary alcohol (b4) is less than 5 parts by mass, the reaction of the blocked polyisocyanate compound (b3) with the secondary alcohol (b4) may progress too slowly. When the amount of the secondary alcohol (b4) is more than 500 parts by mass, the concentration of the resulting blocked polyisocyanate compound (B) may be too low, and result in reduced production efficiency.

In the reaction of the blocked polyisocyanate compound (b3) with the secondary alcohol (b4), in order to control the molecular weight of the blocked polyisocyanate compound (B), the above-mentioned removing operation may be carried out after addition of the polyfunctional hydroxy-containing compound to the blocked polyisocyanate compound (b3) and the secondary alcohol (b4).

In view of compatibility with other coating composition components, and smoothness, distinctness of image, water resistance, and chipping resistance of the resulting multilayer coating film, the blocked polyisocyanate compound (B) preferably has a number average molecular weight of 600 to 30,000. The upper limit of the number average molecular weight is preferably 10,000, and more preferably 5,000, in view of compatibility with other coating composition components, and smoothness and distinctness of image of the resulting multilayer coating film. The lower limit of the number average molecular weight is preferably 900, and more preferably 1,000, in view of water resistance and chipping resistance of the resulting multilayer coating film.

Aqueous first colored coating composition (X)

The aqueous first colored coating composition (X) used in the method of the present invention is an aqueous coating composition comprising an acrylic modified polyester resin (A) and a blocked polyisocyanate compound (B) as described above. The aqueous first colored coating composition (X) is prepared, for example, by mixing an acrylic modified polyester resin (A) and a blocked polyisocyanate compound (B) according to a usual method, and suitably diluting the mixture in an aqueous medium, e.g., deionized water.

In view of smoothness, distinctness of image, water resistance, adhesion, etc., of the resulting multilayer coating film, the blending ratio of the acrylic modified polyester resin (A) to the blocked polyisocyanate compound (B) in the

aqueous first colored coating composition (X) is preferably in the range of (A)/(B) = 95/5 to 10/90, more preferably 90/10 to 30/70, and even more preferably 85/15 to 50/50, on a solids basis.

In view of smoothness, distinctness of image, etc., of the resulting multilayer coating film, the aqueous first colored coating composition (X) preferably further includes a hydroxy-containing acrylic resin (C).

Hydroxy-containing acrylic resin (C)

Examples of the hydroxy-containing acrylic resin include a water-soluble hydroxy-containing acrylic resin (C-1) and an aqueous dispersion of hydroxy-containing acrylic resin (C-2).
These acrylic resins can be used singly, or in combination.

Water-soluble hydroxy-containing acrylic resin (C-1)

The water-soluble hydroxy-containing acrylic resin (C-1) can be produced by (co)polymerizing a polymerizable unsaturated monomer component containing a hydroxy-containing polymerizable unsaturated monomer under general conditions. In view of smoothness of the resulting coating film, the acid value is preferably 10 to 100 mg KOH/g, more preferably 15 to 80 mg KOH/g, and even more preferably 15 to 70 mg KOH/g, and the weight average molecular weight is preferably 1,000 to 100,000, more preferably 3,000 to 80,000, and even more preferably 5,000 to 60,000. In view of curability, the hydroxy value is preferably 20 to 200 mg KOH/g, more preferably 30 to 180 mg KOH/g, and even more preferably 40 to 165 mg KOH/g.

The water-soluble hydroxy-containing acrylic resin (C-1) comprises a polymerizable unsaturated monomer having a hydrophilic functional group, such as an N-substituted (meta)acryl amide, polyoxyalkylene chain-containing (meta)acrylate, hydroxy-containing (meta)acrylate, and/or acid-containing (meta)acrylate, and is in a dissolution state (transparent) in an aqueous medium. Accordingly, the water-soluble hydroxy-containing acrylic resin can be clearly distinguished from the aqueous dispersion of hydroxy-containing acrylic resin (C-2), which is in a dispersion state in an aqueous medium.

The hydroxy-containing polymerizable unsaturated monomer is a compound having at least one hydroxy group and at least one polymerizable unsaturated bond per molecule. Examples thereof include monoesterified products of (meth)acrylic acid with a dihydric alcohol having 2 to 8 carbon atoms, such as 2-hydroxyethyl(meth)acrylate, 2-hydroxypropyl(meth)acrylate, 3-hydroxypropyl(meth)acrylate, and 4-hydroxybutyl(meth)acrylate; ε-caprolactone-modified compounds of the monoesterified products of (meth)acrylic acid with a dihydric alcohol having 2 to 8 carbon atoms; allyl alcohol; and (meth)acrylates having hydroxy-terminated polyoxyethylene chains. These can be used singly, or in a combination of two or more. However, in the present invention, a monomer corresponding to a UV-absorbing functional group-containing polymerizable unsaturated monomer described below should be defined as a separate polymerizable unsaturated monomer copolymerizable with a hydroxy-containing polymerizable unsaturated monomer as described above, and is excluded from the hydroxy-containing polymerizable unsaturated monomer.

Examples of the separate polymerizable unsaturated monomers copolymerizable with the hydroxy-containing polymerizable unsaturated monomer include alkyl or cycloalkyl (meth)acrylates, such as, methyl (meth)acrylate, ethyl (meth)aerylate, *n*-propyl (meth)acrylate, *i*-propyl (meth)acrylate, n-butyl (meth)acrylate, *i*-butyl (meth)acrylate, *tert*-butyl (meth)acrylate, *n*-hexyl (meth)acrylate, octyl (meth)acrylate, 2-ethylhexyl (meth)acrylate, nonyl (meth)acrylate, tridecyl (meth)acrylate, lauryl (meth)acrylate, stearyl (meth)acrylate, "Isostearyl Acrylate" (trade name, Osaka Organic Chemical Industry, Ltd.), cyclohexyl (meth)acrylate, methylcyclohexyl (meth)acrylate, *t*-butylcyclohexyl (meth)acrylate, and cyclododecyl (meth)acrylate; isobornyl-containing polymerizable unsaturated monomers, such as isobornyl (meth)acrylate; adamantyl-containing polymerizable unsaturated monomers, such as adamantyl (meth)acrylate; vinyl aromatic compounds, such as styrene, α-methylstyrene, and vinyltoluene; alkoxysilyl-containing polymerizable unsaturated monomers, such as vinyltrimethoxysilane, vinyltriethoxysilane, vinyltris(2-methoxyethoxy) silane, γ-(meth)acryloyloxypropyltrimethoxysilane, and γ-(meth)acryloyloxypropyltriethoxysilane; perfluoroalkyl (meth)acrylates, such as perfluorobutylethyl (meth)acrylate, and perfluorooctylethyl (meth)acrylate; fluorinated alkyl-containing polymerizable unsaturated monomers, such as fluoroolefins; polymerizable unsaturated monomers having photopolymerizable functional groups, such as maleimide; vinyl compounds such as N-vinylpyrrolidone, ethylene, butadiene, chloroprene, vinyl propionate, and vinyl acetate; carboxy-containing polymerizable unsaturated monomers, such as (meth)acrylic acid, maleic acid, crotonic acid, and β-carboxyethyl acrylate; nitrogen-containing polymerizable unsaturated monomers such as (meth)acrylonitrile, (meth)acrylamide, dimethylaminopropyl(meth)acrylamide, dimethylaminoethyl (meth)acrylate, and adducts of glycidyl (meth)acrylate with amines; (meth)acrylates having alkoxy-terminated polyoxyethylene chains; sulfonic acid group-containing polymerizable unsaturated monomers, such as 2-acrylamido-2-methylpropane-sulfonic acid, allylsulfonic acid, styrenesulfonic acid sodium salts, sulfoethyl methacrylate, and sodium salts or ammonium salts of these sulfonic acids; phosphoric acid group-containing polymerizable unsaturated monomers, such as 2-acryloyloxyethyl acid phosphate, 2-methacryloyloxyethyl acid phosphate, 2-acryloyloxypropyl acid phosphate, and 2-methacryloyloxypropyl acid phosphate;

UV-absorbing functional group-containing polymerizable unsaturated monomers, such as products generated through an addition reaction of glycidyl methacrylate with hydroxybenzophenones, e.g., 2-hydroxy-4-(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy)benzophenone, and 2,2'-dihydroxy-4-(3-acryloyloxy-2-hydroxypropoxy)benzophenone, and 2-(2'-hydroxy-5'-methacryloyloxyethylphenyl)-2H-benzotriazole; UV-stable polymerizable unsaturated monomers, such as 4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)aeryloylamino-2,2,6,6-tetramethylpiperidine, 4-crotonoyloxy-2,2,6,6-tetramethylpiperidine, 4-crotonoylamino-2,2,6,6-tetramethylpiperidine, and 1-crotonoyl-4-crotonoyloxy-2,2,6,6-tetramethylpiperidine; polymerizable unsaturated monomers, such as acrolein, diacetonacrylamide, diacetonmethacrylamide, acetoacetoxyethyl methacrylate, formylstyrol, and $C_{4-7}$ vinyl alkyl ketones (e.g., vinyl methyl ketone, vinyl ethyl ketone, and vinyl butyl ketone); and the like. These monomers can be used singly, or in a combination of two or more.

The water-soluble hydroxy-containing acrylic resin (C-1) preferably uses alkyl or cycloalkyl(meta)acrylate as one of the starting monomers. The proportion of the alkyl or cycloalkyl(meta)acrylate is preferably about 40 to 90 mass%, more preferably about 45 to 85 mass%, and even more preferably about 50 to 80 mass% based on the total amount of the monomer components.

When the water-soluble hydroxy-containing acrylic resin (C-1) has an acid value, the acid value is adjusted by, for example, using as a polymerizable unsaturated monomer component a carboxy-containing polymerizable unsaturated monomer such as (meta)acrylic acid, maleic acid, crotonic acid, and β-carboxyethyl acrylate, and/or other acid-containing polymerizable unsaturated monomer, and adjusting the amounts thereof. When the carboxy-containing polymerizable unsaturated monomer and/or other acid-containing polymerizable unsaturated monomer is used, the proportion of the carboxy-containing polymerizable unsaturated monomer and/or other acid-containing polymerizable unsaturated monomer is preferably about 2 to 30 mass%, more preferably about 3 to 25 mass%, and more preferably about 4 to 20 mass% based on the total amount of the monomer components.

The above acid groups can be neutralized with a neutralizing agent, if necessary. The neutralizing agent is not particularly limited as long as it can neutralize acid groups. Examples of the neutralizing agent include sodium hydroxide, potassium hydroxide, trimethylamine, 2-(dimethylamino)ethanol, 2-amino-2-methyl-1-propanol, triethylamine, aqueous ammonia, and the like. These can be used singly, or in a combination of two or more.

Aqueous dispersion of hydroxy-containing acrylic resin (C-2)

The aqueous dispersion of hydroxy-containing acrylic resin (C-2) can be produced by copolymerizing a polymerizable unsaturated monomer (m) by a known method, such as an emulsion polymerization method in water.

The polymerizable unsaturated monomer (m) constituting the aqueous dispersion of hydroxy-containing acrylic resin (C-2) is not particularly limited, and examples thereof include polymerizable unsaturated group-containing compounds (m-1) to (m-5) shown below.

Examples of the polymerizable unsaturated monomer (m-1) having at least two polymerizable unsaturated groups per molecule include allyl(meth)acrylate, ethylene glycol di(meth)acrylate, triethylene glycol di(meth)acrylate, tetraethylene glycol di(meth)acrylate, 1,3-butylene glycol di(meth)acrylate, trimethylolpropane tri(meth)acrylate, 1,4-butanediol di(meth)acrylate, neopentyl glycol di(meth)acrylate, 1,6-hexanediol di(meth)acrylate, methylene bis(meth)acrylamide, ethylene bis(meth)acrylamide, pentaerythritol di(meth)acrylate, pentaerythritol tetra(meth)acrylate, glycerol di(meth)acrylate, 1,1,1-trishydroxymethylethane di(meth)acrylate, 1,1,1-trishydroxymethylethane tri(meth)acrylate, 1,1,1-trishydroxymethylpropane tri(meth)acrylate, triallyl isocyanurate, diallyl terephthalate, divinylbenzene, and the like.

A monomer obtained by adding at least two types of functional group-containing polymerizable unsaturated monomers and reacting the monomers from each other before, during, and/or after copolymerization of the acrylic resin emulsion can be used as a monomer substantially equivalent to the polymerizable unsaturated monomer (m-1) having two polymerizable unsaturated groups per molecule. Any combination of functional groups can be preferably used as long as the functional groups are reacted from each other; however, the combination of an acid group and a glycidyl group, the combination of an amino group and a glycidyl group, and the combination of a hydroxy group and an isocyanate group are more preferable. Specific examples of the combination of polymerizable unsaturated monomers include (meta)acrylic acid and glycidyl (meta)acrylate, (meth)acryloyloxy alkyl acid phosphate and glycidyl (meta)acrylate, (di)alkylamino ethyl (meta)acrylate and glycidyl (meta)acrylate, hydroxyalkyl (meta)acrylate and (meth)acryloyloxy alkyl isocyanate, and the like. These can be used singly, or in a combination of two or more.

It is also possible to synthesize a reaction product of a polymerizable unsaturated monomer having a reactive functional group, and a compound having at least two functional groups that can react with the reactive functional group of the polymerizable unsaturated monomer; such a reaction product can be preferably used as a polymerizable unsaturated monomer (m-1) having two or more polymerizable unsaturated groups per molecule. Examples thereof include a reaction product of a glycidyl group-containing polymerizable unsaturated monomer and a polybasic acid component,

a reaction product of a hydroxy-containing polymerizable unsaturated monomer and a multifunctional isocyanate compound, and the like. Specific examples include a reaction product of glycidyl(meth)acrylate and adipic acid, a reaction product of hydroxyalkyl(meth)acrylate and hexamethylenediisocyanate. These reaction products can be used singly, or in a combination of two or more.

Examples of the hydroxy-containing polymerizable unsaturated monomer (m-2) include monoesterified products of (meth)acrylic acid and a dihydric alcohol having 2 to 8 carbon atoms, such as 2-hydroxyethyl(meth)acrylate, 2-hydroxypropyl(meth)acrylate, 3-hydroxypropyl(meth)acrylate, and 4-hydroxybutyl(meth)acrylate; ε-caprolactone modified products of the monoesterified products of (meth)acrylic acid with a dihydric alcohol having 2 to 8 carbon atoms; N-hydroxymethyl (meth)acrylamide; allyl alcohol; (meth)acrylates that include hydroxy-terminated polyoxyalkylene chains; and the like.

The polymerizable unsaturated monomer (m-3) having a hydrocarbon group having 4 or more carbon atoms is a polymerizable unsaturated monomer having a linear, branched, or cyclic saturated or unsaturated hydrocarbon group having 4 or more carbon atoms; and monomers having a hydrophilic group, such as hydroxy-containing polymerizable unsaturated monomers, are excluded therefrom. Examples of such monomers include alkyl or cycloalkyl (meth)acrylates, such as *n*-butyl (meth)acrylate, *i*-butyl (meth)acrylate, *t*-butyl (meth)acrylate, *n*-hexyl (meth)acrylate, octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, *t*-butylcyclohexyl (meth)acrylate, cyclododecyl (meth)acrylate, and tricyclodecanyl (meth)acrylate; isobornyl-containing polymerizable unsaturated compounds, such as isobornyl (meth)acrylate; adamantyl-containing polymerizable unsaturated compounds, such as adamantyl (meth)acrylate; and aromatic-ring-containing polymerizable unsaturated monomers, such as benzyl (meth)acrylate, styrene, α-methylstyrene, and vinyltoluene; and the like.

Examples of the carboxy-containing polymerizable unsaturated monomer (m-4) include (meth)acrylic acid, maleic acid, crotonic acid, ß-carboxyethyl acrylate, and the like.

Examples of the polymerizable unsaturated monomer (m-5) other than (m-1) to (m-4) include alkyl(meth)acrylates of 3 carbon atoms or less, such as methyl (meth)acrylate, ethyl (meth)acrylate, *n*-propyl (meth)acrylate, and isopropyl (meth)acrylate; nitrogen-containing polymerizable unsaturated monomers that do not contain a urethane bond, such as (meth)acrylonitrile, (meth)acrylamide, *N,N*-dimethylaminoethyl (meth)acrylate, *N,N*-diethylaminoethyl (meth)acrylate, *N,N*-dimethylaminopropyl (meth)acrylamide, and adducts of glycidyl (meth)acrylate with amine compounds; polymerizable unsaturated monomers having a urethane bond; epoxy-containing polymerizable unsaturated monomers, such as glycidyl (meth)acrylate, ß-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, and allyl glycidyl ether; (meth)acrylates having alkoxy-terminated polyoxyethylene chains; sulfonic-acid-group-containing polymerizable unsaturated monomers, such as 2-acrylamide-2-methylpropanesulfonic acid, 2-sulfoethyl (meth)acrylate, allyl sulfonic acid, 4-styrenesulfonic acid, and sodium salts and ammonium salts of these sulfonic acids; alkoxysilyl-containing polymerizable unsaturated monomers, such as vinyltrimethoxysilane, vinyltriethoxysilane, vinyltris(2-methoxyethoxy) silane, γ-(meth)acryloyloxypropyltrimethoxysilane and γ-(meth)acryloyloxypropyltriethoxysilane; perfluoroalkyl (meth)acrylates, such as perfluorobutylethyl (meth)acrylate and perfluorooctylethyl (meth)acrylate; fluorinated alkyl-containing polymerizable unsaturated monomers such as fluoroolefins; polymerizable unsaturated monomers having photopolymerizable functional groups such as a maleimide group; and the like.

The aqueous dispersion of hydroxy-containing acrylic resin (C-2) is preferably an aqueous dispersion of hydroxy-containing acrylic resin (hereinbelow referred to as "core/shell type aqueous dispersion of hydroxy-containing acrylic resin (C-2-1)") having a core/shell type multilayer structure to obtain a coating film having excellent water resistance, adhesion, and finish appearance by controlling the structure of resin particles. Herein, the "shell" refers to the polymeric layer present as the outermost layer of the resin composite particles, the "core" refers to a polymeric layer inside the resin composite particles other than the shell portion, and the "core/shell type multilayer structure" means a structure having the core portion and the shell portion. The core/shell type multilayer structure generally takes a layered structure such that the core portion is completely covered by the shell portion. However, depending on the mass ratio of the core portion to the shell portion, etc., the monomer amount for the shell portion may be insufficient for forming a layered structure. In that case, a complete layered structure as described above is not necessary. A structure in which the shell portion partially covers the core portion, or a structure in which a polymerizable unsaturated monomer that is a constituent of the shell portion is graft-polymerized at a part of the core portion, may be selected. The concept of the multilayer structure in the above core/shell type multilayer structure also applies to the case in which the core portion of the acrylic urethane resin composite particles (C) of the present invention has a multilayer structure.

The core/shell type aqueous dispersion of hydroxy-containing acrylic resin (C-2-1) has a core/shell structure produced by two-step polymerization in an aqueous medium, and the ratio of the copolymer (1), which constitutes the core portion, to the copolymer (II), which constitutes the shell portion, is within the range of about 10/90 to 90/10, on a solids basis.

Core copolymer (I);

The core copolymer (I) in the core/shell type aqueous dispersion of hydroxy-containing acrylic resin (C-2-1) can use a compound having a polymerizable unsaturated group (m-1) to (m-5) as a constituent monomer component; however, to obtain a multilayer coating film having excellent smoothness, distinctness of image, water resistance, and adhesion, the copolymer preferably contains a polymerizable unsaturated monomer having at least two polymerizable unsaturated groups per molecule as one of the constituent monomer components, and a hydroxy-containing polymerizable unsaturated monomer.

The polymerizable unsaturated monomer having at least two polymerizable unsaturated groups per molecule functions to impart a crosslinked structure to the core copolymer (I). The polymerizable unsaturated monomers listed as the polymerizable unsaturated monomer (m-1) having at least two polymerizable unsaturated groups per molecule can be preferably used singly, or in a combination of two or more. In view of viscosity and coating film performance of the resulting coating composition, methylenebis (meta)acryl amide, aryl (meta)acrylate, and ethylene glycol di(meta)acrylate can be preferably used.

The proportion of the polymerizable unsaturated monomer (m-1) having at least two polymerizable unsaturated groups per molecule can be suitably determined according to the degree of the crosslinking of the core copolymer (I). The proportion of monomer (m-1) is preferably about 0.1 to 10 mass%, more preferably about 0.5 to 8 mass%, and even more preferably about 1 to 6 mass% based on the total mass of the monomers constituting the core copolymer (I).

The hydroxy-containing polymerizable unsaturated monomer introduces a hydroxy group that can be crosslinked with the below-described curing agent component having reactivity with a hydroxy group into the core copolymer (I), and thereby functions to improve chipping resistance and water resistance of the coating film. The polymerizable unsaturated monomers listed as the hydroxy-containing polymerizable unsaturated monomer (m-2) can be preferably used singly, or in a combination of two or more. The use of 2-hydroxyethyl (meta)acrylate, 2-hydroxypropyl (meta)acrylate, 3-hydroxypropyl (meta)acrylate, or 4-hydroxybutyl (meta)acrylate is preferable, and the use of 2-hydroxyethyl (meta)acrylate is more preferable.

In view of excellent stability of the acryl resin emulsion in the aqueous medium and excellent water resistance of the coating film, the hydroxy value of the core copolymer (I) is preferably about 0 to 200 mg KOH/g, more preferably about 25 to 150 mg KOH/g, and even more preferably about 50 to 100 mg KOH/g.

In view of improving the smoothness and distinctness of image of the resulting coating film, other than the polymerizable unsaturated monomer (m-1) having at least two polymerizable unsaturated groups per molecule, and the hydroxy-containing polymerizable unsaturated monomer (m-2), the core copolymer (I) preferably uses a polymerizable unsaturated monomer having a hydrocarbon group having 4 or more carbon atoms, if necessary. As the monomer, the polymerizable unsaturated monomer (m-3) having a hydrocarbon group having 4 or more carbon atoms can be used singly, or in a combination of two or more; however, the use of *n*-butyl (meth)acrylate, *i*-butyl (meth)acrylate, 2-ethylhexyl (meth)acrylate, or styrene is preferable.

By adding an acryl resin emulsion in which a polymerizable unsaturated monomer (m-3) having a hydrocarbon group having 4 or more carbon atoms is copolymerized to the aqueous first colored coating composition, the first colored coating film of lower polarity is obtained, and the mixed layer can be inhibited when the aqueous second colored coating composition is applied on the uncured first colored coating film, thus obtaining a multilayer coating film having excellent smoothness and distinctness of image.

In view of smoothness and distinctness of image of the resulting multilayer coating film, the proportion of the polymerizable unsaturated monomer (m-3) having a hydrocarbon group having 4 or more carbon atoms is preferably 30 to 90 mass%, more preferably about 35 to 85 mass%, and even more preferably about 40 to 80 mass% based on the total mass of the monomers constituting the core copolymer (I).

The polymerizable unsaturated monomer used as a monomer for the core copolymer (I) is not particularly limited as long as the polymerizable unsaturated monomers (m-1) and (m-2) are essential components. For example, those listed as the polymerizable unsaturated monomer (m) constituting the aqueous dispersion of hydroxy-containing acrylic resin (C-2) can be preferably used, as necessary. Other than the polymerizable unsaturated monomer (m-1) having two or more polymerizable unsaturated groups per molecule, hydroxy-containing polymerizable unsaturated monomer (m-2), and the polymerizable unsaturated monomer (m-3) having a hydrocarbon group having 4 or more carbon atoms, methyl (meta)acrylate, ethyl (meta)acrylate, *n*-propyl (meta)acrylate, *i*-propyl (meta)acrylate, and the like can be listed. These monomers can be used singly, or in a combination of two or more.

Shell copolymer (II);

The shell copolymer (II) of the core/shell type aqueous dispersion of hydroxy-containing acrylic resin (C-2-1) is preferably a copolymer comprising a hydroxy-containing polymerizable unsaturated monomer and a carboxy-containing polymerizable unsaturated monomer as constituent monomer components.

The hydroxy-containing polymerizable unsaturated monomer introduces a hydroxy group that can be crosslinked with the below-described curing agent component having reactivity with a hydroxy group into an aqueous dispersion of hydroxy-containing acrylic resin (C-2), and thereby functions to enhance the water resistance, etc., of the coating film and to enhance the stability of the acryl resin emulsion in an aqueous medium. The polymerizable unsaturated monomers listed as the hydroxy-containing polymerizable unsaturated monomer (m-2) can be used singly, or in a combination of two or more; however, the use of 2-hydroxyethyl (meta)acrylate, 2-hydroxypropyl (meta)acrylate, 3-hydroxypropyl (meta)acrylate, or 4-hydroxybutyl (meta)acrylate is preferable, and the use of 2-hydroxyethyl (meta)acrylate is more preferable.

In view of excellent stability of the acrylic resin in the aqueous medium and excellent water resistance of the coating film, the hydroxy value of the shell copolymer (II) is preferably about 50 to 200 mg KOH/g, more preferably about 50 to 150 mg KOH/g, and even more preferably about 50 to 100 mg KOH/g.

The carboxy-containing polymerizable unsaturated monomer functions to enhance the stability of the resulting acrylic resin emulsion in an aqueous medium. The polymerizable unsaturated monomers listed as the carboxy-containing polymerizable unsaturated monomer (m-4) can be preferably used singly, or in a combination of two or more; however, the use of (meth)acrylic acid is preferable.

In view of smoothness and distinctness of image of the resulting coating film, it is preferable not to use, as the polymerizable unsaturated monomer used as the monomer for the shell copolymer (II), the polymerizable unsaturated monomer (m-1) having two or more polymerizable unsaturated groups per molecule to form an uncrosslinked copolymer (II).

Polymerizable unsaturated monomers other than the hydroxy-containing polymerizable unsaturated monomer and carboxy-containing polymerizable unsaturated monomer used as the monomers for the shell copolymer (II) are not particularly limited. For example, those listed as the polymerizable unsaturated monomer (m) constituting the aqueous dispersion of hydroxy-containing acrylic resin (C-2) can be preferably used, as necessary. Other than the hydroxy-containing polymerizable unsaturated monomer (m-2) and the carboxy-containing polymerizable unsaturated monomer (m-4),

methyl (meta)acrylate, ethyl (meta)acrylate, *n*-propyl (meta)acrylate, isopropyl (meta)acrylate, *n*-butyl (meta)acrylate, and the like, can be listed. These monomers can be used singly, or in a combination of two or more.

In view of improving the luster of the coating film, the ratio of core copolymer (I)/shell copolymer (II) in the core/shell type aqueous dispersion of hydroxy-containing acrylic resin (C-2-1) is preferably about 10/90 to 90/10, more preferably about 50/50 to 85/15, and even more preferably about 65/35 to 80/20, on a solids basis.

In view of storage stability of the aqueous first colored coating composition (X), and smoothness, distinctness of image, water resistance, etc., of the resulting coating film, the aqueous dispersion of hydroxy-containing acrylic resin (C-2) has an acid value of preferably about 5 to 25 mg KOH/g, more preferably about 8 to 20 mg KOH/g, and even more preferably about 10 to 15 mg KOH/g.

The aqueous dispersion of hydroxy-containing acrylic resin (C-2) preferably has a glass transition temperature (Tg) of 20°C or more, more preferably about 21 to 100°C, and more preferably 22 to 60°C in view of smoothness and distinctness of image of the multilayer coating film. The glass transition temperature (Tg) is obtained by the differential-scanning-calorimetry method (DSC) according to JIS K 7121 (plastic transition temperature measurement method).

The emulsion polymerization for preparing an emulsion of the core copolymer (I) can be performed according to known methods. For example, the emulsion can be prepared by subjecting the monomer mixture to emulsion polymerization using a polymerization initiator in the presence of an emulsifier.

For the emulsifier, anionic emulsifiers and nonionic emulsifiers are suitable. Examples of the anionic emulsifier include sodium salts and ammonium salts of alkylsulfonic acids, alkylbenzenesulfonic acids, alkylphosphoric acids, etc. Examples of the nonionic emulsifier include polyoxyethylene oleyl ether, polyoxyethylene stearyl ether, polyoxyethylene lauryl ether, polyoxyethylene tridecyl ether, polyoxyethylene phenyl ether, polyoxyethylene nonylphenyl ether, polyoxyethylene octylphenyl ether, polyoxyethylene monolaurate, polyoxyethylene monostearate, polyoxyethylene monooleate, sorbitan monolaurate, sorbitan monostearate, sorbitan trioleate, polyoxyethylene sorbitan monolaurate, and the like.

Other examples of usable emulsifiers include polyoxyalkylene-containing anionic emulsifiers that have an anionic group and a polyoxyalkylene group (e.g., a polyoxyethylene group or a polyoxypropylene group) per molecule; and reactive anionic emulsifiers that have an anionic group and a radical polymerizable unsaturated group per molecule. Among these, reactive anionic emulsifiers are preferable.

Examples of the reactive anionic emulsifier include sodium salts of sulfonic acid compounds having a radical polymerizable unsaturated group, such as allyl, methallyl, (meth)acryloyl, propenyl, or butenyl; ammonium salts of such sulfonic acid compounds; and the like. Among these, ammonium salts of sulfonic acid compounds having a radical polymerizable unsaturated group are preferable in view of excellent water resistance of the resulting coating film. Examples of commercially available ammonium salts of such sulfonic acid compounds include Latemul S-180A (trade name, produced by Kao Corporation).

Among the ammonium salts of sulfonic acid compounds having a radical polymerizable unsaturated group, ammonium salts of sulfonic acid compounds having a radical polymerizable unsaturated group and a polyoxyalkylene group are particularly preferable. Commercially available ammonium salts of sulfonic acid compounds having a radical polymerizable unsaturated group and a polyoxyalkylene group include Aqualon KH-10 (trade name, produced by Dai-Ichi Kogyo Seiyaku Co., Ltd.), SR-1025A (trade name, produced by Adeka Co., Ltd.), and the like. The amount of the emulsifier is preferably about 0.1 to 15 mass%, more preferably about 0.5 to 10 mass%, and even more preferably about 1 to 5 mass%, based on the total mass of the monomers used.

Examples of the polymerization initiator include organic peroxides such as benzoyl peroxide, octanoyl peroxide, lauroyl peroxide, stearoyl peroxide, cumene hydroperoxide, *tert*-butyl peroxide, *tert*-butyl peroxylaurate, *tert*-butyl peroxyisopropylcarbonate, *tert*-butyl peroxyacetate, and diisopropylbenzene hydroperoxide; azo compounds such as azobisisobutyronitrile, azobis(2,4-dimethylvaleronitrile), azobis(2-methylpropionenitrile), azobis(2-methylbutyronitrile), 4,4'-azobis(4-cyanobutanoic acid), dimethyl azobis(2-methyl propionate), azobis[2-methyl-*N*-(2-hydroxyethyl)-propionamide], and azobis[2-methyl-*N*-[2-(1-hydroxy butyl)]-propionamide]; persulfates such as potassium persulfate, ammonium persulfate, and sodium persulfate; and the like. Such polymerization initiators can be used singly, or in a combination of two or more. Redox initiators prepared by combining a polymerization initiator as mentioned above with a reducing agent such as sugar, sodium formaldehyde sulfoxylate, and iron complex may also be used.

Generally, the amount of the polymerization initiator is preferably about 0.1 to 5 mass%, and more preferably about 0.2 to 3 mass%, based on the total mass of all of the monomers used. The method of adding the polymerization initiator is not particularly limited, and can be suitably selected according to the type, amount, etc., of the polymerization initiator. For example, the polymerization initiator may be incorporated into a monomer mixture or an aqueous medium beforehand, or may be added dropwise or at one time during polymerization.

The core/shell type aqueous dispersion of hydroxy-containing acrylic resin (C-2-1) can be obtained by adding a polymerizable unsaturated monomer mixture of the shell portion to the emulsion of the core copolymer (I) obtained above, and further performing polymerization to form a shell copolymer (II).

The monomer mixture for forming the shell copolymer (II) may optionally contain other components, such as polymerization initiators, chain transfer agents, reducing agents, and emulsifiers as mentioned above. The monomer mixture is preferably added dropwise as a monomer emulsion obtained by dispersing the monomer mixture into an aqueous medium, although it may also be added dropwise unmodified. When it is added dropwise as a monomer emulsion, the particle diameter of the monomer emulsion is not particularly limited.

The method for polymerizing the monomer mixture for forming the shell copolymer (II) comprises, for example, adding the monomer mixture or emulsion thereof dropwise to the emulsion of the core copolymer (I) at one time or gradually), and heating the mixture to a suitable temperature while stirring.

The core/shell type aqueous dispersion of hydroxy-containing acrylic resin (C-2) thus obtained has a core/shell type multiple-layer structure, and generally has a mean particle diameter of about 10 to 1,000 nm, preferably about 40 to 500 nm, and more preferably 70 to 200 nm.

In this specification, the mean particle diameter of the core/shell type aqueous dispersion of hydroxy-containing acrylic resin (C-2) refers to a value obtained by measurement at 20°C using a submicron particle size distribution analyzer after dilution with deionized water according to a usual method. For example, a Coulter N4 (trade name, produced by Beckman Coulter, Inc.) may be used as the submicron particle size distribution analyzer.

To improve the mechanical stability of the particles of the aqueous dispersion of hydroxy-containing acrylic resin (C-2), acid groups such as carboxy groups of the acrylic resin emulsion are preferably neutralized with a neutralizing agent. The neutralizing agent is not particularly limited, as long as it can neutralize acid groups. Examples of the neutralizing agent include sodium hydroxide, potassium hydroxide, trimethylamine, 2-(dimethylamino)ethanol, 2-amino-2-methyl-1-propanol, triethylamine, aqueous ammonia, and the like. Such a neutralizing agent is preferably used in an amount such that the pH of the aqueous dispersion of the acrylic resin emulsion after neutralization is about 6.5 to about 9.0.

If the aqueous first colored coating composition (X) contains a hydroxy-containing acrylic resin (C), the blending ratio of the water-soluble hydroxy-containing acrylic resin (C-1) to aqueous dispersion of hydroxy-containing acrylic resin (C-2) is preferably in the range of (c-1)/(C-2) = 0/100 to 40/60, more preferably 0/100 to 30/70, and even more preferably 0/100 to 25/75, on a solids basis, in view of smoothness, distinctness of image, water resistance, adhesion, etc., of the resulting multilayer coating film.

In view of smoothness, distinctness of image, water resistance, adhesion, etc., of the resulting multilayer coating film, the amounts of the acrylic modified polyester resin (A), the blocked polyisocyanate compound (B), and the hydroxy-containing acrylic resin (C) are preferably as follows based on 100 parts by mass of the total resin solids in the aqueous first colored coating composition (X).

The amount of component (A) is 10 to 60 parts by mass, preferably 15 to 57 parts by mass, and more preferably 15 to 50 parts by mass.

The amount of component (B) is 5 to 40 parts by mass, preferably 5 to 38 parts by mass, and more preferably

5 to 35 parts by mass.

The amount of component (C) is 0 to 50 parts by mass, preferably 5 to 40 parts by mass, and more preferably 10 to 30 parts by mass.

The aqueous first colored coating composition (X) includes a resin other than the hydroxy-containing acrylic resin (C).

Examples of the resin include polyester resin, polyurethane resin, epoxy resin, alkyd resin, and the like. In particular, the smoothness, distinctness of image, water resistance, adhesion, etc., of the resulting multilayer coating film, polyester resin and polyurethane resin are preferable.

Polyester resin (D)

The polyester resin (D) can generally be produced by an esterification reaction or transesterification reaction of an acid component with an alcohol component. The polyester resin (D) is preferably a hydroxy-containing polyester resin.

The acid component may be a compound that is generally used as an acid component for producing a polyester resin. Examples of the acid component include aliphatic polybasic acids, alicyclic polybasic acids, aromatic polybasic acids, and the like.

Generally, aliphatic polybasic acids include aliphatic compounds having at least two carboxy groups per molecule; acid anhydrides of such aliphatic compounds; and esters of such aliphatic compounds. Examples of aliphatic polybasic acids include succinic acid, glutaric acid, adipic acid, pimelic acid, suberic acid, azelaic acid, sebacic acid, undecanedioic acid, dodecanedioic acid, brassylic acid, octadecanedioic acid, citric acid, butanetetracarboxylic acid, and like aliphatic polycarboxylic acids; anhydrides of such aliphatic polycarboxylic acids; esters of such aliphatic polycarboxylic acids with lower alkyls having about 1 to 4 carbon atoms; and the like. Such aliphatic polybasic acids can be used singly, or in a combination of two or more.

In view of smoothness of the resulting coating film, it is particularly preferable to use adipic acid and/or adipic anhydride as the aliphatic polybasic acid.

Generally, alicyclic polybasic acids include compounds having at least one alicyclic structure and at least two carboxy groups per molecule; acid anhydrides of such compounds; and esters of such compounds. The alicyclic structure is typically a 4-6 membered ring structure. Examples of alicyclic polybasic acids include 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid, 1,3,5-cyclohexanetricarboxylic acid, and like alicyclic polycarboxylic acids; anhydrides of such alicyclic polycarboxylic acids; esters of such alicyclic polycarboxylic acids with lower alkyls having about 1 to 4 carbon atoms; and the like. Such alicyclic polybasic acids can be used singly, or in a combination of two or more.

In view of smoothness of the resulting coating film, preferable alicyclic polybasic acids include 1,2-cyclohexanedicarboxylic acid, 1,2-cyclohexanedicarboxylic acid anhydride, 1,3-cyclohexanedicarboxylic acid, 1,4-cyclohexanedicarboxylic acid, 4-cyclohexene-1,2-dicarboxylic acid, and 4-cyclohexene-1,2-dicarboxylic acid anhydride. It is particularly preferable to use 1,2-cyclohexanedicarboxylic acid and/or 1,2-cyclohexanedicarboxylic acid anhydride.

Generally, aromatic polybasic acids include aromatic compounds having at least two carboxy groups per molecule; acid anhydrides of such aromatic compounds; and esters of such aromatic compounds. Examples of aromatic polybasic acids include phthalic acid, isophthalic acid, terephthalic acid, naphthalenedicarboxylic acid, 4,4'-biphenyldicarboxylic acid, trimellitic acid, pyromellitic acid, and like aromatic polycarboxylic acids; anhydrides of such aromatic polycarboxylic acids; esters of such aromatic polycarboxylic acids with lower alkyls having about 1 to 4 carbon atoms; and the like. Such aromatic polybasic acids can be used singly, or in a combination of two or more.

Preferable aromatic polybasic acids include phthalic acid, phthalic acid anhydride, isophthalic acid, trimellitic acid, and trimellitic acid anhydride.

Acid components other than aliphatic polybasic acids, alicyclic polybasic acids, and aromatic polybasic acids can also be used. Such other acid components are not particularly limited, and include, for example, coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, safflower oil fatty acid, and like fatty acids; lauric acid, myristic acid, palmitic acid, stearic acid, oleic acid, linoleic acid, linolenic acid, benzoic acid, *p-tert*-butyl benzoic acid, cyclohexanoic acid, 10-phenyloctadecanoic acid, and like monocarboxylic acids; lactic acid, 3-hydroxybutanoic acid, 3-hydroxy-4-ethoxybenzoic acid, and like hydroxycarboxylic acids; and the like. Such acid components can be used singly, or in a combination of two or more.

Polyhydric alcohols having at least two hydroxy groups per molecule can be preferably used as the alcohol component. Examples of such polyhydric alcohols include dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxypivalic acid neopentyl glycol ester, hydrogenated bisphenol A, hydrogenated bisphenol F, and dimethylolpropionic acid; polylactone diols obtained by adding lactone compounds, such as ε-caprolactone, to such dihydric alcohols; ester diol compounds such as bis(hydroxyethyl) terephthalate; polyether diol compounds such as alkylene oxide adducts of bisphenol A, polyethylene glycols, polypropylene glycols, and polybutylene glycols; trihydric or higher polyhydric alcohols such as glycerol, trimethylolethane, trimethylolpropane, diglycerol, triglycerol, 1,2,6-hexanetriol, pentaerythritol, dipentaerythritol, tris(2-hydroxyethyl)isocyanuric acid, sorbitol, and mannitol; polylactone polyol compounds obtained by adding lactone compounds, such as ε-caprolactone, to such trihydric or higher polyhydric alcohols; glycerin fatty acid esters; and the like.

Alcohol components other than polyhydric alcohols can also be used. Such other alcohol components are not particularly limited and include, for example, monohydric alcohols such as methanol, ethanol, propyl alcohol, butyl alcohol, stearyl alcohol, and 2-phenoxyethanol; and alcohol compounds obtained by reacting monoepoxy compounds with acids, such as propylene oxide, butylene oxide, and "Cardura E10" (trade name, produced by Hexion Specialty Chemicals; glycidyl ester of a synthetic highly branched saturated fatty acid).

The method for producing the polyester resin (D) is not particularly limited, and may be performed by any usual method. For example, the acid component and the alcohol component can be heated in a nitrogen stream at 150 to 250°C for 5 to 10 hours to carry out an esterification reaction or transesterification reaction of the acid component with the alcohol component, thus providing a polyester resin (D).

For the esterification reaction or transesterification reaction, the acid component and the alcohol component may be added to a reaction vessel at one time, or one or both of the components may be added in several portions. Alternatively, a hydroxy-containing polyester resin may be first synthesized and then reacted with an acid anhydride for half-esterification to obtain a carboxy- and hydroxy-containing polyester resin. Further alternatively, a carboxy-containing polyester resin may first be synthesized, and an alcohol component as mentioned above may be added to obtain a hydroxy-containing polyester resin.

As a catalyst for promoting the esterification or transesterification reaction, known catalysts are usable. Examples thereof include dibutyltin oxide, antimony trioxide, zinc acetate, manganese acetate, cobalt acetate, calcium acetate, lead acetate, tetrabutyl titanate, tetraisopropyl titanate, and the like.

The polyester resin (D) can be modified with a fatty acid, a monoepoxy compound, a polyisocyanate compound, or the like, during or after the preparation of the resin.

Examples of the fatty acid include coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, safflower oil fatty acid, and the like. Preferable examples of the monoepoxy compound include "Cardura E10" (trade name, produced by Hexion Specialty Chemicals; glycidyl ester of a synthetic highly branched saturated fatty acid).

Examples of the polyisocyanate compound include aliphatic diisocyanate compounds such as lysine diisocyanate, hexamethylene diisocyanate, and trimethylhexane diisocyanate; alicyclic diisocyanate compounds such as hydrogenated xylylene diisocyanate, isophorone diisocyanate, methylcyclohexane-2,4-diisocyanate, methylcyclohexane-2,6-diisocyanate, 4,4'-methylene bis(cyclohexylisocyanate), and 1,3-(isocyanatomethyl)cyclohexane; aromatic diisocyanate compounds such as tolylene diisocyanate, xylylene diisocyanate, and diphenylmethane diisocyanate; organic polyisocyanates such as lysine triisocyanate and like tri- or higher polyisocyanates; adducts of such organic polyisocyanates with polyhydric alcohols, low-molecular-weight polyester resins, water, etc.; cyclopolymers (e.g., isocyanurate) and biuret adducts of such organic polyisocyanates; and the like. Such polyisocyanate compounds can be used singly, or in a combination of two or more.

In view of excellent smoothness and water resistance of the resulting coating film, the polyester resin (D) is preferably such that the amount of the alicyclic polybasic acid in the starting acid components is preferably 40 to 100 mol%, more preferably 60 to 100 mol%, and even more preferably 75 to 100 mol%, based on the total amount of the acid components. In particular, in view of excellent smoothness of the resulting coating film, the alicyclic polybasic acid is preferably 1,2-cyclohexanedicarboxylic acid and/or 1,2-cyclohexanedicarboxylic acid anhydride.

The polyester resin (D) preferably has a hydroxy value of 10 to 200 mg KOH/g, more preferably 50 to 180 mg KOH/g, and even more preferably 70 to 170 mg KOH/g.

When the polyester resin (D) further comprises a carboxyl group, its acid value is preferably about 5 to 100 mg KOH/g, more preferably about 10 to 80 mg KOH/g, and even more preferably 10 to 60 mg KOH/g.

The number average molecular weight of the polyester resin (D) is preferably 500 to 50,000, more preferably 1,000 to 30,000, and even more preferably 1,200 to 10,000.

The method for measuring the number average molecular weight is according to the method described in the explanation of the acrylic modified polyester (A).

When the aqueous first colored coating composition (X) comprises the polyester resin (D), the amount of the polyester resin (D) is preferably 1 to 50 mass%, more preferably 2 to 40 mass%, and even more preferably 3 to 30 mass%, based on 100 parts by mass of the total resin solids content of the aqueous first colored coating composition (X).

Polyurethane resin

Examples of the polyurethane resin include a resin prepared by reacting at least one diisocyanate compound selected from the group consisting of aliphatic diisocyanate compounds, alicyclic diisocyanate compounds, and aromatic diisocyanate compounds with at least one polyol compound selected from the group consisting of polyether polyols, polyester polyols, and polycarbonate polyols.

Specifically, a urethane prepolymer is produced by reacting at least one diisocyanate selected from aliphatic diisocyanates and alicyclic diisocyanates, at least one diol selected from polyetherdiols, polyesterdiols, and polycarbonate diols, a low-molecular-weight polyhydroxy compound, and dimethanol alkanoic acid; the urethane prepolymer is neutralized with a tertiary amine, and emulsified and dispersed in water; and, if necessary, the resulting emulsion is mixed with an aqueous medium containing a chain extender, such as a polyamine, a crosslinking agent, and/or a terminator, to perform a reaction until substantially no isocyanate groups remain. The above method usually yields a self-emulsifiable polyurethane resin with an average particle diameter of about 0.001 to 3 $\mu$m.

When the aqueous first colored coating composition (X) comprises a polyurethane resin, the amount of the polyurethane resin is 2 to 50 mass%, preferably 5 to 40 mass%, and even more preferably 8 to 30 mass% based on 100 parts by mass of the total resin solids content of the aqueous first colored coating composition (X).

It is preferable that the aqueous first colored coating composition (X) further contain a curing agent (E) other than the blocked polyisocyanate compound (B), in view of water resistance, adhesion, curability, etc., of the resulting coating film.

Curing agent (E) other than blocked polyisocyanate compound (B)

The curing agent (E) other than the blocked polyisocyanate compound (B) (hereinbelow sometimes abbreviated as "curing agent (E)") is a compound that can react with a crosslinkable functional group, such as hydroxy, carboxy, or epoxy, in the acrylic modified polyester resin (A), and the hydroxy-containing acrylic resin (C) and hydroxy-containing resins other than the hydroxy-containing acrylic resin (C), which are optionally used, to thereby cure the aqueous first colored coating composition (X). Examples of the curing agent (E) include amino resins, polyisocyanate compounds, blocked polyisocyanate compounds other than the component (B), epoxy-containing compounds, carboxy-containing compounds, carbodiimide-containing compounds, and the like. Among these, amino resins and blocked polyisocyanate compounds other than the component (B), which can react with hydroxy, and carbodiimide-containing compounds, which can react with carboxy, are preferable in view of water resistance of the resulting coating film, and amino resins are more preferable.

Such curing agents (E) can be used singly, or in a combination of two or more.

Examples of usable amino resins include partially or fully methylolated amino resins obtained by reacting amino components with aldehyde components. Examples of the amino components include melamine, urea, benzoguanamine, acetoguanamine, steroguanamine, spiroguanamine, dicyandiamide, and the like. Examples of the aldehyde components include formaldehyde, paraformaldehyde, acetaldehyde, benzaldehyde, and the like.

The methylolated amino resins in which some or all of the methylol groups have been etherified with suitable alcohols are also usable. Examples of alcohols that can be used for the etherification include methyl alcohol, ethyl alcohol, *n*-propyl alcohol, *i*-propyl alcohol, *n*-butyl alcohol, *i*-butyl alcohol, 2-ethyl-1-butanol, 2-ethyl-1-hexanol, and the like.

The amino resin is preferably a melamine resin. In particular, a methyl-etherified melamine resin obtained by etherifying some or all of the methylol groups of a partially or fully methylolated melamine resin with methyl alcohol; a butyl-etherified melamine resin obtained by etherifying some or all of the methylol groups of a partially or fully methylolated melamine resin with butyl alcohol; and a methyl-butyl-etherified melamine resin obtained by etherifying some or all of the methylol groups of a partially or fully methylolated melamine resin with methyl alcohol and butyl alcohol are preferable. A methyl-butyl mixed etherified melamine resin is more preferable. The amino resin may be imino-containing melamine resin.

The melamine resin preferably has a weight average molecular weight of 400 to 6,000, more preferably 500 to 4,000, and even more preferably 600 to 3,000.

Commercially available melamine resins can be used as the melamine resin. Examples of such commercially available products include "Cymel 202," "Cymel 203," "Cymel 204," "Cymel 211," "Cymel 238," "Cymel 250," "Cymel 303," "Cymel 323," "Cymel 324," "Cymel 325," "Cymel 327," "Cymel 350," "Cymel 385," "Cymel 1156," "Cymel 1158," "Cymel 1116," and "Cymel 1130" (all produced by Nihon Cytec Industries Inc.); "U-VAN 120," "U-VAN 20HS," "U-VAN

20SE60," "U-VAN 2021," "U-VAN 2028," and "U-VAN 28-60" (all produced by Mitsui Chemicals, Inc.); and the like.

When a melamine resin is used as the curing agent, a sulfonic acid such as para-toluenesulfonic acid, dodecylbenzenesulfonic acid, and dinonylnaphthalene sulfonic acid; salts of these acids with amine compounds; and the like can be used as a catalyst.

The blocked polyisocyanate compound other than the component (B) is a compound obtained by blocking isocyanate groups of the polyisocyanate compound having at least two isocyanate groups per molecule with a blocking agent.

Examples of the polyisocyanate compound having at least two isocyanate groups per molecule include aliphatic diisocyanate compounds such as hexamethylene diisocyanate, trimethylhexamethylene diisocyanate, dimer acid diisocyanate, and lysine diisocyanate; alicyclic diisocyanate compounds such as hydrogenated xylylene diisocyanate, cyclohexylene diisocyanate, and isophorone diisocyanate; aromatic diisocyanate compounds such as tolylene diisocyanate, phenylene diisocyanate, 4,4'-diphenylmethane diisocyanate, xylylene diisocyanate, tetramethylxylylene diisocyanate, and naphthalene diisocyanate; trivalent or higher organic polyisocyanate compounds such as 2-isocyanatoethyl-2,6-diisocyanatocaproate, 3-isocyanatomethyl-1,6-hexamethylene diisocyanate, and 4-isocyanatomethyl-1,8-octamethylene diisocyanate (common name: triaminononane triisocyanate); dimers and trimers of such polyisocyanate compounds (biurets, isocyanurates, etc.); prepolymers obtained by urethanization reactions of such polyisocyanate compounds with polyhydric alcohols, low-molecular-weight polyester resins, or water, under conditions such that isocyanate groups are present in excess; and the like.

Examples of the blocking agent include phenol compounds such as phenol, cresol, xylenol, nitrophenol, ethylphenol, hydroxydiphenyl, butylphenol, isopropylphenol, nonylphenol, octylphenol, and methyl hydroxybenzoate; lactam compounds such as $\varepsilon$-caprolactam, $\delta$-valerolactam, $\gamma$-butyrolactam, and $\beta$-propiolactam; aliphatic alcohol compounds such as methanol, ethanol, propyl alcohol, butyl alcohol, amyl alcohol, and lauryl alcohol; ether compounds such as ethylene glycol monomethyl ether, ethylene glycol monoethyl ether, ethylene glycol monobutyl ether, diethylene glycol monomethyl ether, diethylene glycol monoethyl ether, propylene glycol monomethyl ether, and methoxymethanol; alcohol compounds such as benzyl alcohol, glycolic acid, methyl glycolate, ethyl glycolate, butyl glycolate, lactic acid, methyl lactate, ethyl lactate, butyl lactate, methylol urea, methylol melamine, diacetone alcohol, 2-hydroxyethyl acrylate, and 2-hydroxyethyl methacrylate; oxime compounds such as formamide oxime, acetamide oxime, acetoxime, methyl ethyl ketoxime, diacetyl monoxime, benzophenone oxime, and cyclohexane oxime; active methylene compounds such as dimethyl malonate, diethyl malonate, ethyl acetoacetate, methyl acetoacetate, and acetylacetone; mercaptan compounds such as butyl mercaptan, *t*-butyl mercaptan, hexyl mercaptan, *t*-dodecyl mercaptan, 2-mercaptobenzothiazole, thiophenol, methylthiophenol, and ethylthiophenol; acid amide compounds such as acetanilide, acetanisidide, acetotoluide, acrylamide, methacrylamide, acetic acid amide, stearic acid amide, and benzamide; imide compounds such as succinimide, phthalimide, and maleimide; amine compounds such as diphenylamine, phenylnaphthylamine, xylidine, *N*-phenylxylidine, carbazole, aniline, naphthylamine, butylamine, dibutylamine, and butylphenylamine; imidazole compounds such as imidazole and 2-ethylimidazole; urea compounds such as urea, thiourea, ethylene urea, ethylenethiourea, and diphenylurea; carbamate compounds such as phenyl *N*-phenylcarbamate; imine compounds such as ethyleneimine and propyleneimine; sulfite compounds such as sodium bisulfite and potassium bisulfite; azole-based compounds; and the like. Examples of such azole-based compounds include pyrazole or pyrazole derivatives such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; imidazole or imidazole derivatives such as imidazole, benzimidazole, 2-methylimidazole, 2-ethylimidazole, and 2-phenylimidazole; and imidazoline derivatives such as 2-methylimidazoline and 2-phenylimidazoline.

Particularly preferable blocking agents are, for example, oxime-based blocking agents, active methylene-based blocking agents other than the component (B), and pyrazole or pyrazole derivatives.

As the blocking agent, a hydroxycarboxylic acid that has at least one hydroxy group and at least one carboxy group, such as hydroxypivalic acid or dimethylolpropionic acid, can also be used. Blocked polyisocyanate compounds that are rendered water-dispersible by blocking their isocyanate groups with the hydroxycarboxylic acid, and then neutralizing the carboxy group of the hydroxycarboxylic acid are particularly preferable for use.

As the carbodiimide-containing compound, for example, those obtained by reacting isocyanate groups of the polyisocyanate compound with each other to remove carbon dioxide can be used. As the carbodiimide-containing compound, commercially available products can also be used. Examples of such commercially available products include "Carbodilite V-02," "Carbodilite V-02-L2," "Carbodilite V-04," "Carbodilite E-01," and "Carbodilite E-02" (trade names, all produced by Nisshinbo).

When the aqueous first colored coating composition (X) contains a curing agent (E), the proportion of the curing agent (E) is preferably 1 to 40 parts by mass, more preferably 3 to 35 parts by mass, and even more preferably 5 to 30 parts by mass based on 100 parts by mass of the total resin solids content of the aqueous first colored coating composition (X), in view of improving water resistance, adhesion, and finish appearance of the coating film. Hereinbelow, the blocked polyisocyanate compound (B) and the curing agent (E) are sometimes collectively referred to as "curing agent component."

Pigment

The aqueous first colored coating composition (X) preferably contains a pigment. Examples of the pigment include color pigments, extender pigments, effect pigments, and the like. Such pigments can be used singly, or in a combination of two or more.

When the aqueous first colored coating composition (X) contains a pigment, the amount of the pigment is generally 1 to 500 parts by mass, preferably 3 to 400 parts by mass, and more preferably 5 to 300 parts by mass based on 100 parts by mass of the total resin solids content. It is particularly preferable that the aqueous first colored coating composition (X) contains a color pigment and/or an extender pigment, and that the total amount of the color pigment and the extender pigment in the aqueous first colored coating composition (X) is preferably 1 to 500 parts by mass, more preferably 3 to 400 parts by mass, and even more preferably 5 to 300 parts by mass based on 100 parts by mass of the total resin solids content of the aqueous first colored coating composition (X).

Examples of the color pigment include titanium oxide, zinc flower, carbon black, molybdenum red, Prussian blue, cobalt blue, azo pigments, phthalocyanine pigments, quinacridone pigments, isoindoline pigments, threne pigments, perylene pigments, dioxazine pigments, diketopyrrolopyrrole pigments, and the like. Among these, titanium oxide and carbon black are preferable.

When the aqueous first colored coating composition (X) contains a color pigment as described above, the amount of the color pigment is generally 1 to 300 parts by mass, preferably 3 to 250 parts by mass, and more preferably 5 to 200 parts by mass based on 100 parts by mass of the total resin solids content of the aqueous first colored coating composition (X).

Examples of the extender pigment include clay, kaolin, barium sulfate, barium carbonate, calcium carbonate, talc, silica, alumina white, and the like. Among these, barium sulfate and talc are preferable. It is particularly preferable that barium sulfate with an average primary particle diameter of 1 $\mu$m or less, more preferably 0.01 to 0.8 $\mu$m, is used as an extender pigment, because a multilayer coating film with an excellent appearance as well as excellent smoothness can be obtained.

The average primary particle diameter of barium sulfate as used in the present invention is determined by observing barium sulfate by using a scanning electron microscope, and averaging the maximum diameters of 20 barium sulfate particles on a straight line drawn at random on the electron microscope photograph.

When the aqueous first colored coating composition (X) contains an extender pigment as described above, the amount of the extender pigment is generally 1 to 300 parts by mass, preferably 5 to 250 parts by mass, and more preferably 10 to 200 parts by mass based on 100 parts by mass of the total resin solids content of the aqueous first colored coating composition (X).

Examples of the effect pigment include aluminum (such as vapor-deposited aluminum), copper, zinc, brass, nickel, aluminum oxide, mica, titanium oxide- and/or iron oxide-coated aluminum oxide, titanium oxide- and/or iron oxide-coated mica, glass flakes, holographic pigments, and the like. Such effect pigments can be used singly, or in a combination of two or more. Examples of the aluminum pigments include non-leafing aluminum pigments and leafing aluminum pigments; any of the pigments can be used.

When the aqueous first colored coating composition (X) contains a effect pigment as described above, the amount of the effect pigment is generally 1 to 50 parts by mass, preferably 2 to 30 parts by mass, and more preferably 3 to 20 parts by mass based on 100 parts by mass of the total resin solids content of the aqueous first colored coating composition (X).

The aqueous first colored coating composition (X) preferably further contains a hydrophobic solvent in view of improving smoothness and distinctness of image of the resulting coating film.

The hydrophobic solvent is desirably an organic solvent of which a mass of 10 g or less, preferably 5 g or less, and more preferably 1 g or less, dissolves in 100 g of water at 20°C.

The hydrophobic solvent is preferably an alcohol hydrophobic solvent. $C_{7-14}$ hydrophobic alcoholic solvents are particularly preferable. It is more preferable to use at least one hydrophobic alcoholic solvent selected from the group consisting of 1-octanol, 2-octanol, 2-ethyl-1-hexanol, ethylene glycol mono-2-ethylhexyl ether, propylene glycol mono-*n*-butyl ether, and dipropylene glycol mono-*n*-butyl ether.

When the aqueous first colored coating composition (X) contains a hydrophobic solvent as mentioned above, the amount of the hydrophobic solvent is preferably 2 to 100 parts by mass, more preferably 5 to 80 parts by mass, and even more preferably 8 to 60 parts by mass based on 100 parts by mass of the total resin solids content of the aqueous first colored coating composition (X).

If necessary, the aqueous first colored coating composition (X) may contain additives for coating compositions, such as thickeners, curing catalysts, UV absorbers, light stabilizers, antifoaming agents, plasticizers, organic solvents other than the above hydrophobic solvents, surface control agents, and antisettling agents.

When the aqueous first colored coating composition (X) contains a thickener as described above, the amount of the thickener is preferably 0.01 to 15 parts by mass, more preferably 0.05 to 10 parts by mass, and still more preferably 0.1 to 5 parts by mass based on 100 parts by mass of the total resin solids content of the aqueous first colored coating composition (X).

The aqueous first colored coating composition (X) can be prepared by mixing and dispersing, in an aqueous medium, an acrylic modified polyester resin (A), and a block polyisocyanate compound (B), together with, if necessary, another resin component, a pigment, a hydrophobic solvent, and other additives for coating compositions, by using a known method. Examples of the aqueous medium include deionized water, and a mixture of deionized water and a hydrophilic organic solvent. Examples of the hydrophilic organic solvent include ethylene glycol monobutyl ether, propylene glycol monomethyl ether, and the like.

The solids concentration of the aqueous first colored coating composition (X) is generally 30 to 80 mass%, preferably 35 to 70 mass%, and more preferably 40 to 60 mass%.

In the present specification, the "solids content" of the coating composition, resin, and other components refers to the non-volatile components remaining after drying at 110°C for 1 hour. For example, the solids content of the coating composition is the non-volatile components of the base resin, curing agent, pigment, etc., remaining in the coating composition after drying at 110°C for 1 hour. Thus, the solid concentration of the coating composition can be calculated as follows. An uncured coating composition is measured in a heat-resistant container such as an aluminum foil cup, spread at the bottom of the container, and then dried at 110°C for 1 hour, after which the mass of the coating composition components remaining after drying is measured to determine the ratio of the mass of the coating composition components remaining after drying with respect to the total mass of the coating composition before drying.

The aqueous first colored coating composition (X) can be applied on a substrate by known methods such as air spray coating, airless spray coating, rotary atomization coating, and curtain coating. An electrostatic charge may be applied during coating. Among these, air spray coating, rotary atomization coating, etc., are preferable.

In the method for forming a multilayer coating film of the present invention, use of the aqueous first colored coating composition (X) can provide a multilayer coating film having excellent smoothness, distinctness of image, popping resistance, water resistance, and adhesion; moreover, the multilayer coating film has excellent water resistance and adhesion even when the coating composition is applied after being stored for a fixed period of time, presumably for the reasons described below. Since the blocked polyisocyanate compound (B) in the aqueous first colored coating composition (X) has a hydrocarbon group having a branched structure, the formation of a mixed layer generated by applying the aqueous second colored coating composition on the first colored coating film is inhibited, thus improving smoothness, distinctness of image, water resistance, and adhesion. Further, compatibility between the blocked polyisocyanate compound (B) and water, which is a solvent of the aqueous first colored coating composition (X), is reduced, thus allowing easy evaporation of water in the aqueous first colored coating composition (X) during heating of the coating film to reduce the generation of popping.

Water resistance and adhesion of the multilayer coating film after storage are also improved presumably because the storage stability of the coating composition is excellent due to the acrylic modified polyester resin (A) in the aqueous first colored coating composition (X).

Step (2)

Subsequently, the aqueous second colored coating composition (Y) is applied to the coating film of the aqueous first colored coating composition (X) (hereinbelow sometimes referred to as the first colored coating film) formed in Step (1).

Before application of the aqueous second colored coating composition (Y), the first colored coating film is preferably subjected to preheating (preliminary heating), air-blowing, etc., under conditions in which the coating film is not substantially cured. In the present invention, the "cured coating film" indicates a film in a "hardening drying" state according to JIS K 5600-1-1, i.e., a film in a condition such that when the center of the coated surface is strongly pinched between the thumb and forefinger, no fingerprint impression is left on the coated surface and no shifting of the coating film is observed; or when the center of the coated surface is repeatedly quickly rubbed with a fingertip, no traces of rubbing are left on the coated surface. The "uncured coating film" indicates a film that has not yet reached a hardening drying state as mentioned above, and includes coating films in a "touch-free" (dry to the touch) state and coating films in a "semi-hardening drying" state according to JIS K 5600-1-1.

The preheating temperature is preferably 40 to 100°C, more preferably 50 to 90°C, and still more preferably 60 to 80°C. The preheating time is preferably 30 seconds to 15 minutes, more preferably 1 to 10 minutes, and still more preferably 2 to 5 minutes. Air-blowing can be generally performed by blowing either room temperature air, or air heated to 25 to 80°C, over the coated surface of the substrate for 30 seconds to 15 minutes.

In the present invention, it is also possible to perform top coating without preheating the aqueous first colored coating composition (X) that has been applied. In such a case, setting is preferably performed at room temperature

(about 20 to 35°C) for about 30 seconds to 10 minutes after application of the aqueous first colored coating composition. Because of the setting, the solids content of the aqueous first colored coating composition (X) after application can be rapidly increased, and a mixed layer with the upper coating film can be inhibited without preheating. For example, the solids content of the coating composition one minute after application is preferably 45 mass% or more, and more preferably 50 mass% or more.

The solids content of the coating film can be determined by the following method:

First, the aqueous first colored coating composition (X) is simultaneously applied to a substrate and to an aluminum foil whose mass ($W_1$) has been measured beforehand. After being subjected to preheating, etc., the aluminum foil is removed immediately before the application of the aqueous second colored coating composition (Y), and the mass ($W_2$) of the aluminum foil is measured. After the coated aluminum foil is dried at 110°C for 60 minutes and allowed to cool to room temperature in a desiccator, the mass ($W_3$) of the aluminum foil is measured. The solids content of the first colored coating film is calculated according to the following equation.

$$\text{Solids content (mass\%)} = \left\{(W_3-W_1) \ / \ (W_2-W_1)\right\} \times 100$$

The aqueous second colored coating composition (Y) applied to the first colored coating film is generally intended to impart an excellent appearance to the substrate to be coated. Usable as the coating composition (Y) are, for example, coating compositions prepared by dissolving or dispersing resin components that comprise a base resin, such as an acrylic, polyester, alkyd, urethane, or epoxy resin containing a crosslinkable functional group such as a carboxy or hydroxy group, and a curing agent such as a polyisocyanate compound, melamine resin, and urea resin that may be blocked, together with a pigment and other additives, in water. In particular, thermosetting aqueous coating compositions using an acrylic modified polyester resin (A) as the base resin and a melamine resin as the curing agent can be advantageously used.

The pigment may be a color pigment, an extender pigment, an effect pigment, etc. It is particularly preferable that the aqueous second colored coating composition (Y) contains at least one of the color pigment or effect pigment mentioned above.

Examples of the color pigment include titanium oxide, zinc flower, carbon black, molybdenum red, Prussian blue, cobalt blue, azo pigments, phthalocyanine pigments, quinacridone pigments, isoindoline pigments, threne pigments, perylene pigments, dioxazine pigments, diketopyrrolopyrrole pigments, and the like, which are as mentioned in the explanation of the aqueous first colored coating composition (X).

When the aqueous second colored coating composition (Y) contains a color pigment as described above, the amount of the color pigment is preferably in the range of 1 to 150 parts by mass, more preferably 3 to 130 parts by mass, and even more preferably 5 to 110 parts by mass based on 100 parts by mass of the resin solids content of the aqueous second colored coating composition (Y).

Examples of the effect pigment include aluminum (for example, vapor-deposited aluminum), copper, zinc, brass, nickel, aluminum oxide, mica, titanium oxide- or iron oxide-coated aluminum oxide, titanium oxide- and/or iron oxide-coated mica, glass flakes, holographic pigments, etc., as mentioned in the explanation of the aqueous first colored coating composition (X). Among these, aluminum, aluminum oxide, mica, titanium oxide- or iron oxide-coated aluminum oxide, and titanium oxide- or iron oxide-coated mica are more preferable; and aluminum is particularly preferable. Such effect pigments can be used singly, or in a combination of two or more.

The effect pigment is preferably in the form of flakes. As the effect pigment, pigments having a longitudinal dimension of 1 to 100 μm, particularly 5 to 40 μm, and a thickness of 0.001 to 5 μm, particularly 0.01 to 2 μm, are suitable.

When the aqueous second colored coating composition (Y) contains an effect pigment as described above, the amount of the effect pigment is preferably in the range of 1 to 50 parts by mass, more preferably 2 to 30 parts by mass, and even more preferably 3 to 20 parts by mass based on 100 parts by mass of the resin solids content of the aqueous second colored coating composition (Y).

The aqueous second colored coating composition (Y) preferably contains a hydrophobic solvent as mentioned in the explanation of the aqueous first colored coating composition (X). The hydrophobic solvent is preferably an alcohol hydrophobic solvent in view of excellent brilliance of the resulting coating film. In particular, $C_{7-14}$ alcohol hydrophobic solvents, such as at least one alcohol hydrophobic solvent selected from the group consisting of 1-octanol, 2-octanol, 2-ethyl-1-hexanol, ethylene glycol mono-2-ethylhexyl ether, propylene glycol mono-n-butyl ether, and dipropylene glycol mono-n-butyl ether, are preferable.

When the aqueous second colored coating composition (Y) contains a hydrophobic solvent, the amount of the hydrophobic solvent is preferably 2 to 70 parts by mass, more preferably 11 to 60 parts by mass, and even more preferably 16 to 50 parts by mass based on 100 parts by mass of the resin solids content of the aqueous second colored coating

composition (Y) in view of excellent brilliance of the resulting coating film.

The aqueous second colored coating composition (Y) may further contain, if necessary, additives usually used for coating compositions, such as curing catalysts, thickeners, UV absorbers, light stabilizers, antifoaming agents, plasticizers, organic solvents, surface control agents, and antisettling agents. Such additives can be used singly, or in a combination of two or more.

The aqueous second colored coating composition (Y) can be applied by known methods such as air spray coating, airless spray coating, and rotary atomization coating. An electrostatic charge may be applied during coating.

Step (3)

In the method for forming a first multilayer coating film of the present invention, a clear coating composition (Z) is applied to the coating layer of the aqueous second colored coating composition (Y) (hereinbelow sometimes referred to as the second colored coating film) formed in the above step (2).

To prevent coating film defects such as popping, before the application of the clear coating composition (Z), the second colored coating film is preferably subjected to preheating (preliminary heating), air-blowing, etc., under conditions in which the coating film is not substantially cured. The preheating temperature is preferably 40 to 100°C, more preferably 50 to 90°C, and still more preferably 60 to 80°C. The preheating time is preferably 30 seconds to 15 minutes, more preferably 1 to 10 minutes, and still more preferably 2 to 5 minutes. Air-blowing can be typically performed by blowing either room temperature air, or air heated to 25 to 80°C, over the coated surface of the substrate for 30 seconds to 15 minutes.

It is preferable that before the application of the clear coating composition (Z), the second colored coating film is generally adjusted to a solids content of 70 to 100 mass%, more preferably 80 to 100 mass%, and still more preferably 90 to 100 mass%, if necessary, by means of preheating, air-blowing, etc., as mentioned above.

As the clear coating composition (Z), any known thermosetting clear coating composition for coating automobile bodies, etc., can be used. Examples of such thermosetting clear coating compositions include organic solvent-type thermosetting coating compositions, aqueous thermosetting coating compositions, and powder thermosetting coating compositions, all of which contain a crosslinking agent and a base resin having a crosslinkable functional group.

Examples of the crosslinkable functional group contained in the base resin include carboxy, hydroxy, epoxy, silanol, and the like. Examples of the base resin include acrylic resins, polyester resins, alkyd resins, urethane resins, epoxy resins, fluororesins, and the like. Examples of crosslinking agents include polyisocyanate compounds, blocked polyisocyanate compounds, melamine resins, urea resins, carboxy-containing compounds, carboxy-containing resins, epoxy-containing resins, epoxy-containing compounds, and the like.

Examples of preferable combinations of base resin/crosslinking agent for the clear coating composition (Z) are carboxy-containing resin/epoxy-containing resin, hydroxy-containing resin/polyisocyanate compound, hydroxy-containing resin/blocked polyisocyanate compound, hydroxy-containing resin/melamine resin, and the like.

The clear coating composition (Z) may be a single-liquid type coating composition, or a multi-liquid type coating composition such as a two-liquid type urethane resin coating composition.

If necessary, the clear coating composition (Z) may contain color pigments, effect pigments, dyes, etc., in amounts such that the transparency of the clear coating composition is not impaired; and may further contain extender pigments, UV absorbers, light stabilizers, antifoaming agents, thickening agents, anticorrosives, surface control agents, etc.

The clear coating composition (Z) can be applied to the surface coated with the aqueous second colored coating composition (Y) by known methods, such as air spray coating, airless spray coating, and rotary atomization coating. An electrostatic charge may be applied during coating. The clear coating composition (Z) can generally be applied to a cured film thickness of 10 to 80 μm, preferably 15 to 60 μm, and more preferably 20 to 50 μm.

After application of the clear coating composition (Z), there may be, if necessary, an interval of about 1 to about 60 minutes at room temperature, or preheating may be performed at about 40 to about 80°C for about 1 to about 60 minutes.

Step (4)

In the method for forming a first multilayer coating film of the present invention, the uncured first colored coating film, uncured second colored coating film, and uncured clear coating film formed in Steps (1) to (3) are simultaneously heat-cured.

The first colored coating film, the second colored coating film, and the clear coating film are cured by a usual method for baking coating films, such as air-blowing, infrared heating, or high-frequency heating.

The heating temperature is preferably 80 to 180°C, more preferably 100 to 170°C, and still more preferably 120 to 160°C.

The heating time is preferably 10 to 60 minutes, and more preferably 15 to 40 minutes. This heating allows a multilayer coating film consisting of three layers, i.e., the first colored coating film, second colored coating film, and clear coating film, to be simultaneously cured.

The method for forming a first multilayer coating film including the steps (1) to (4) according to the present invention is suitably used when a multilayer coating film comprising an intermediate coating film, a base coating film, and a clear coating film is formed on a substrate such as an automobile body by using a 3-coat 1-bake process. Such a multilayer coating film can be formed by the following method I.

Method I

A method for forming a multilayer coating film comprising the following steps (1) to (4):

(1) applying an aqueous first colored coating composition (X) to a substrate to form an intermediate coating film thereon;
(2) applying an aqueous second colored coating composition (Y) to the uncured intermediate coating film to form a base coating film thereon;
(3) applying a clear coating composition (Z) to the uncured base coating film to form a clear coating film thereon; and
(4) heating to simultaneously cure the uncured intermediate coating film, uncured base coating film, and uncured clear coating film.

As the substrate used in method I, an automobile body, etc., on which an undercoating film is formed by using a cationic electrodeposition coating composition is preferable.

In method I, the aqueous first colored coating composition (X) preferably has a coating film thickness of 5 to 40 μm, more preferably 5 to 35 μm, and even more preferably 7 to 35 μm, when cured. The aqueous second colored coating composition (Y) preferably has a coating film thickness of 2 to 25 μm, more preferably 3 to 22 μm, and even more preferably 5 to 20 μm, when cured. The clear coating composition (Z) preferably has a coating film thickness of 10 to 80 μm, more preferably 5 to 60 μm, and even more preferably 20 to 50 μm, when cured.

In method I, before application of the aqueous second colored coating composition (Y) in step (2), the intermediate coating film obtained in step (1) may be subjected to preheating and/or air-blowing under heating conditions in which the intermediate coating film is not substantially cured. In the present invention, it is also possible to perform step (2) without preheating the first colored coating film. In such a case, setting is preferably performed at room temperature (about 20 to 35°C) for about 30 seconds to 10 minutes after application of the aqueous first colored coating composition (X). Because of the setting, the solids content of the aqueous first colored coating composition (X) after application can be rapidly increased, and a mixed layer with the upper coating film can be inhibited without preheating. For example, the solids content of the coating composition 1 minute after application is preferably 45 mass% or more, and more preferably 50 mass% or more. In Step 3) of Method I, the second colored coating film obtained in Step 2) may be subjected to preheating, air-blowing, etc., under conditions in which the coating film is not substantially cured.

Examples

The present invention is described below in more detail with reference to Examples and Comparative Examples. However, the present invention is not limited to these examples. In the examples, "parts" and "%" are expressed on a mass basis. The thickness of the coating film refers to the thickness of the coating film when cured.

Production of acrylic modified polyester resin (A)

Production Example 1

85 parts of hexahydrophthalic anhydride, 51.6 parts of adipic acid, 39.1 parts of 1,6-hexanediol, 34.8 parts of neopentylglycol, 35.3 parts of 2-butyl-2-ethyl-1,3-propanediol, 2.16 parts of maleic anhydride, and 30.1 parts of trimethylolpropane were placed in a reaction vessel equipped with a thermometer, a thermostat, a stirrer, a heating unit, and a distillation column, and the mixture was heated to 160°C while stirring. Subsequently, the mixture was gradually heated from 160 to 240°C over 4 hours, and the resulting condensation water was distilled off through the distillation column. After the reaction was allowed to proceed at 240°C for 90 minutes, the distillation column was replaced by a water separator. About 15 parts of toluene was added to the mixture to azeotrope water and toluene, and remove condensed water. The measurement of the acid value was started one hour after the toluene addition, and heating was stopped when the acid value was confirmed to be less than 3.5. After toluene was removed under reduced pressure, the resultant was cooled, and 58 parts of dipropylene glycol monomethyl ether was added thereto.

The resulting mixture was cooled to 130°C, and the mixture of 9 parts of styrene, 12.6 parts of acrylic acid, 23.4 parts of acrylic acid-2-ethylhexyl, and 2.2 parts of t-butylperoxy-2-ethylhexanoate was added dropwise thereto for 2 hours. Subsequently, the mixture was maintained at 130°C for 30 minutes, and 0.44 part of *t*-butylperoxy-2-ethylhexanoate was added as an additional catalyst thereto, followed by aging for 1 hour.

The mixture was then cooled to 85°C, and neutralized with dimethylethanolamine. Deionized water was added thereto to perform aqueous dispersion, thus obtaining an aqueous dispersion of acrylic modified polyester resin (A-1) having a solids content of 35%. The resulting acrylic modified polyester resin had an acid value of 35 mg KOH/g, a hydroxy value of 110 mg KOH/g, and a number average molecular weight of 2300.

Production Examples 2 to 10

Aqueous dispersions of acrylic modified polyester resins (A-2) to (A-10) were synthesized in the same manner as in Production Example 6, except that formulations shown in Table 1 were used.

Table 1

| Production Example | | | | 1 | 2 | 3 | 4 | 5 | 6 | 7 | 8 | 9 | 10 |
|---|---|---|---|---|---|---|---|---|---|---|---|---|---|
| Aqueous dispersion of acrylic modified polyester resin (A) | | | | A-1 | A-2 | A-3 | A-4 | A-5 | A-6 | A-7 | A-8 | A-9 | A-10 |
| PE portion | Acid component | Alicyclic polybasic acid | Hexahydrophthalic anhydride | 85.0 | 62.4 | 120 | 145 | 49.4 | 85.3 | | 49.4 | 49.4 | 40.7 |
| | | Aliphatic polybasic acid | Adipic acid | 51.6 | 59.1 | | | 93.6 | 46.9 | 141 | 93.6 | 93.6 | 77.1 |
| | | Polybasic acid having a polymerizable unsaturated group | Maleic anhydride | 2.16 | 4.50 | 3.10 | 2.03 | 4.19 | | 2.28 | 4.19 | 4.19 | 3.45 |
| | | | Fumaric acid | | | | | | 5.43 | | | | |
| | Alcohol component | 1,6-Hexanediol | | 39.1 | 41.0 | | 85.7 | 63.1 | 39.2 | 41.2 | 63.1 | 63.1 | 52.0 |
| | | Neopentylglycol | | 34.8 | 26.7 | 27.4 | 10.9 | 11.2 | 34.9 | 36.7 | 11.2 | 11.2 | 9.22 |
| | | 2-Butyl-2-ethyl-1,3-propanediol | | 35.3 | 55.5 | 83.3 | | 32.5 | 35.5 | 37.2 | 32.5 | 32.5 | 26.8 |
| | | Trimethylolpropane | | 30.1 | 28.4 | 35.6 | 28.3 | 30.6 | 30.3 | 31.8 | 30.6 | 30.6 | 25.2 |
| | Catalyst | Dibutyltin oxide | | 0.12 | 0.12 | 0.12 | 0.12 | 0.12 | 0.12 | 0.12 | 0.12 | 0.12 | 0.12 |
| Ac portion | Polymerizable unsaturated monomer | Aromatic ring-containing monomer | Styrene | 9.0 | 9.0 | 9.0 | 9.0 | 9.0 | 9.0 | 9.0 | 9.0 | | 30 |
| | | Carboxy-containing polymer | Acrylic acid | 12.6 | 12.6 | | 12.6 | 12.6 | 12.6 | 12.6 | | 12.6 | 12.6 |
| | | | Methacrylic acid | | | 13.8 | | | | | | | 14.5 |
| | | Others | 2-Ethylhexyl acrylate | 23.4 | 23.4 | 22.2 | 23.4 | 23.4 | 23.4 | 23.4 | 22.6 | 22.5 | 32.9 |
| | | | Methyl methacrylate | | | | | | | | 13.4 | 9.9 | |
| | Initiator | t-Butylperoxy-2-ethylhexanoate | | 2.2 | 2.2 | 2.2 | 2.2 | 2.2 | 2.2 | 2.2 | 2.2 | 2.2 | 2.2 |
| Properties | | Number average molecular weight | | 2300 | 1030 | 1700 | 5200 | 2100 | 2100 | 2400 | 1030 | 1030 | 1200 |
| | | Acid value (mg KOH/g) | | 35 | 35 | 33 | 35 | 35 | 35 | 35 | 35 | 35 | 35 |
| | | Hydroxy value (mg KOH/g) | | 110 | 153 | 137 | 70 | 70 | 110 | 111 | 110 | 110 | 110 |
| | | Polyester/acryl ratio | | 85/15 | 85/15 | 85/15 | 85/15 | 85/15 | 85/15 | 85/15 | 85/15 | 85/15 | 70/30 |

Production of blocked polyisocyanate compound (B)

Production Example 11

360 parts of "Sumidur N-3300," 60 parts of "Uniox M-550" (produced by NOF Corporation; polyethylene glycol monomethyl ether, average molecular weight: about 550), and 0.2 part of 2,6-di-tert-butyl-4-methylphenol were placed in a reaction vessel equipped with a thermometer, a thermostat, a stirrer, a reflux condenser, a nitrogen inlet tube, a dropping funnel, and a simplified trap for the removed solvent, then mixed well, and heated in a nitrogen stream at 130°C for 3 hours. Subsequently, 110 parts of ethyl acetate and 252 parts of diisopropyl malonate were added thereto. While the mixture was stirred in a nitrogen stream, 3 parts of 28% methanol solution of sodium methoxide was added, and the resulting mixture was stirred at 65°C for 8 hours. The amount of isocyanate in the resulting resin solution was 0.12 mol/kg. 683 parts of 4-methyl-2-pentanol was added thereto. While the temperature of the reaction system was maintained at 80 to 85°C, the solvent was distilled off under reduced pressure over 3 hours to obtain 1,010 parts of a blocked polyisocyanate compound solution (B-1). 95 parts of isopropanol was contained in the simplified trap for the removed solvent. The obtained blocked polyisocyanate compound solution (B-1) had a solids concentration of about 60%.

Production Example 12

360 parts of "Sumidur N-3300," 50 parts of "Uniox M-400" (produced by NOF Corporation; polyethylene glycol monomethyl ether, average molecular weight: about 400), 5 parts of "PEG #600" (produced by NOF Corporation; polyethylene glycol, average molecular weight: about 600), and 0.2 part of 2,6-di-*tert*-butyl-4-methylphenol were placed in a reaction vessel equipped with a thermometer, a thermostat, a stirrer, a reflux condenser, a nitrogen inlet tube, a dropping funnel, and a simplified trap for the removed solvent, then mixed well, and heated in a nitrogen stream at 130°C for 3 hours. Subsequently, 110 parts of ethyl acetate and 247 parts of diisopropyl malonate were added thereto. While the mixture was stirred in a nitrogen stream, 3 parts of 28% methanol solution of sodium methoxide was added, and the resulting mixture was stirred at 65°C for 8 hours. The amount of isocyanate in the resulting resin solution was 0.11 mol/kg. 670 parts of 4-methyl-2-pentanol was added thereto. While the temperature of the reaction system was maintained at 80 to 85°C, the solvent was distilled off under reduced pressure over 3 hours to obtain 1,010 parts of a blocked polyisocyanate compound solution (B-2). 92 parts of isopropanol was contained in the simplified trap for the removed solvent. The obtained blocked polyisocyanate compound solution (B-2) had a solids concentration of about 60%.

Production Example 13

480 parts of "Sumidur N-3300" (trade name, produced by Sumika Bayer Urethane Co., Ltd.; polyisocyanate having a hexamethylene diisocyanate-derived isocyanurate structure, solids content: about 100%, isocyanate group content: 21.8%), 150 parts of ethyl acetate, and 365 parts of diisopropyl malonate were placed in a reaction vessel equipped with a thermometer, a thermostat, a stirrer, a reflux condenser, a nitrogen inlet tube, a dropping funnel, and a simplified trap for the removed solvent. While the mixture was stirred in a nitrogen stream, 4 parts of 28% methanol solution of sodium methoxide was added, and the resulting mixture was stirred at 65°C for 8 hours. The amount of isocyanate in the resulting resin solution was 0.07 mol/kg. 870 parts of 4-methyl-2-pentanol was added thereto. While the temperature of the reaction system was maintained at 90 to 95°C, the solvent was distilled off under reduced pressure over 3 hours, and 120 parts of 4-methyl-2-pentanol was further added to obtain 1,400 parts of a blocked polyisocyanate compound solution (B-3). 183 parts of isopropanol was contained in the simplified trap for the removed solvent. The obtained blocked polyisocyanate compound solution (B-3) had a solids concentration of about 60%.

Production Example 14

480 parts of "Sumidur N-3300," 150 parts of ethyl acetate, 330 parts of diisopropyl malonate, and 27 parts of isopropyl acetoacetate were placed in a reaction vessel equipped with a thermometer, a thermostat, a stirrer, a reflux condenser, a nitrogen inlet tube, a dropping funnel, and a simplified trap for the removed solvent. While the mixture was stirred in a nitrogen stream, 4 parts of 28% methanol solution of sodium methoxide was added, and the resulting mixture was stirred at 65°C for 8 hours. The amount of isocyanate in the resulting resin solution was 0.08 mol/kg. 870 parts of 4-methyl-2-pentanol was added thereto. While the temperature of the reaction system was maintained at 90 to 95°C, the solvent was distilled off under reduced pressure over 3 hours, and 120 parts of 4-methyl-2-pentanol was further added to obtain 1,390 parts of a blocked polyisocyanate compound solution (B-4). 173 parts of isopropanol was contained in the simplified trap for the removed solvent. The obtained blocked polyisocyanate compound solution (B-4) had a solids concentration of about 60%.

Production Example 15

480 parts of "Sumidur N-3300," 150 parts of ethyl acetate, 280 parts of diethyl malonate, and 30 parts of ethyl isobutyrylacetate were placed in a reaction vessel equipped with a thermometer, a thermostat, a stirrer, a reflux condenser, a nitrogen inlet tube, a dropping funnel, and a simplified trap for the removed solvent. While the mixture was stirred in a nitrogen stream, 4 parts of 28% methanol solution of sodium methoxide was added, and the resulting mixture was stirred at 65°C for 8 hours. The amount of isocyanate in the resulting resin solution was 0.08 mol/kg. 870 parts of 4-methyl-2-pentanol was added thereto. While the temperature of the reaction system was maintained at 90 to 95°C, the solvent was distilled off under reduced pressure over 3 hours, and 120 parts of 4-methyl-2-pentanol was further added to obtain 1,350 parts of a blocked polyisocyanate compound solution (B-5). 133 parts of ethanol was contained in the simplified trap for the removed solvent. The obtained blocked polyisocyanate compound solution (B-5) had a solids concentration of about 60%.

Production Example 16

480 parts of "Sumidur N-3300," 150 parts of ethyl acetate, and 360 parts of diisopropyl malonate were placed in a reaction vessel equipped with a thermometer, a thermostat, a stirrer, a reflux condenser, a nitrogen inlet tube, a dropping funnel, and a simplified trap for the removed solvent. While the mixture was stirred in a nitrogen stream, 4 parts of 28% methanol solution of sodium methoxide was added, and the resulting mixture was stirred at 65°C for 8 hours. The amount of isocyanate in the resulting resin solution was 0.07 mol/kg. 990 parts of 5-methylhexanol was added thereto. While the temperature of the reaction system was maintained at 90 to 95°C, the solvent was distilled off under reduced pressure over 3 hours, and 120 parts of 5-methyl-2-hexanol was further added to obtain 1,400 parts of a blocked polyisocyanate compound solution (B-6). 180 parts of isopropanol was contained in the simplified trap for the removed solvent. The obtained blocked polyisocyanate compound solution (B-6) had a solids concentration of about 60%.

Production Example 17

450 parts of "Duranate TPA-100," 150 parts of ethyl acetate, and 360 parts of diisopropyl malonate were placed in a reaction vessel equipped with a thermometer, a thermostat, a stirrer, a reflux condenser, a nitrogen inlet tube, a dropping funnel, and a simplified trap for the removed solvent. While the mixture was stirred in a nitrogen stream, 4 parts of 28% methanol solution of sodium methoxide was added, and the resulting mixture was stirred at 65°C for 8 hours. The amount of isocyanate in the resulting resin solution was 0.07 mol/kg. 1,110 parts of 6-methyl-2-heptanol was added thereto. While the temperature of the reaction system was maintained at 80 to 85°C, the solvent was distilled off under reduced pressure over 6 hours, and 120 parts of 6-methyl-2-heptanole was further added to obtain 1,430 parts of a blocked polyisocyanate compound solution (B-7). 170 parts of isopropanol was contained in the simplified trap for the removed solvent. The obtained blocked polyisocyanate compound solution (B-7) had a solids concentration of about 60%.

Production Example 18

480 parts of "Sumidur N-3300," 150 parts of ethyl acetate, and 310 parts of diethyl malonate were placed in a reaction vessel equipped with a thermometer, a thermostat, a stirrer, a reflux condenser, a nitrogen inlet tube, a dropping funnel, and a simplified trap for the removed solvent. While the mixture was stirred in a nitrogen stream, 4 parts of 28% methanol solution of sodium methoxide was added, and the resulting mixture was stirred at 65°C for 8 hours. The amount of isocyanate in the resulting resin solution was 0.06 mol/kg. 630 parts of n-butanol was added thereto. While the temperature of the reaction system was maintained at 90 to 95°C, the solvent was distilled off under reduced pressure over 3 hours, and 90 parts of n-butanol was further added to obtain 1,270 parts of a blocked polyisocyanate compound solution (B-8). 100 parts of ethanol was contained in the simplified trap for the removed solvent. The obtained blocked polyisocyanate compound solution (B-8) had a solids concentration of about 60%.

Production Example 19

480 parts of "Sumidur N-3300," 150 parts of ethyl acetate, and 310 parts of diethyl malonate were placed in a reaction vessel equipped with a thermometer, a thermostat, a stirrer, a reflux condenser, a nitrogen inlet tube, a dropping funnel, and a simplified trap for the removed solvent. While the mixture was stirred in a nitrogen stream, 4 parts of 28% methanol solution of sodium methoxide was added, and the resulting mixture was stirred at 65°C for 8 hours. The amount of isocyanate in the resulting resin solution was 0.06 mol/kg. 1,110 parts of 2-ethylhexanol was added thereto. While the temperature of the reaction system was maintained at 80 to 85°C, the solvent was distilled off under reduced pressure over 6 hours, and 120 parts of 2-ethylhexanol was further added to obtain 1,410 parts of a blocked polyisocyanate

compound solution (B-9). 130 parts of ethanol was contained in the simplified trap for the removed solvent. The obtained blocked polyisocyanate compound solution (B-9) had a solids concentration of about 60%.

Production Example 20

480 parts of "Sumidur N-3300," 150 parts of ethyl acetate, and 310 parts of diethyl malonate were placed in a reaction vessel equipped with a thermometer, a thermostat, a stirrer, a reflux condenser, a nitrogen inlet tube, a dropping funnel, and a simplified trap for the removed solvent. While the mixture was stirred in a nitrogen stream, 4 parts of 28% methanol solution of sodium methoxide was added, and the resulting mixture was stirred at 65°C for 8 hours. The amount of isocyanate in the resulting resin solution was 0.06 mol/kg. 1,000 parts of propylene glycol monopropyl ether was added thereto. While the temperature of the reaction system was maintained at 90 to 95°C, the solvent was distilled off under reduced pressure over 3 hours, and 120 parts of propylene glycol monopropyl ether was further added to obtain 1,380 parts of a blocked polyisocyanate compound solution (B-10). 125 parts of ethanol was contained in the simplified trap for the removed solvent. The obtained blocked polyisocyanate compound solution (B-10) had a solids concentration of about 60%.

Production of hydroxy-containing acrylic resin (C) Production of water-soluble hydroxy-containing acrylic resin (C-1)

Production Example 21

35 parts of propylene glycol monopropyl ether was placed in a reaction vessel equipped with a thermometer, a thermostat, a stirrer, a reflux condenser, a nitrogen inlet tube, a dropping funnel, and a simplified trap for the removed solvent, and heated to 85°C. The mixture of 30 parts of methyl methacrylate, 20 parts of 2-ethylhexyl acrylate, 29 parts of n-butyl acrylate, 15 parts of 2-hydroxyethyl acrylate, 6 parts of acrylic acid, 15 parts of propylene glycol monopropyl ether, and 2.3 parts of 2,2'-azobis(2,4-dimethylvaleronitrile) was added dropwise over 4 hours, followed by aging for 1 hour after the completion of dropwise addition. Subsequently, the mixture of 10 parts of propylene glycol monopropyl ether and 1 part of 2,2'-azobis(2,4-dimethylvaleronitrile) was further added dropwise for 1 hour, followed by aging for 1 hour after the completion of dropwise addition. 7.4 parts of diethanolamine was further added to the resultant to obtain a water-soluble hydroxy-containing acrylic resin solution (C-1) having a solids content of 55%. The resulting hydroxy-containing acrylic resin had an acid value of 47 mg KOH/g, and a hydroxy value of 72 mg KOH/g.

Production of aqueous dispersion of hydroxy-containing acrylic resin (C-2)

Production Example 22

130 parts of deionized water and 0.52 part of "Aqualon KH-10" (trade name, produced by Dai-Ichi Kogyo Seiyaku Co., Ltd., a polyoxyethylene alkyl ether sulfate ester ammonium salt, active ingredient: 97%) were placed in a reaction vessel equipped with a thermometer, a thermostat, a stirrer, a reflux condenser, a nitrogen inlet tube, and a dropping funnel, then mixed by stirring in a nitrogen stream, and heated to 80°C. Subsequently, 1% of the total amount of the monomer emulsion (1) described below and 5.3 parts of 6% ammonium persulfate aqueous solution were introduced into the reaction vessel, and maintained at 80°C for 15 minutes.

The remaining monomer emulsion (1) was then added dropwise over 3 hours to the reaction vessel while the temperature of the reaction vessel was maintained at the same temperature. After the completion of dropwise addition, the mixture was aged for 1 hour.

Then, the monomer emulsion (2) described below was added dropwise over 1 hour and aged for 1 hour, after which, while 40 parts of a 5% 2-(dimethylamino)ethanol aqueous solution was gradually added to the reaction vessel, the mixture was cooled to 30°C, and filtered through a 100-mesh nylon cloth to provide a dispersion of hydroxy-containing acrylic resin (C-2) having an average particle diameter of 118 nm (as measured with a "Coulter Model N4" submicron particle size distribution analyzer, produced by Beckman Coulter, Inc., at 20°C as diluted with deionized water), and a solids concentration of 30%. The acrylic resin emulsion had a hydroxy value of 65 mg KOH/g (the hydroxy value of the core copolymer: 65 mg KOH/g, the hydroxy value of the shell copolymer: 65 mg KOH/g), an acid value of 13 mg KOH/g, and a glass transition temperature of 37°C.

Monomer emulsion (1): 46.2 parts of deionized water, 0.79 part of "Aqualon KH-10," 7.7 parts of styrene, 16.94 parts of methyl methacrylate, 7.7 parts of n-butylacrylate, 30.8 parts of n-butylmethacrylate, 11.55 parts of 2-hydroxyethylmethacrylate, and 2.31 parts of ethylene glycol dimethacrylate were mixed by stirring to provide a monomer emulsion (1) (total amount of monomers for the core copolymer: 77 parts).

Monomer emulsion (2): 13.8 parts of deionized water, 0.24 part of "Aqualon KH-10," 0.03 part of ammonium persulfate, 2.3 parts of styrene, 6.9 parts of methyl methacrylate, 4.6 parts of ethylacrylate, 3.68 parts of n-butylacrylate, 3.45 parts of 2-hydroxyethylmethacrylate, and 2.07 parts of methacrylic acid were mixed by stirring to provide a monomer emulsion (2) (total amount of monomers for the shell copolymer: 23 parts).

Production of polyester resin (D)

Production Example 23

48.9 parts of phthalic anhydride, 46.2 parts of hexahydrophthalic anhydride, 29.2 parts of adipic acid, 78.8 parts of neopentylglycol, and 34.1 parts of trimethylolpropane were placed in a reaction vessel equipped with a thermometer, a thermostat, a stirrer, a reflux condenser, a distillation column, and a water separator, and the mixture was heated to 160°C. The mixture was gradually heated from 160 to 230°C over 4 hours, and the resulting condensation water was distilled off through the distillation column. After the reaction was allowed to proceed at 230°C for 90 minutes, toluene was added to the mixture to azeotrope water and toluene. The reaction was allowed to proceed at 230°C for 4 hours while condensation water was distilled off using the water separator to remove toluene under reduced pressure. Subsequently, trimellitic anhydride was added to the resulting condensation reaction product, and the reaction was allowed to proceed at 170°C for 30 minutes. The resulting mixture was then neutralized with dimethyl ethanol amine, and deionized water was added under stirring, thus obtaining a polyester resin solution (D-1) having a solids concentration of 45%. The resulting polyester resin had an acid value of 23 mg KOH/g, a hydroxy value of 140 mg KOH/g, and a number average molecular weight of 1,300.

Production Example 24

77.0 parts of hexahydrophthalic anhydride, 46.7 parts of adipic acid, 64.0 parts of 2-butyl-2-ethyl-1,3-propandiol, 47.8 parts of trimethylolpropane, 21.0 parts of neopentylglycol, and 6.7 parts of dimethylol propionic acid were placed in a reaction vessel equipped with a thermometer, a thermostat, a stirrer, a reflux condenser, a distillation column, and a water separator, and the mixture was heated to 160°C. Subsequently, the mixture was gradually heated from 160 to 230°C over 4 hours, and the resulting condensation water was distilled off through the distillation column. After the reaction was allowed to proceed at 230°C for 90 minutes, toluene was added to the mixture to azeotrope water and toluene. The reaction was allowed to proceed at 230°C for 4 hours while condensation water was distilled off using the water separator to remove toluene under reduced pressure. Subsequently, trimellitic anhydride was added to the resulting condensation reaction product, and the reaction was allowed to proceed at 170°C for 30 minutes. The resulting mixture was neutralized with dimethyl ethanol amine, and deionized water was added thereto under stirring, thus obtaining a polyester resin solution (D-2) having a solids concentration of 45%. The resulting polyester resin had an acid value of 35 mg KOH/g, a hydroxy value of 140 mg KOH/g, and a number average molecular weight of 1,500.

Production of pigment dispersion

Production Example 25

10 parts (solids basis) of the aqueous dispersion of acrylic modified polyester resin (A-1) obtained in Production Example 1, 10 parts (solids basis) of the polyester resin solution (D-1) obtained in Production Example 23, 60 parts of "JR-806" (trade name, produced by Tayca Corporation; rutile titanium dioxide), 30 parts of "Blanc Fixe Micro" (trade name, produced by Sachtleben Chemie; barium sulfate, particle diameter: 0.7 μm), 0.6 part of "Mitsubishi Carbon Black MA-100" (trade name, Mitsubishi Chemical Corporation), and 30 parts of deionized water were placed into a stirring and mixing container, and uniformly mixed. Additionally, 2-(dimethylamino)ethanol was added thereto, and the pH was adjusted to 8.0. Subsequently, the obtained mixed solution was placed into a wide-mouthed glass bottle. Glass beads having a diameter of about 1.3 mmφ were added to the bottle as dispersion media, and the bottle was hermetically sealed. The mixture was dispersed for 4 hours in a paint shaker, thereby obtaining a pigment dispersion (P-1).

Production Example 26

20 parts (solids basis) of the aqueous dispersion of acrylic modified polyester resin (A-1) obtained in Production Example 1, 60 parts of "JR-806," 30 parts of "Blanc Fixe Micro," 0.6 part of "Mitsubishi Carbon Black MA-100," and 30 parts of deionized water were placed into a stirring and mixing container, and uniformly mixed. Additionally, 2-(dimethylamino)ethanol was added thereto, and the pH was adjusted to 8.0. Subsequently, the obtained mixed solution was placed into a wide-mouthed glass bottle. Glass beads having a diameter of about 1.3 mmφ were added to the bottle as

dispersion media, and the bottle was hermetically sealed. The mixture was dispersed for 4 hours in a paint shaker, thereby obtaining a pigment dispersion (P-2).

Production Example 27

10 parts (solids basis) of the water-soluble hydroxy-containing acrylic resin solution (C-1) obtained in Production Example 21, 10 parts of the polyester resin solution (D-1) obtained in Production Example 23, 60 parts of "JR-806," 30 parts of "Blanc Fixe Micro," 0.6 part of "Mitsubishi Carbon Black MA-100," and 30 parts of deionized water were placed into a stirring and mixing container, and uniformly mixed. Additionally, 2-(dimethylamino)ethanol was added thereto, and the pH was adjusted to 8.0. Subsequently, the obtained mixed solution was placed into a wide-mouthed glass bottle. Glass beads having a diameter of about 1.3 mmφ were added to the bottle as dispersion media, and the bottle was hermetically sealed. The mixture was dispersed for 4 hours in a paint shaker, thereby obtaining a pigment dispersion (P-3).

Production of aqueous first colored coating composition (X)

Production Example 28

110.6 parts (solids basis) of the pigment dispersion paste (P-1) obtained in Production Example 25, 10 parts (solids basis) of the aqueous dispersion of acrylic modified polyester resin (A-1) obtained in Production Example 1, 15 parts (solids basis) of the aqueous dispersion of hydroxy-containing acrylic resin (C-2) obtained in Production Example 22, 20 parts (solids basis) of "U Coat UX-310" (trade name, produced by Sanyo Chemical Industries, Ltd.; polycarbonate-based aqueous polyurethane resin), 10 parts (solids basis) of the blocked polyisocyanate compound (B-1) obtained in Production Example 11, and 25 parts of "Cymel 325" (trade name, Japanese Psytec Industries Inc.; melamine resin, solids content: 80%) were uniformly mixed. Additionally, 2-(dimethylamino)ethanol and deionized water were added thereto, thus obtaining an aqueous colored coating composition (X-1) having a pH of 8.0, a solids concentration of 45%, and a viscosity of 40 seconds measured at 20°C using a Ford Cup No. 4.

Production Examples 29 to 57

Aqueous first colored coating compositions (X-2) to (X-30) were obtained in the same manner as in Production Example 28, except that the formulations shown in Table 2 were used.

Table 2

| Production Example No. | | | 28 | 29 | 30 | 31 | 32 | 33 | 34 | 35 | 36 | 37 | 38 | 39 | 40 | 41 | 42 | 43 | 44 |
|---|---|---|---|---|---|---|---|---|---|---|---|---|---|---|---|---|---|---|---|
| Aqueous first colored coating composition (X) | | | X-1 | X-2 | X-3 | X-4 | X-5 | X-6 | X-7 | X-8 | X-9 | X-10 | X-11 | X-12 | X-13 | X-14 | X-15 | X-16 | X-17 |
| Pigment dispersion paste | Pigment dispersion paste name | | P-1 | P-2 | P-3 | P-3 | P-2 | P-2 | P-2 | P-1 | P-1 | P-1 | P-1 | P-1 | P-1 | P-1 | P-1 | P-1 | P-1 |
| | Acrylic modified polyester resin (A) | Acrylic modified polyester resin (A-1) | 10 | 20 | | | 20 | 20 | 20 | 10 | 10 | 10 | 10 | 10 | 10 | 10 | 10 | 10 | 10 |
| | Hydroxy-containing acrylic resin (C) | Hydroxy-containing acrylic resin aqueous solution (C-1) | | | 10 | 10 | | | | | | | | | | | | | |
| | Hydroxy-containing polyester resin (D) | Hydroxy-containing polyester resin (D-1) | 10 | | 10 | 10 | | | | 10 | 10 | 10 | 10 | 10 | 10 | 10 | 10 | 10 | 10 |
| | Pigment | "JR-806" (titanium oxide) | 60 | 60 | 60 | 60 | 60 | 60 | 60 | 60 | 60 | 60 | 60 | 60 | 60 | 60 | 60 | 60 | 60 |
| | | "Blanc Fixe Micro" (barium sulfate) | 30 | 30 | 30 | 30 | 30 | 30 | 30 | 30 | 30 | 30 | 30 | 30 | 30 | 30 | 30 | 30 | 30 |
| | | "MA-100" (carbon black) | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| Acrylic modified polyester resin (A) | | Kind | A-1 | | A-1 | A-1 | A-1 | A-1 | A-1 | A-1 | A-2 | A-3 | A-4 | A-5 | A-6 | A-7 | A-8 | A-9 | A-10 |
| | | Amount | 10 | | 5 | 10 | 40 | 45 | 45 | 10 | 10 | 10 | 10 | 10 | 10 | 10 | 10 | 10 | 10 |
| Hydroxy-containing acrylic resin (C) | | Hydroxy-containing acrylic resin (C-2) | 15 | 15 | 40 | 30 | | | | 15 | 15 | 15 | 15 | 15 | 15 | 15 | 15 | 15 | 15 |
| Hydroxy-containing polyester resin (D) | | Hydroxy-containing polyester resin (D-2) | | | | 5 | 5 | | | | | | | | | | | | |
| Aqueous polyurethane resin | | "U Coat UX-310" | 20 | 20 | | | | | | 20 | 20 | 20 | 20 | 20 | 20 | 20 | 20 | 20 | 20 |
| Blocked polyisocyanate (B) | | Kind | B-1 | B-1 | B-1 | B-1 | B-1 | B-1 | B-1 | B-1 | B-1 | B-1 | B-1 | B-1 | B-1 | B-1 | B-1 | B-1 | B-1 |
| | | Amount | 10 | 10 | 5 | 10 | 10 | 10 | 35 | 10 | 10 | 10 | 10 | 10 | 10 | 10 | 10 | 10 | 10 |
| Curing agent (E) | | "Cymel 325" (melamine resin) | 25 | 25 | 30 | 25 | 25 | 25 | | | 25 | 25 | 25 | 25 | 25 | 25 | 25 | 25 | 25 |
| | | "Carbodilite V-02" (carbodiimide) (Note 1) | | | | | | | | 25 | | | | | | | | | |

Table 2, continued

| Production Example No. | | | 45 | 46 | 47 | 48 | 49 | 50 | 51 | 52 | 53 | 54 | 55 | 56 | 57 |
|---|---|---|---|---|---|---|---|---|---|---|---|---|---|---|---|
| Aqueous first colored coating composition (X) | | | X-18 | X-19 | X-20 | X-21 | X-22 | X-23 | X-24 | X-25 | X-26 | X-27 | X-28 | X-29 | X-30 |
| Pigment dispersion paste | Pigment dispersion paste name | | P-1 | P-1 | P-1 | P-1 | P-1 | P-1 | P-1 | P-1 | P-3 | P-1 | P-1 | P-1 | P-1 |
| | Acrylic modified polyester resin (A) | Acrylic modified polyester resin (A-1) | 10 | 10 | 10 | 10 | 10 | 10 | 10 | 10 | | 10 | 10 | 10 | 10 |
| | Hydroxy-containing acrylic resin (C) | Hydroxy-containing acrylic resin aqueous solution (C-1) | | | | | | | | | 10 | | | | |
| | Hydroxy-containing polyester resin (D) | Hydroxy-containing polyester resin (D-1) | 10 | 10 | 10 | 10 | 10 | 10 | 10 | 10 | 10 | 10 | 10 | 10 | 10 |
| | Pigment | "JR-806" (titanium oxide) | 60 | 60 | 60 | 60 | 60 | 60 | 60 | 60 | 60 | 60 | 60 | 60 | 60 |
| | | "Blanc Fixe Micro" (barium sulfate) | 30 | 30 | 30 | 30 | 30 | 30 | 30 | 30 | 30 | 30 | 30 | 30 | 30 |
| | | "MA-100" (carbon black) | 0.6 | 0.6 | 0.6 | 0.6 | 0.6 | 0.6 | 0.6 | 0.6 | 0.6 | 0.6 | 0.6 | 0.6 | 0.6 |
| Acrylic modified polyester resin (A) | | Kind | A-1 | A-1 | A-1 | A-1 | A-1 | A-1 | A-1 | A-1 | | A-1 | A-1 | A-1 | A-1 |
| | | Amount | 10 | 10 | 10 | 10 | 10 | 10 | 10 | 10 | | 10 | 10 | 10 | 10 |
| Hydroxy-containing acrylic resin (C) | | Hydroxy-containing acrylic resin (C-2) | 15 | 10 | 15 | 15 | 15 | 15 | 15 | 15 | 15 | 15 | 15 | 15 | 15 |
| Hydroxy-containing polyester resin (D) | | Hydroxy-containing polyester resin (D-2) | | | | | | | | | 10 | | | | |
| Aqueous polyurethane resin | | "U Coat UX-310" | 20 | 20 | 20 | 20 | 20 | 20 | 20 | 20 | 20 | 20 | 20 | 20 | 20 |
| Blocked polyisocyanate (B) | | Kind | B-1 | B-1 | B-2 | B-3 | B-4 | B-5 | B-6 | B-7 | B-1 | | B-8 | B-9 | B-10 |
| | | Amount | 5 | 40 | 10 | 10 | 10 | 10 | 10 | 10 | 10 | | 10 | 10 | 10 |
| Curing agent (E) | | "Cymel 325" (melamine resin) | 30 | | 25 | 25 | 25 | 25 | 25 | 25 | 25 | 35 | 25 | 25 | 25 |
| | | "Carbodilite V-02" (carbodiimide) (Note 1) | | | | | | | | | | | | | |

Note 1

Carbodilite V-02 (produced by Nisshinbo Industries, Inc.; water-soluble polycarbodiimide compound, solids content: 40%).

Preparation of test plate

Test plates were prepared using the aqueous first colored coating compositions (X-1) to (X-30) obtained in Production Examples 28 to 57, and evaluated.

Preparation of test substrate

"Electron GT-10" (trade name, produced by Kansai Paint Co., Ltd.; cationic electrodeposition coating composition) was applied by electrodeposition to zinc phosphate-treated cold-rolled steel plates (length: 300 mm, width: 450 mm, thickness; 0.8 mm) to a film thickness of 20 μm when cured, and cured by heating at 170°C for 30 minutes.

Example 1

The aqueous first colored coating composition (X-1) obtained in Production Example 28 was electrostatically applied to the test substrate to a film thickness of 20 μm when cured using a rotary atomizing electrostatic coating machine to form a first colored coating film. The film was allowed to stand for 6 minutes, and then "WBC-713" silver metallic base (produced by Kansai Paint Co., Ltd.; trade name, acryl melamine resin-based aqueous silver-metallic color base coating composition, hereinbelow sometimes referred to as "aqueous second colored coating composition (Y-1)") was electrostatically applied to the uncured first colored coating film to a film thickness of 15 μm when cured using a rotary atomizing electrostatic coating machine to form a second colored coating film. The film was allowed to stand for 3 minutes, and then preheated at 80°C for 5 minutes. Subsequently, "Magicron KINO-1210" (trade name, produced by Kansai Paint Co., Ltd.; acid epoxy crosslinking organic solvent-based top clear coating composition, hereinafter sometimes referred to as "clear coating composition (Z-1)") was electrostatically applied to the uncured base coating film to a film thickness of 35 μm when cured to form a clear coating film. The film was allowed to stand for 7 minutes, and heated at 140°C for 30 minutes to simultaneously cure the first colored coating film, second colored coating film, and clear coating film, thereby preparing a test plate.

Examples 2 to 25 and Comparative Examples 1 to 5

Test plates were prepared in the same manner as in Example 1, except that any one of the aqueous first colored coating compositions (X-2) to (X-30) shown in Table 3 below were used in place of the aqueous first colored coating composition (X-1).

Evaluation test

The test plates obtained in Examples 1 to 25 and Comparative Examples 1 to 5 were evaluated according to the test methods shown below. Table 3 shows the evaluation results.

Test methods

Smoothness: The test plates were evaluated based on Wc value measured using a "Wave Scan DOI" (trade name, produced by BYK Gardner Co.). A smaller Wc value indicates a higher smoothness of the coated surface. The smaller the Wc value, the better the smoothness; however, the Wc value must at least satisfy the condition of less than 20.

Distinctness of image: The test plates were evaluated based on Wa value measured using a "Wave Scan DOI" (trade name, produced by BYK Gardner Co.). A smaller Wa value indicates a higher distinctness of image of the coated surface. The smaller the Wa value, the better the distinctness of image; however, the Wa value must at least satisfy the condition of less than 20.

Popping resistance: The test plates were observed with the naked eye to count the number of instances of popping generated on the test plates (length 300 mm x width 450 mm). The smaller the number of instances of popping, the better the popping resistance. Test plates were rejected when even one instance of popping was found.

Anti-water adhesion: The test plates were immersed in warm water at 40°C for 240 hours. After being removed from the water, the test plates were dried at 20°C for 12 hours. Then, cross-cuts reaching the substrate were made in the multilayer coating film of the test plates using a cutter knife to form a grid of 100 squares (2 mm x 2 mm) . Subsequently, adhesive cellophane tape was applied to the surface of the grid portion, and the tape was peeled off rapidly at 20°C. Then, the number of squares of the coating film remaining and the condition were checked.

S: 100 squares of the coating film remained, and no small edge-chipping of the coating film occurred at the edge of the cut made by the cutter knife.

A: 100 squares of the coating film remained, but small edge-chipping of the coating film occurred at the edge of the cut made by the cutter knife.

B: The number of squares of the coating film remaining was 99 or less.

Anti-water adhesion after storage: The aqueous first colored coating composition (X) was stored at 40°C for one month. Using the aqueous coating composition, test plates were prepared by forming multilayer coating films. Each test plate was immersed in warm water at 40°C for 240 hours. After being removed from the water, the test plates were dried at 20°C for 12 hours. Then, cross-cuts reaching the substrate were made in the multilayer coating films of the test plates using a cutter knife to form a grid of 100 squares (2 mm x 2 mm). Subsequently, adhesive cellophane tape was applied to the surface of the grid portion, and the tape was peeled off rapidly at 20°C. Then, the number of squares of the coating film remaining and the condition were checked.

S: 100 squares of the coating film remained, and no small edge-chipping of the coating film occurred at the edge of the cut made by the cutter knife.

A: 100 squares of the coating film remained, but small edge-chipping of the coating film occurred at the edge of the cut made by the cutter knife.

B : The number of squares of the coating film remaining was 99 or less.

In the coating field that the present invention belongs, it is important that all of the properties of smoothness, distinctness of image, popping resistance, anti-water adhesion, and anti-water adhesion after storage are excellent.

Table 3

| | | Aqueous first colored coating composition (X) | Aqueous second colored coating composition (Y) | Clear coating composition (Z) | Evaluation of coating film | | | | |
|---|---|---|---|---|---|---|---|---|---|
| | | | | | Smoothness | Distinctness of image | Popping resistance | Anti-water adhesion | Anti-water adhesion after storage |
| Example | 1 | X-1 | Y-1 | Z-1 | 12 | 8 | 0 | S | S |
| | 2 | X-2 | Y-1 | Z-1 | 11 | 5 | 0 | S | S |
| | 3 | X-3 | Y-1 | Z-1 | 13 | 18 | 0 | S | S |
| | 4 | X-4 | Y-1 | Z-1 | 12 | 13 | 0 | S | S |
| | 5 | X-5 | Y-1 | Z-1 | 17 | 13 | 0 | S | S |
| | 6 | X-6 | Y-1 | Z-1 | 18 | 12 | 0 | S | S |
| | 7 | X | Y-1 | Z-1 | 15 | 11 | 0 | S | S |
| | 8 | X-8 | Y-1 | Z-1 | 15 | 17 | 0 | S | S |
| | 9 | X-9 | Y-1 | Z-1 | 11 | 18 | 0 | S | S |
| | 10 | X-10 | Y-1 | Z-1 | 10 | 13 | 0 | S | S |
| | 11 | X-11 | Y-1 | Z-1 | 14 | 10 | 0 | S | S |
| | 12 | X-12 | Y-1 | Z-1 | 18 | 12 | 0 | S | S |
| | 13 | X-13 | Y-1 | Z-1 | 12 | 16 | 0 | S | S |
| | 14 | X-14 | Y-1 | Z-1 | 12 | 14 | 0 | S | S |
| | 15 | X-15 | Y-1 | Z-1 | 15 | 17 | 0 | S | A |
| | 16 | X-16 | Y-1 | Z-1 | 15 | 13 | 0 | S | S |
| | 17 | X-17 | Y-1 | Z-1 | 18 | 9 | 0 | S | S |
| | 18 | X-18 | Y-1 | Z-1 | 13 | 16 | 0 | S | S |
| | 19 | X-19 | Y-1 | Z-1 | 14 | 10 | 0 | S | S |
| | 20 | X-20 | Y-1 | Z-1 | 12 | 9 | 0 | S | S |
| | 21 | X-21 | Y-1 | Z-1 | 14 | 15 | 0 | S | S |
| | 22 | X-22 | Y-1 | Z-1 | 12 | 12 | 0 | S | A |
| | 23 | X-23 | Y-1 | Z-1 | 12 | 15 | 0 | S | A |

(continued)

| | | Aqueous first colored coating composition (X) | Aqueous second colored coating composition (Y) | Clear coating composition (Z) | Evaluation of coating film | | | | |
|---|---|---|---|---|---|---|---|---|---|
| | | | | | Smoothness | Distinctness of image | Popping resistance | Anti-water adhesion | Anti-water adhesion after storage |
| | 24 | X-24 | Y-1 | Z-1 | 12 | 10 | 0 | S | S |
| | 25 | X-25 | Y-1 | Z-1 | 13 | 15 | 0 | S | S |
| Canparative Example | 1 | X-26 | Y-1 | Z-1 | 18 | 27 | 22 | S | S |
| | 2 | X-27 | Y-1 | Z-1 | 14 | 24 | 2 | S | S |
| | 3 | X-28 | Y-1 | Z-1 | 12 | 22 | 0 | S | B |
| | 4 | X-29 | Y-1 | Z-1 | 13 | 24 | 0 | S | B |
| | 5 | X-30 | Y-1 | Z-1 | 12 | 22 | 0 | S | B |

## Claims

1. A method for forming a multilayer coating film comprising the following steps in this order:

(1) applying an aqueous first colored coating composition (X) to a substrate to form a first colored coating film thereon;
(2) applying an aqueous second colored coating composition (Y) to the uncured first colored coating film formed in step (1) to form a second colored coating film thereon;
(3) applying a clear coating composition (Z) to the uncured second colored coating film formed in step (2) to form a clear coating film thereon; and
(4) heating to simultaneously cure the uncured first colored coating film, uncured second colored coating film, and uncured clear coating film formed in steps (1) to (3),
the aqueous first colored coating composition (X) comprising an acrylic modified polyester resin (A) and a blocked polyisocyanate compound (B) having at least one blocked isocyanate group selected from the group consisting of:

a blocked isocyanate group represented by formula (I)

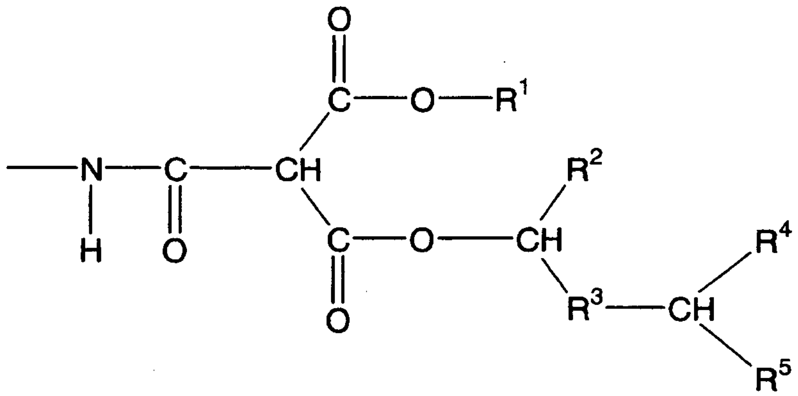

(I)

(wherein $R^1$, $R^2$, $R^4$, and $R^5$ independently represent a $C_{1-12}$ hydrocarbon group, and $R^3$ represents a $C_{1-12}$ linear or branched alkylene group);
a blocked isocyanate group represented by formula (II)

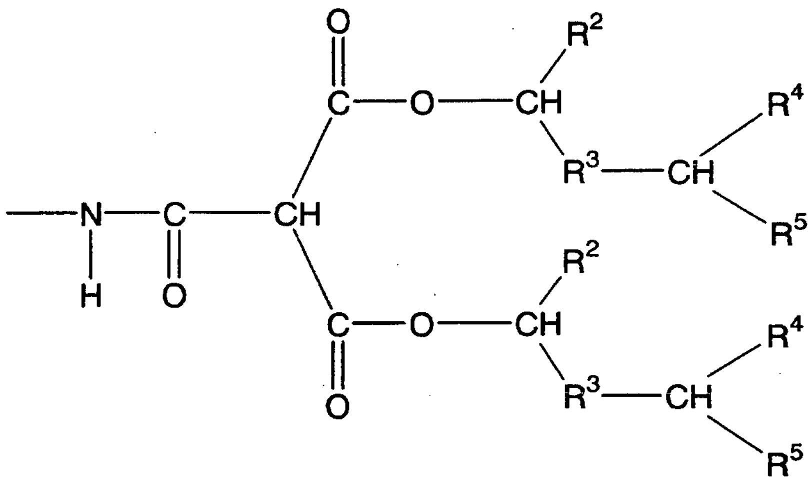

(II)

(wherein $R^2$, $R^3$, $R^4$, and $R^5$ are the same as above) ; and
a blocked isocyanate group represented by formula (III)

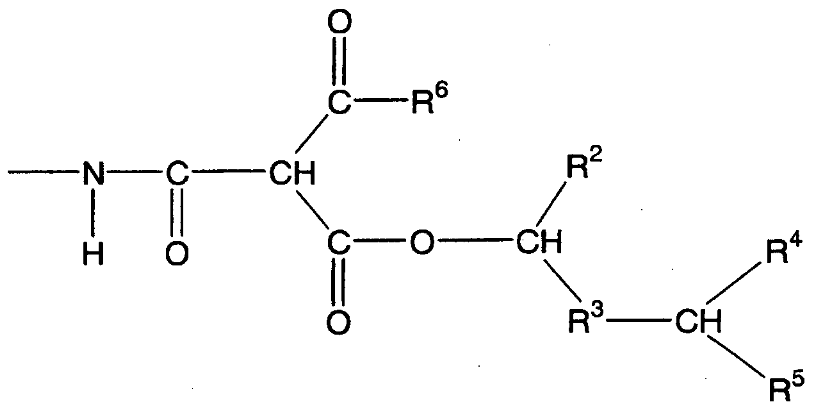

(III)

(wherein $R^2$, $R^3$, $R^4$, and $R^5$ are the same as above, and $R^6$ represents a $C_{1-12}$ hydrocarbon group).

2. The method for forming a multilayer coating film according to claim 1, wherein $R^1$ in formula (I) is an isopropyl group.

3. The method for forming a multilayer coating film according to claim 1, wherein $R^6$ in formula (III) is an isopropyl group.

4. The method for forming a multilayer coating film according to claim 1, wherein the blocked polyisocyanate compound (B) is obtained by reacting a blocked polyisocyanate compound (b3-1) having a blocked isocyanate group represented by formula (IV)

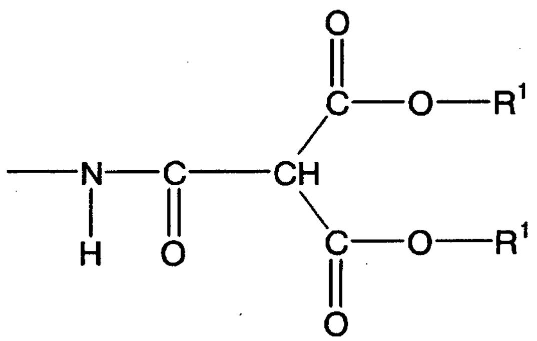

(IV)

(wherein $R^1$ is as defined above, and each $R^1$ may be the same or different) with a secondary alcohol (b4) represented by formula (VI)

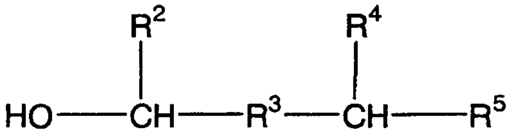

(VI)

(wherein $R^2$, $R^3$, $R^4$, and $R^5$ are the same as above).

5. The method for forming a multilayer coating film according to claim 1, wherein the blocked polyisocyanate compound (B) is obtained by reacting a blocked polyisocyanate compound (b3-2) having a blocked isocyanate group represented by formula (V)

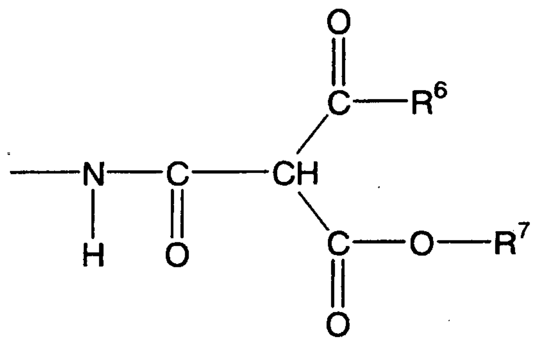

(V)

(wherein $R^6$ is the same as the above, and $R^7$ is a $C_{1-12}$ hydrocarbon group) with the secondary alcohol (b4).

6. The method for forming a multilayer coating film according to claim 1, wherein the blocked polyisocyanate compound (B) is a blocked polyisocyanate compound (B') having a hydrophilic group.

7. The method for forming a multilayer coating film according to claim 1, wherein the aqueous first colored coating composition (X) further includes a hydroxy-containing acrylic resin (C).

8. The method for forming a multilayer coating film according to any one of claims 1 to 7, wherein the proportions of the acrylic modified polyester resin (A), blocked polyisocyanate compound (B), and hydroxy-containing acrylic resin (C) are 10 to 60 parts by mass of the acrylic modified polyester resin (A), 5 to 40 parts by mass of the blocked polyisocyanate compound (B), and 0 to 50 parts by mass of the hydroxy-containing acrylic resin (C) based on 100 parts by mass of the total resin solids of the aqueous first colored coating composition (X).

9. An article comprising a multilayer coating film formed by the method according to any one of claims 1 to 8.

**Patentansprüche**

1. Verfahren zur Bildung eines Mehrschichtbeschichtungsfilms, umfassend die folgenden Schritte in dieser Reihenfolge:

(1) Aufbringen einer wässrigen ersten gefärbten Beschichtungszusammensetzung (X) auf ein Substrat, um einen ersten gefärbten Beschichtungsfilm darauf zu bilden;
(2) Aufbringen einer wässrigen zweiten gefärbten Beschichtungszusammensetzung (Y) auf dem ungehärteten ersten gefärbten Beschichtungsfilm, gebildet in Schritt (1), um einen zweiten gefärbten Beschichtungsfilm darauf zu bilden;
(3) Aufbringen einer klaren Beschichtungszusammensetzung (Z) auf dem ungehärteten zweiten gefärbten Beschichtungsfilm, gebildet in Schritt (2), um einen klaren Beschichtungsfilm darauf zu bilden; und
(4) Erwärmen, um gleichzeitig den ungehärteten ersten gefärbten Beschichtungsfilm, den ungehärteten zweiten gefärbten Beschichtungsfilm und den ungehärteten klaren Beschichtungsfilm, gebildet in den Schritten (1) bis (3), zu härten,
wobei die wässrige erste gefärbte Beschichtungszusammensetzung (X) ein Acryl-modifiziertes Polyesterharz (A) und eine blockierte Polyisocyanatverbindung (B) mit mindestens einer blockierten Isocyanatgruppe, ausgewählt aus der Gruppe, bestehend aus:

einer blockierten Isocyanatgruppe, dargestellt durch Formel (I)

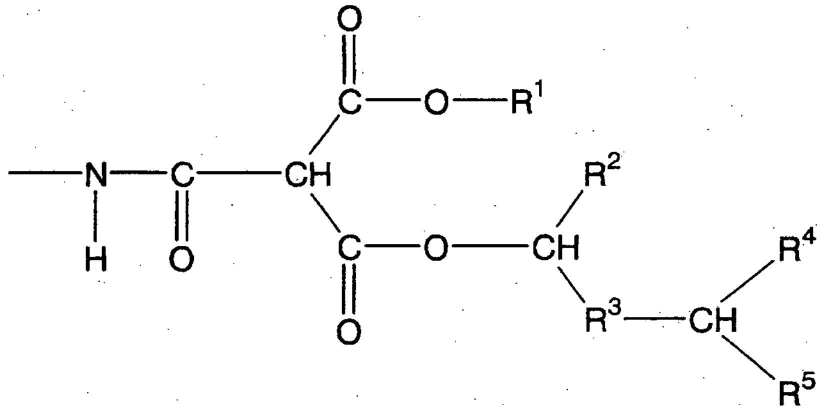

(I)

(wobei $R^1$, $R^2$, $R^4$ und $R^5$ unabhängig eine $C_{1-12}$ Kohlenwasserstoffgruppe darstellen und $R^3$ eine lineare oder verzweigte $C_{1-12}$-Alkengruppe darstellt);
einer blockierten Isocyanatgruppe, dargestellt durch Formel (II)

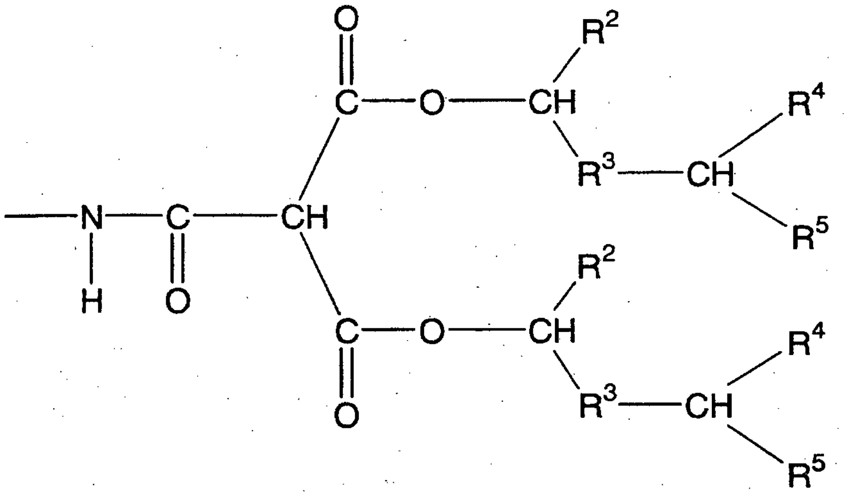

(II)

(wobei $R^2$, $R^3$, $R^4$ und $R^5$ dieselben wie oben sind); und
einer blockierten Isocyanatgruppe, dargestellt durch Formel (III)

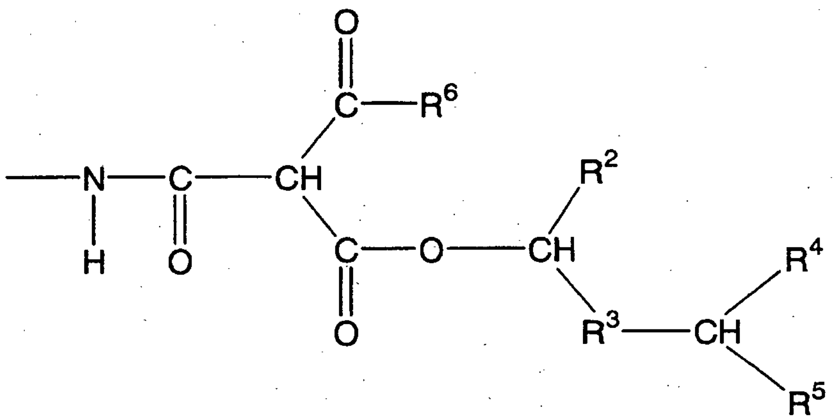

(III)

(wobei $R^2$, $R^3$, $R^4$ und $R^5$ dieselben wie oben sind und $R^6$ eine $C_{1-12}$ Kohlenwasserstoffgruppe darstellt), umfasst.

2. Verfahren zur Bildung eines Mehrschichtbeschichtungsfilms nach Anspruch 1, wobei $R^1$ in Formel (I) eine Isopropylgruppe ist.

3. Verfahren zur Bildung eines Mehrschichtbeschichtungsfilms nach Anspruch 1, wobei $R^6$ in Formel (III) eine Isopropylgruppe ist.

4. Verfahren zur Bildung eines Mehrschichtbeschichtungsfilms nach Anspruch 1, wobei die blockierte Polyisocyanatverbindung (B) durch Umsetzen einer blockierten Polyisocyanatverbindung (b3-1), die eine blockierte Isocyanatgruppe, dargestellt durch Formel (IV)

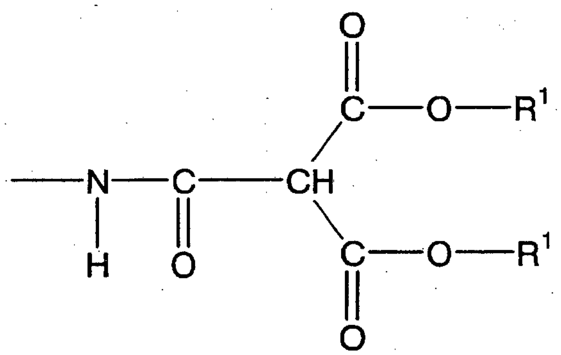

(IV)

(wobei $R^1$ wie oben definiert ist und jedes $R^1$ dasselbe oder unterschiedlich sein kann), aufweist, mit einem sekundären Alkohol (b4), dargestellt durch Formel (VI)

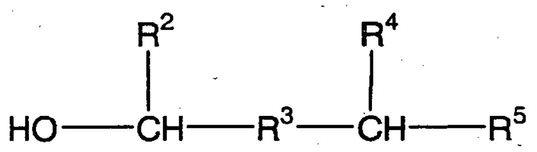

(VI)

(wobei $R^2$, $R^3$, $R^4$ und $R^5$ dieselben wie oben sind), erhalten wird.

5. Verfahren zur Bildung eines Mehrschichtbeschichtungsfilms nach Anspruch 1, wobei die blockierte Polyisocyanatverbindung (B) durch Umsetzen einer blockierten Polyisocyanatverbindung (b3-2), die eine blockierte Isocyanatgruppe, dargestellt durch Formel (V)

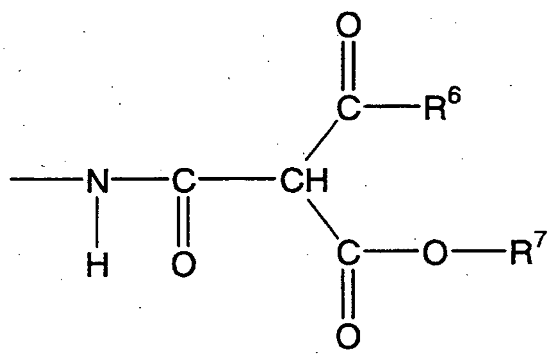

(V)

(wobei $R^6$ dasselbe wie oben ist und $R^7$ eine $C_{1-12}$ Kohlenwasserstoffgruppe ist), aufweiset, mit dem sekundären Alkohol (b4) erhalten wird.

6. Verfahren zur Bildung eines Mehrschichtbeschichtungsfilms nach Anspruch 1, wobei die blockierte Polyisocyanatverbindung (B) eine blockierte Polyisocyanatverbindung (B') mit einer hydrophilen Gruppe ist.

7. Verfahren zur Bildung eines Mehrschichtbeschichtungsfilms nach Anspruch 1, wobei die wässrige erste gefärbte Beschichtungszusammensetzung (X) weiter ein Hydroxy-enthaltendes Acrylharz (C) enthält.

8. Verfahren zur Bildung eines Mehrschichtbeschichtungsfilms nach einem der Ansprüche 1 bis 7, wobei die Anteile des Acryl-modifizierten Polyesterharzes (A), der blockierten Polyisocyanatverbindung (B) und des Hydroxy-enthaltenden Acrylharzes (C) 10 bis 60 Massenteile des Acryl-modifizierten Polyesterharzes (A), 5 bis 40 Massenteile der blockierten Polyisocyanatverbindung (B) und 0 bis 50 Massenteile des Hydroxy-enthaltenden Acrylharzes (C), ausgehend von 100 Massenteilen des gesamten Harzfeststoffes der wässrigen ersten gefärbten Beschichtungszusammensetzung (X), betragen.

9. Gegenstand, umfassend einen Mehrschichtbeschichtungsfilm, gebildet durch das Verfahren nach einem der Ansprüche 1 bis 8.

## Revendications

1. Méthode de formation d'un film de revêtement multicouche, comprenant les étapes suivantes, dans cet ordre :

(1) application d'une première composition de revêtement colorée aqueuse (X) sur un substrat pour former sur celui-ci un premier film de revêtement coloré ;
(2) application d'une deuxième composition de revêtement colorée aqueuse (Y) sur le premier film de revêtement coloré non durci formé dans l'étape (1), pour former un deuxième film de revêtement coloré sur celui-ci ;
(3) application d'une composition de revêtement transparente (Z) sur le deuxième film de revêtement coloré non durci formé dans l'étape (2) pour former un film de revêtement transparent sur celui-ci ; et
(4) chauffage pour durcir simultanément le premier film de revêtement coloré non durci, le deuxième film de revêtement coloré non durci et le film de revêtement transparent non durci formés dans les étapes (1) à (3),
la première composition de revêtement colorée aqueuse (X) comprenant une résine polyester acrylique modifié (A) et un composé polyisocyanate bloqué (B) ayant au moins un groupe isocyanate bloqué choisi dans le groupe consistant en :

un groupe isocyanate bloqué représenté par la formule (I)

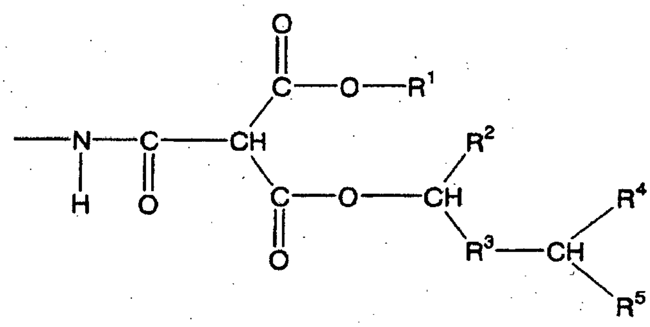

(I)

(dans laquelle $R^1$, $R^2$, $R^4$ et $R^5$ représentent indépendamment un groupe $C_{1-12}$ hydrocarboné, et $R^3$ représente un groupe $C_{1-12}$ alkylène linéaire ou ramifié) ;
un groupe isocyanate bloqué représenté par la formule (II)

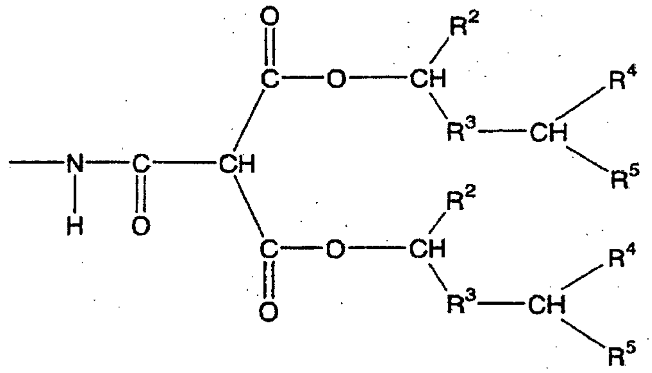

(II)

(dans laquelle $R^2$, $R^3$, $R^4$ et $R^5$ sont les mêmes que ci-dessus) ; et un groupe isocyanate bloqué représenté par la formule (III)

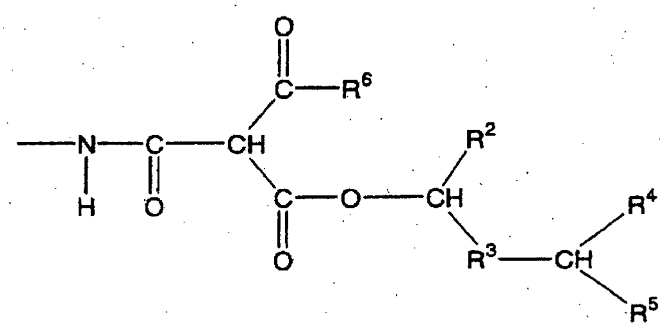

(III)

(dans laquelle $R^2$, $R^3$, $R^4$ et $R^5$ sont les mêmes que ci-dessus, et $R^6$ représente un groupe $C_{1-12}$ hydrocarboné).

2. Méthode de formation d'un film de revêtement multicouche selon la revendication 1, dans laquelle $R^1$ dans la formule (I) est un groupe isopropyle.

3. Méthode de formation d'un film de revêtement multicouche selon la revendication 1, dans laquelle $R^6$ dans la formule (III) est un groupe isopropyle.

4. Méthode de formation d'un film de revêtement multicouche selon la revendication 1, dans laquelle le composé polyisocyanate bloqué (B) est obtenu par réaction d'un composé polyisocyanate bloqué (b3-1) ayant un groupe isocyanate bloqué représenté par la formule (IV)

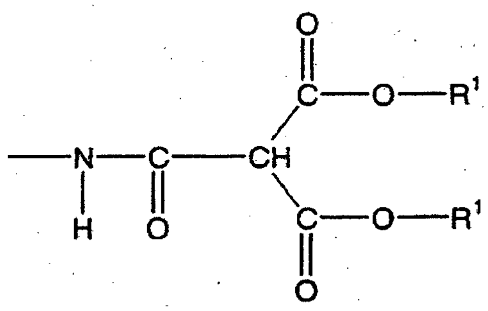

(IV)

(dans laquelle $R^1$ est tel que défini ci-dessus, et chaque $R^1$ peut être identique ou différent), avec un alcool secondaire (b4) représenté par la formule (VI)

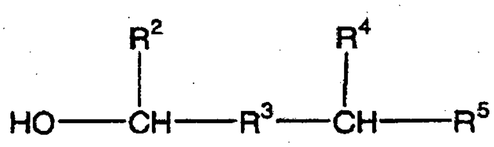

(VI)

(dans laquelle $R^2$, $R^3$, $R^4$ et $R^5$ sont les mêmes que ci-dessus).

5. Méthode de formation d'un film de revêtement multicouche selon la revendication 1, dans laquelle le composé polyisocyanate bloqué (B) est obtenu par réaction d'un composé polyisocyanate bloqué (b3-2) ayant un groupe isocyanate bloqué représenté par la formule (V)

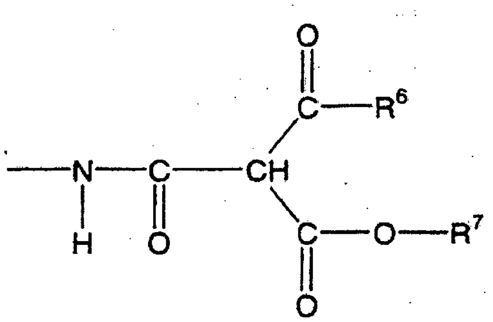

(V)

(dans laquelle $R^6$ est le même que ci-dessus, et $R^7$ est un groupe $C_{1-12}$ hydrocarboné) avec l'alcool secondaire (b4).

6. Méthode de formation d'un film de revêtement multicouche selon la revendication 1, dans laquelle le composé polyisocyanate bloqué (B) est un composé polyisocyanate bloqué (B') ayant un groupe hydrophile.

7. Méthode de formation d'un film de revêtement multicouche selon la revendication 1, dans laquelle la première composition de revêtement colorée aqueuse (X) comprend en outre une résine acrylique hydroxylée (C).

8. Méthode de formation d'un film de revêtement multicouche selon l'une quelconque des revendications 1 à 7, dans laquelle les proportions de la résine polyester acrylique modifié (A), du composé polyisocyanate bloqué (B) et de la résine acrylique hydroxylée (C) sont de 10 à 60 parties en masse de la résine polyester acrylique modifié (A), de 5 à 40 parties en masse du composé polyisocyanate bloqué (B), et 0 à 50 parties en masse de la résine acrylique hydroxylée (C) sur la base de 100 parties en masse de l'extrait sec total de résine de la première composition de revêtement colorée aqueuse (X).

9. Article comprenant un film de revêtement multicouche formé par la méthode selon l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012219561 A
- JP 2002153806 A
- WO 2010047352 A